# EUROPEAN PATENT APPLICATION

(11) **EP 4 712 375 A1**
(43) Date of publication of application: **18.03.2026**
(21) Application number: 24838556.9
(22) Date of filing: 20.06.2024
(51) Int. Cl.: H04L 1/00

(54) **MODULATION AND CODING SCHEME INDICATION METHOD AND CORRESPONDING APPARATUS**

(30) Priority: 07.07.2023 CN 202310838489
(71) Applicant: Huawei Technologies Co., Ltd., Shenzhen, Guangdong 518129 (CN)
(72) Inventor: YU, Jian, Shenzhen, Guangdong 518129 (CN); GONG, Bo, Shenzhen, Guangdong 518129 (CN); HU, Mengshi, Shenzhen, Guangdong 518129 (CN); GAN, Ming, Shenzhen, Guangdong 518129 (CN)
(74) Representative: Pfenning, Meinig & Partner mbB
(86) International application number: PCT/CN2024/100489
(87) International publication number: WO 2025/011298

(57) **Abstract**

Embodiments of this application disclose a modulation and coding scheme indication method and a corresponding apparatus. This application is applied to a wireless local area network system that supports one or more of a next-generation Wi-Fi protocol of IEEE 802.11ax (for example, 802.11be, Wi-Fi 7, or EHT), a next-generation Wi-Fi protocol of IEEE 802.11be (for example, 802.11bn, Wi-Fi 8, or UHR), Wi-Fi AI, a millimeter wave (mmWave), an ultra wideband (UWB), and sensing (sensing). The method includes: generating a physical layer protocol data unit PPDU, where the PPDU includes a first field and a second field, the first field indicates a first modulation and coding scheme MCS group, and the second field indicates a number of spatial streams corresponding to one or more MCSs in the first MCS group; and sending the PPDU. This can reduce bit overheads.

## Description

This application claims priority to Chinese Patent Application No. 202310838489.9, filed with the China National Intellectual Property Administration on July 7, 2023 and entitled "MODULATION AND CODING SCHEME INDICATION METHOD AND CORRESPONDING APPARATUS", which is incorporated herein by reference in its entirety.

### TECHNICAL FIELD

This application relates to the communication field, and in particular, to a modulation and coding scheme indication method and a corresponding apparatus.

### BACKGROUND

A wireless local area network (wireless local area network, WLAN) starts from the 802.11a/b/g standard, and evolves from the 802.11n standard, the 802.11ac standard, the 802.11ax standard, to the 802.11be standard that is still under discussion. In the 802.11a/b/g standard, only a single spatial stream is supported, and multiple-input multiple-output (multiple-input multiple-output, MIMO) transmission is not supported. In the 802.11n standard, MIMO of a maximum of four space-time streams is supported. Each space-time stream may use a different modulation and coding scheme (modulation and coding scheme, MCS), to adapt to signal-to-noise ratios (signal-to-noise ratio, SNR) of different space-time streams. This manner is referred to as unequalized (unequal) modulation (unequal modulation, UEQM). The space-time streams (space-time streams) consider both different spatial streams (spatial stream) and space-time block coding (space-time block coding, STBC) in a time dimension. When a transmitter does not use the STBC, the space-time stream may also be referred to as the spatial stream.

Nowadays, more and more terminals use two antennas or even four antennas. An access point (access point, AP) and a non-AP station (non-AP STA) may use more antennas to perform MIMO communication with a larger number of spatial streams, and the unequal modulation becomes more important. Compared with the 802.11n standard, a current standard considers more spatial streams and more modulation and coding schemes.

A manner used in the 802.11n standard to indicate both a spatial stream and an MCS corresponding to the spatial stream is applicable to a case in which there are a small number of spatial streams and a small number of MCS types. When a maximum number of spatial streams may be eight or more, and a maximum modulation scheme may be 4096 QAM or more, signaling overheads in this manner increase exponentially. Therefore, how to indicate, by using a small number of bits (overheads), MCS corresponding to spatial streams needs to be studied.

### SUMMARY

Embodiments of this application disclose a modulation and coding scheme indication method and a corresponding apparatus, to implement, by using a small number of bits (overheads), different MCSs used by a plurality of spatial streams.

According to a first aspect, an embodiment of this application provides a modulation and coding scheme indication method. The method includes: generating a physical layer protocol data unit (physical layer protocol data unit, PPDU), the PPDU includes a first field and a second field, the first field indicates a first modulation and coding scheme (modulation and coding scheme, MCS) group, and the second field indicates a number of spatial streams corresponding to one or more MCSs in the first MCS group; and sending the PPDU.

In this embodiment of this application, the PPDU includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

According to a second aspect, an embodiment of this application provides another modulation and coding scheme indication method. The method includes: receiving a PPDU, where the PPDU includes a first field and a second field, the first field indicates a first MCS group, and the second field indicates a number of spatial streams corresponding to one or more MCSs in the first MCS group; and obtaining, based on the PPDU, an MCS corresponding to each spatial stream. For example, the MCS corresponding to each spatial stream that carries the PPDU is obtained based on the PPDU.

In this embodiment of this application, the PPDU includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

In a possible implementation of the first aspect or the second aspect, the second field indicates a spatial stream boundary corresponding to any MCS in the first MCS group.

In this implementation, the second field indicates the spatial stream boundary corresponding to the any MCS in the first MCS group. Therefore, a number of spatial streams corresponding to the any MCS in the first MCS group may be indicated by using a small number of bits.

In a possible implementation of the first aspect or the second aspect, the second field further indicates a total number of spatial streams corresponding to the first MCS group.

In this implementation, the second field further indicates the total number of spatial streams corresponding to the first MCS group, and the total number of spatial streams corresponding to the first MCS group does not need to be indicated by using another field. This can reduce bit overheads.

In a possible implementation of the first aspect or the second aspect, a number of spatial streams that correspond to a same MCS and that are indicated by the second field is less than or equal to a first threshold, and the first threshold is a positive integer less than 8.

If the number of spatial streams corresponding to the same MCS exceeds the first threshold, EQM may be used, or two MCSs may be used for replacement. Therefore, the number of spatial streams corresponding to the same MCS needs to be limited to being less than or equal to the first threshold.

In a possible implementation of the first aspect or the second aspect, when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

When the second field indicates the number of spatial streams corresponding to the one MCS in the first MCS group, each spatial stream indicated by the second field uses the MCS. In other words, when the second field indicates the number of spatial streams corresponding to the one MCS in the first MCS group, the second field further implicitly indicates equal modulation (equal modulation, EQM). When the second field indicates the number of spatial streams corresponding to the plurality of MCSs in the first MCS group, at least two spatial streams indicated by the second field use different MCSs. In other words, when the second field indicates the number of spatial streams corresponding to the plurality of MCSs in the first MCS group, the second field further implicitly indicates unequal modulation (unequal modulation, UEQM). The unequal modulation may be referred to as unequalized modulation. It may be understood that the second field may implicitly indicate the EQM, or may implicitly indicate the UEQM, and the PPDU does not need to carry a field indicating whether a user uses the EQM or the UEQM. This can reduce overheads.

In a possible implementation of the first aspect or the second aspect, the PPDU further includes a third field, and the third field indicates that a modulation pattern of the PPDU is the unequal modulation or the equal modulation.

In this implementation, the PPDU further includes the third field indicating the unequal modulation or the equal modulation, so that a receiver parses the PPDU in the corresponding manner based on the third field.

In a possible implementation of the first aspect or the second aspect, the PPDU includes a first user field and a second user field, the first user field is associated with a first user, the second user field is associated with a second user, the first user field includes the first field and the second field, the second user field includes a fourth field and a fifth field, the fourth field indicates a number of spatial streams of the second user, the fifth field indicates a same MCS used by all spatial streams of the second user, and a length of the first user field is equal to a length of the second user field.

In this implementation, the PPDU includes the first user field and the second user field, and the length of the first user field is equal to the length of Receiver the second user field. An operation of parsing a plurality of user fields with an equal length by the receiver is simpler than an operation of parsing a plurality of user fields with unequal lengths by the receiver. This can improve efficiency of parsing the user field.

According to a third aspect, an embodiment of this application provides another modulation and coding scheme indication method. The method includes: generating a PPDU, where the PPDU includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user; and sending the PPDU.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

According to a fourth aspect, an embodiment of this application provides another modulation and coding scheme indication method. The method includes: receiving a PPDU, where the PPDU includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user; and obtaining, based on the PPDU, the MCS used by the spatial stream of the third user.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

In a possible implementation of the third aspect or the fourth aspect, a difference between a highest MCS index and a lowest MCS index that are used by the spatial stream and that are indicated by the seventh field is less than or equal to a second threshold, and the second threshold is a positive integer less than 10.

When the difference between the highest MCS index and the lowest MCS index that are used by the spatial stream and that are indicated by the seventh field is less than or equal to the second threshold, a throughput gain brought by a lowest MCS is not obvious. The difference between the highest MCS index and the lowest MCS index that are used by the spatial stream and that are indicated by the seventh field is limited to be less than or equal to the second threshold, so that implementation complexity of a receiver can be reduced.

In a possible implementation of the third aspect or the fourth aspect, the MCS that is used by the spatial stream and that is indicated by the seventh field is an MCS supported by an equal modulation scheme.

In this implementation, the MCS that is used by the spatial stream and that is indicated by the seventh field is a supported MCS under the equal modulation scheme, so that implementation complexity of a transmitter and the receiver can be reduced.

In a possible implementation of the third aspect or the fourth aspect, at least two spatial streams indicated by the seventh field indicates use different MCSs.

In this implementation, MCSs used by different spatial streams may be indicated by using a small number of bits.

In a possible implementation of the third aspect or the fourth aspect, when a value indicated by the seventh field is a third index, the seventh field indicates the same MCS used by all the spatial streams of the third user; or when a value indicated by the seventh field is a fourth index, the at least two spatial streams indicated by the seventh field use different MCSs.

In this implementation, the seventh field may indicate UEQM, or may indicate EQM. The PPDU does not need to carry a field indicating whether a user uses the EQM or the UEQM. This can reduce overheads.

In a possible implementation of the third aspect or the fourth aspect, the PPDU further includes an eighth field, and the eighth field indicates the unequal modulation or the equal modulation.

In this implementation, the PPDU further includes the eighth field indicating the unequal modulation or the equal modulation, so that the receiver parses the PPDU in the corresponding manner based on the eighth field.

In a possible implementation of the third aspect or the fourth aspect, the PPDU includes a third user field and a fourth user field, the third user field is associated with the third user, the fourth user field is associated with a fourth user, the seventh field included in the third user field indicates that the at least two spatial streams of the third user use different MCSs, a seventh field included in the fourth user field indicates that all spatial streams of the fourth user use a same MCS, and a length of the third user field is equal to a length of the fourth user field.

In this implementation, the PPDU includes the third user field and the fourth user field, and the length of the third user field is equal to the length of the fourth user field. An operation of parsing a plurality of user fields with an equal length by the receiver is simpler than an operation of parsing a plurality of user fields with unequal lengths by the receiver. This can improve efficiency of parsing the user field.

According to a fifth aspect, an embodiment of this application provides another modulation and coding scheme indication method. The method includes: generating a PPDU, where the PPDU includes a ninth field, and the ninth field indicates a number of spatial streams of a fifth user and an MCS used by each spatial stream of the fifth user; and sending the PPDU.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

According to a sixth aspect, an embodiment of this application provides another modulation and coding scheme indication method. The method includes: receiving a PPDU, where the PPDU includes a ninth field, and the ninth field indicates a number of spatial streams of a fifth user and an MCS used by each spatial stream of the fifth user; and obtaining, based on the PPDU, the MCS used by the spatial stream of the fifth user.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

In a possible implementation of the fifth aspect or the sixth aspect, when a value indicated by the ninth field is a fifth index, the ninth field indicates the number of spatial streams of the fifth user and a same MCS used by all the spatial streams of the fifth user; or when a value indicated by the ninth field is a sixth index, the ninth field indicates the number of spatial streams of the fifth user and the MCS used by each spatial stream of the fifth user, where MCSs used by at least two spatial streams indicated by the ninth field are different.

In this implementation, the ninth field may indicate UEQM, or may indicate EQM. The PPDU does not need to carry a field indicating whether a user uses the EQM or the UEQM. This can reduce overheads.

In a possible implementation of the fifth aspect or the sixth aspect, the PPDU includes a fifth user field and a sixth user field, the fifth user field is associated with the fifth user, the sixth user field is associated with a sixth user, the ninth field included in the fifth user field indicates the number of spatial streams of the fifth user and the same MCS used by all the spatial streams of the fifth user, a ninth field included in the sixth user field indicates a number of spatial streams of the sixth user and an MCS used by each spatial stream of the sixth user, MCSs used by at least two spatial streams indicated by the ninth field included in the sixth user field are different, and a length of the fifth user field is equal to a length of the sixth user field.

In this implementation, the PPDU includes the fifth user field and the sixth user field, and the length of the fifth user field is equal to the length of the sixth user field. An operation of parsing a plurality of user fields with an equal length by a receiver is simpler than an operation of parsing a plurality of user fields with unequal lengths by the receiver. This can improve efficiency of parsing the user field.

According to a seventh aspect, an embodiment of this application provides a communication apparatus. The communication apparatus has a function of implementing behavior in the method embodiment in the first aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a PPDU, where the PPDU includes a first field and a second field, the first field indicates a first MCS group, and the second field indicates a number of spatial streams corresponding to one or more MCSs in the first MCS group. The transceiver module is configured to send the PPDU.

In this embodiment of this application, the PPDU includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

For possible implementations of the communication apparatus in the seventh aspect, refer to the possible implementations of the first aspect.

For technical effects brought by the possible implementations of the seventh aspect, refer to the descriptions of the technical effects of the first aspect or the possible implementations of the first aspect.

According to an eighth aspect, an embodiment of this application provides a communication apparatus. The communication apparatus has a function of implementing behavior in the method embodiment in the second aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a PPDU, where the PPDU includes a first field and a second field, the first field indicates a first MCS group, and the second field indicates a number of spatial streams corresponding to one or more MCSs in the first MCS group. The processing module is configured to obtain, based on the PPDU, an MCS corresponding to each spatial stream.

In this embodiment of this application, the PPDU includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

For possible implementations of the communication apparatus in the eighth aspect, refer to the possible implementations of the second aspect.

For technical effects brought by the possible implementations of the eighth aspect, refer to the descriptions of the technical effects of the second aspect or the possible implementations of the second aspect.

According to a ninth aspect, an embodiment of this application provides a communication apparatus. The communication apparatus has a function of implementing behavior in the method embodiment in the third aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a PPDU, where the PPDU includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user. The transceiver module is configured to send the PPDU.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams.

For possible implementations of the communication apparatus in the ninth aspect, refer to the possible implementations of the third aspect.

For technical effects brought by the possible implementations of the ninth aspect, refer to the descriptions of the technical effects of the third aspect or the possible implementations of the third aspect.

According to a tenth aspect, an embodiment of this application provides a communication apparatus. The communication apparatus has a function of implementing behavior in the method embodiment in the fourth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a PPDU, where the PPDU includes a sixth field and a seventh field, the sixth field indicates a number of spatial streams of a third user, the seventh field indicates an MCS used by each spatial stream of the third user, and the MCS that is used by the spatial stream and that is indicated by the seventh field is related to the number of spatial streams of the third user. The processing module is configured to obtain, based on the PPDU, the MCS used by the spatial stream of the third user.

For possible implementations of the communication apparatus in the tenth aspect, refer to the possible implementations of the fourth aspect.

For technical effects brought by the possible implementations of the tenth aspect, refer to the descriptions of the technical effects of the fourth aspect or the possible implementations of the fourth aspect.

According to an eleventh aspect, an embodiment of this application provides a communication apparatus. The communication apparatus has a function of implementing behavior in the method embodiment in the fifth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a PPDU, where the PPDU includes a ninth field, and the ninth field indicates a number of spatial streams of a fifth user and an MCS used by each spatial stream of the fifth user. The transceiver module is configured to send the PPDU.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

For possible implementations of the communication apparatus in the eleventh aspect, refer to the possible implementations of the fifth aspect.

For technical effects brought by the possible implementations of the eleventh aspect, refer to the descriptions of the technical effects of the fifth aspect or the possible implementations of the fifth aspect.

According to a twelfth aspect, an embodiment of this application provides a communication apparatus. The communication apparatus has a function of implementing behavior in the method embodiment in the sixth aspect. The communication apparatus may be a communication device, may be a component (for example, a processor, a chip, or a chip system) of the communication device, or may be a logical module or software that can implement all or some functions of the communication device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a PPDU, where the PPDU includes a ninth field, and the ninth field indicates a number of spatial streams of a fifth user and an MCS used by each spatial stream of the fifth user. The processing module is configured to obtain, based on the PPDU, the MCS used by the spatial stream of the fifth user.

In this embodiment of this application, the ninth field indicates the number of spatial streams of the fifth user and the MCS used by each spatial stream of the fifth user, and no additional field needs to be used to indicate the number of spatial streams of the fifth user. This can reduce bit overheads.

For possible implementations of the communication apparatus in the twelfth aspect, refer to the possible implementations of the sixth aspect.

For technical effects brought by the possible implementations of the twelfth aspect, refer to the descriptions of the technical effects of the sixth aspect or the possible implementations of the sixth aspect.

According to a thirteenth aspect, an embodiment of this application provides another communication apparatus. The communication apparatus includes a processor, the processor is coupled to a memory, the memory stores computer program instructions, and the processor is configured to execute the computer program instructions, so that the communication apparatus performs the method according to any one of the first aspect to the sixth aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information according to instructions of the processor. When the information is output, the processor outputs the information to a transceiver, so that the transceiver transmits the information. After the information is output by the processor, other processing may need to be performed on the information, and then processed information reaches the transceiver. Similarly, when the processor receives input information, the transceiver receives the information, and inputs the information into the processor. Further, after the transceiver receives the information, other processing may need to be performed on the information, and then processed information is input into the processor.

An operation such as sending and/or receiving related to the processor may be generally understood as an instruction output based on the processor if there is no special description, or if the operation does not conflict with an actual function or internal logic of the operation in a related description.

In an implementation process, the processor may be a processor specially configured to perform these methods, or may be a processor, for example, a general-purpose processor, that executes computer instructions in the memory to perform these methods. For example, the processor may be further configured to execute a program stored in the memory. When the program is executed, the communication apparatus is enabled to perform the method shown in any one of the first aspect or the possible implementation of the first aspect.

In a possible implementation, the memory is located outside the communication apparatus. In a possible implementation, the memory is located in the communication apparatus.

In a possible implementation, the processor and the memory may be alternatively integrated into one component. In other words, the processor and the memory may be alternatively integrated together.

In a possible implementation, the communication apparatus further includes the transceiver. The transceiver is configured to: receive a signal, send a signal, or the like.

According to a fourteenth aspect, an embodiment of this application provides another communication apparatus. The communication apparatus includes a processing circuit and an interface circuit. The interface circuit is configured to obtain data or output data, and the processing circuit is configured to perform the method according to any one of the first aspect to the sixth aspect.

According to a fifteenth aspect, an embodiment of this application provides a computer-readable storage medium. The computer-readable storage medium stores a computer program, and the computer program includes program instructions. When the program instructions are executed, a computer is enabled to perform the method according to any one of the first aspect to the sixth aspect.

According to a sixteenth aspect, an embodiment of this application provides a computer program product. The computer program product includes a computer program, and the computer program includes program instructions. When the program instructions are executed, a computer is enabled to perform the method according to any one of the first aspect to the sixth aspect.

According to a seventeenth aspect, an embodiment of this application provides a communication system, including the communication apparatus according to any one of the seventh aspect or the possible implementations of the seventh aspect and the communication apparatus according to any one of the eighth aspect or the possible implementations of the eighth aspect.

According to an eighteenth aspect, an embodiment of this application provides a communication system, including the communication apparatus according to any one of the ninth aspect or the possible implementations of the ninth aspect and the communication apparatus according to any one of the tenth aspect or the possible implementations of the tenth aspect.

According to a nineteenth aspect, an embodiment of this application provides a communication system, including the communication apparatus according to any one of the eleventh aspect or the possible implementations of the eleventh aspect and the communication apparatus according to any one of the twelfth aspect or the possible implementations of the twelfth aspect.

According to a twentieth aspect, an embodiment of this application provides a chip, including a processor and a communication interface. The processor reads, through the communication interface, instructions stored in a memory, to perform the method shown in any one of the first aspect to the sixth aspect.

### BRIEF DESCRIPTION OF DRAWINGS

To describe technical solutions in embodiments of this application or in the background more clearly, the following briefly describes accompanying drawings for describing embodiments of this application or the background.
FIG. 1 is an example of a wireless communication system to which the technical solutions provided in this application are applicable;
FIG. 2 is an interaction flowchart of a modulation and coding scheme indication method according to an embodiment of this application;
FIG. 3 is an example of a format of a user field in a PPDU according to an embodiment of this application;
FIG. 4 is an example of a format of a first SIG field in a PPDU according to an embodiment of this application;
FIG. 5 is another example of a format of a first SIG field in a PPDU according to an embodiment of this application;
FIG. 6 is another example of a format of a first SIG field in a PPDU according to an embodiment of this application;
FIG. 7 is an example of a format of a PPDU according to an embodiment of this application;
FIG. 8 is an example of a format of another PPDU according to an embodiment of this application;
FIG. 9 is an example of a correspondence between an MCS and a spatial stream according to an embodiment of this application;
FIG. 10 is another example of a correspondence between an MCS and a spatial stream according to an embodiment of this application;
FIG. 11 is another example of a correspondence between an MCS and a spatial stream according to an embodiment of this application;
FIG. 12 is another example of a format of a first SIG field in a PPDU according to an embodiment of this application;
FIG. 13 is another example of a format of a first SIG field in a PPDU according to an embodiment of this application;
FIG. 14 is an interaction flowchart of another modulation and coding scheme indication method according to an embodiment of this application;
FIG. 15 is an example of a format of a user field in a PPDU according to an embodiment of this application;
FIG. 16 is another example of a format of a first SIG field in a PPDU according to an embodiment of this application;
FIG. 17 is another example of a format of a first SIG field in a PPDU according to an embodiment of this application;
FIG. 18 is another example of a format of a first SIG field in a PPDU according to an embodiment of this application;
FIG. 19 is another example of a format of a first SIG field in a PPDU according to an embodiment of this application;
FIG. 20 is an example of a format of a user field in a PPDU according to an embodiment of this application;
FIG. 21 is a diagram of a structure of a communication apparatus 2100 according to an embodiment of this application;
FIG. 22 is a diagram of a structure of another communication apparatus 220 according to an embodiment of this application; and
FIG. 23 is a diagram of a structure of another communication apparatus 230 according to an embodiment of this application.

### DESCRIPTION OF EMBODIMENTS

In the specification, claims, and accompanying drawings of this application, terms "first", "second", and the like are merely intended to distinguish between different objects but do not indicate a particular order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described in this specification may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should further be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

It may be understood that in embodiments of this application, "B corresponding to A" indicates that there is a correspondence between A and B, and B may be determined based on A. However, it should further be understood that determining (or generating) B based on (or according to) A does not mean that B is determined (or generated) only based on (or according to) A, and B may be determined (or generated) based on (or according to) A and/or other information.

As described in the background, currently, how to implement, by using a small number of bits (overheads), different MCSs used by a plurality of spatial streams needs to be studied. This application provides the technical solutions in which different MCSs used by the plurality of spatial streams are implemented by using the small number of bits. The following first describes a communication system to which the technical solutions provided in this application are applicable.

The technical solutions of this application are mainly applicable to a wireless communication system. The wireless communication system may comply with a wireless communication standard of the 3rd generation partnership project (3rd generation partnership project, 3GPP), or may comply with another wireless communication standard, for example, a wireless communication standard in the 802 family (for example, 802.11, 802.15, or 802.20) of the institute of electrical and electronics engineers (institute of electrical and electronics engineers, IEEE). The technical solutions of this application are further applicable to a wireless local area network system, for example, an internet of things (internet of things, IoT) network, an ultra wideband (ultra wideband, UWB) system, or a vehicle-to-everything (Vehicle to X, V2X) network. Certainly, the technical solutions of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

Embodiments of this application are mainly described by using a network in which a WLAN system or a UWB system is deployed, and in particular, a network to which the IEEE 802.11 standard is applied, as an example. A person skilled in the art easily understands that aspects of this application may be extended to other networks using various standards or protocols, for example, Bluetooth (Bluetooth), a high-performance radio LAN (high-performance radio LAN, HIPERLAN) (a wireless standard similar to the IEEE 802.11 standard, mainly used in Europe), a wide area network (WAN), a personal area network (personal area network, PAN), or another network currently known or later developed. Therefore, regardless of used coverage and a used wireless access protocol, various aspects provided in this application are applicable to any appropriate wireless network.

The communication system to which this application is applicable is merely an example for description, and is not limited thereto. Unified descriptions are provided herein, and are not described below again.

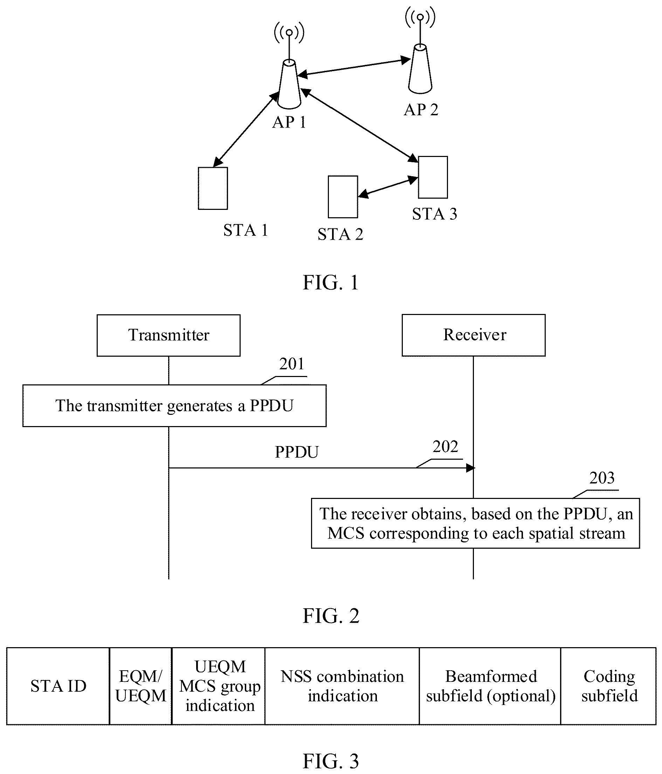

The technical solutions of this application are applicable to data communication between an access point (access point, AP) and one or more stations (Station, STA), and are also applicable to communication between APs, and are further applicable to communication between STAs. FIG. 1 is an example of a wireless communication system to which the technical solutions provided in this application are applicable. The communication system includes one or more APs (only an AP 1 and an AP 2 are shown) and one or more STAs (only a STA 1, a STA 2, and a STA 3 are shown). Both the access point and the STA support a WLAN protocol. The WLAN protocol may include IEEE 802.11 be (or referred to as Wi-Fi 7 or the EHT protocol), and may further include protocols such as IEEE 802.15ab, IEEE 802.11ax, and IEEE 802.11ac. Certainly, with continuous evolution and development of communication technologies, the WLAN protocol may further include an ultra high reliability (ultra high reliability, UHR) /IEEE 802.11bn protocol, an integrated millimeter wave (integrated millimeter wave, IMMW) protocol, IEEE 802.11bn, protocols of subsequent generations, and the like. A WLAN is used as an example. An apparatus for implementing a method in this application may be an access point or a STA in the WLAN, or a chip or a processing system installed in the access point or the STA.

The access point is an apparatus having a wireless communication function, supports communication according to the WLAN protocol, and has a function of communicating with another device (for example, a station or another access point) in the WLAN network. Certainly, the access point may further have a function of communicating with another device. A WLAN system includes one or more access point stations and one or more non-access point stations (non-access point station, non-AP STA). For ease of description, in this specification, the access point station is referred to as an access point (AP), and the non-access point station is referred to as a station (STA).

The access point may be an entire device, or may be a chip, a processing system, or the like installed in the entire device. The device in which the chip or the processing system is installed may implement the method and the function in embodiments of this application under control of the chip or the processing system (that is, the AP). The AP in embodiments of this application is an apparatus that provides a service for a station (Station, STA), and may support 802.11 series protocols, for example, 802.15ab, 802.11ac, 802.11n, 802.11g, 802.11b, 802.11a, 802.11be, 802.11bn, or a next generation of 802.11bn. For example, the AP may be a communication entity like a communication server, a router, a switch, a bridge, or a computer. The AP may include a macro base station, a micro base station (also referred to as a small cell), a pico base station, a femto base station, a relay station, an access point, a gNB, a transmission reception point (transmission reception point, TRP), an evolved NodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), integrated access and backhaul (integrated access and backhaul, IAB), or the like. Certainly, the AP may alternatively be a chip and a processing system in these devices in various forms, to implement the method and the function in embodiments of this application.

The station is an apparatus having a wireless communication function, supports communication according to the WLAN protocol, and has a capability of communicating with another station or access point in the WLAN network. For example, the STA is any communication apparatus that allows a user to communicate with the AP and further communicate with the WLAN. The communication apparatus may be an entire device, or may be a chip, a processing system, or the like installed in the entire device. The device in which the chip or the processing system is installed may implement the method and the function in embodiments of this application under control of the chip or the processing system (that is, the station). The STA may include a mobile phone (mobile phone), a mobile station (mobile station, MS), a tablet computer (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The station may include various handheld devices, vehicle-mounted devices, wearable devices, or computing devices that have a wireless communication function, or other processing devices connected to a wireless modem. Optionally, the station may be a handheld device (handset), a vehicle-mounted device, a wearable device, a terminal in an internet of things or an internet of vehicles network, a terminal in any form in 5G and a communication system evolved after 5G, or the like that has a wireless communication function. This is not limited in this application. The station may support 802.11 series protocols, for example, a plurality of WLAN standards such as 802.15ab, 802.11n, 802.11g, 802.11b, 802.11a, 802.11ac (Wi-Fi 5), 802.11ax (Wi-Fi 6), 802.11be (Wi-Fi 7), UHR/802.11bn (Wi-Fi 8), IMMW, or a next-generation standard of Wi-Fi 8, or subsequent generations of standards.

The technical solutions provided in this application are applied to a scenario in which a transmitter transmits a PPDU to a receiver. The scenario may be a downlink transmission scenario (for example, the transmitter is an AP, and the receiver is a station), or may be an uplink transmission scenario (for example, the transmitter is a station, and the receiver is an AP), or may be a scenario in which a PPDU is transmitted between two APs, or may be a scenario in which a PPDU is transmitted between two stations. The following uses the downlink transmission scenario and the uplink transmission scenario as examples to describe the scenario in which the transmitter transmits the PPDU to the receiver and to which the technical solutions provided in this application are applied.

In the downlink transmission scenario, before sending the PPDU to the receiver (or a user), the transmitter (for example, an AP) allocates a resource unit (resource unit, RU) to the receiver. Each RU supports a plurality of spatial streams. These spatial streams may be used to perform transmission to one user (corresponding to a non-MU-MIMO transmission mode), or may be used to perform transmission to a plurality of users (corresponding to an MU-MIMO transmission mode). Each spatial stream corresponds to one MCS. The transmitter sends the PPDU to the receiver on each spatial stream supported by the RU allocated to the receiver. The PPDU needs to indicate an MCS corresponding to each spatial stream supported by the RU. After receiving the PPDU, the receiver obtains an MCS corresponding to each spatial stream of the receiver, and demodulates data in the PPDU by using the MCS corresponding to each spatial stream of the receiver. In this scenario, the PPDU needs to indicate the MCS corresponding to each spatial stream supported by the RU.

In the uplink transmission scenario, before sending the PPDU to the receiver (for example, an AP), the transmitter (for example, a station) learns of an RU allocated by the receiver to the transmitter. Each RU supports a plurality of spatial streams. These spatial streams may be used to perform transmission to one user (corresponding to a non-MU-MIMO transmission mode), or may be used to perform transmission to a plurality of users (corresponding to an MU-MIMO transmission mode). Each spatial stream corresponds to one MCS. The transmitter sends the PPDU to the receiver on a spatial stream supported by the RU allocated to the transmitter. The PPDU needs to indicate an MCS corresponding to each spatial stream supported by the RU. After receiving the PPDU, the receiver obtains an MCS corresponding to each spatial stream of the transmitter, and demodulates data in the PPDU by using the MCS corresponding to each spatial stream of the transmitter. In this scenario, the PPDU also needs to indicate the MCS corresponding to each spatial stream supported by the RU.

It can be learned from the foregoing descriptions that, in the scenario in which the transmitter transmits the PPDU to the receiver, the PPDU needs to indicate the MCS corresponding to each spatial stream supported by the RU of the receiver. This application provides a technical solution of indicating, by using fewer bits (overheads), an MCS corresponding to a spatial stream, and may be applied to the scenario in which the transmitter transmits the PPDU to the receiver, or may be applied to another scenario in which an MCS corresponding to a spatial stream needs to be indicated.

In a method for indicating an MCS corresponding to a spatial stream provided in this application, information indicating an MCS group and indicating a number of spatial streams corresponding to one or more MCSs in the MCS group is carried in a PPDU, to indicate MCSs used by the PPDU on different spatial streams. In this application, one MCS group includes a plurality of MCSs, and one MCS is a combination of one QAM and one coding rate. In the MCS group, coding rates of the plurality of MCSs are the same, in other words, coding rates in the plurality of MCSs are the same. The MCS group may be named as an MCS set, or may be named as an MCS class. A name of the MCS group is not limited in this application. In this application, that an MCS corresponds to a number of spatial streams is equivalent to that the number of spatial streams corresponds to the MCS. In this application, there are two understandings of a number of spatial streams corresponding to an MCS. One understanding is a sequence number (or an identifier) of a spatial stream corresponding to the MCS, for example, a 2^{nd} spatial stream or a spatial stream . The other understanding is a number of spatial streams corresponding to the MCS.

In the foregoing idea, in the technical solution provided in this application, the PPDU includes a first field and a second field, the first field is used to carry information indicating a first MCS group, and the second field is used to carry information indicating a number of spatial streams corresponding to one or more MCSs in the first MCS group. The receiver may learn, based on the two fields, an MCS corresponding to each spatial stream of the receiver. For example, that the second field is used to carry the information indicating the number of spatial streams corresponding to the one or more MCSs in the MCS group may be replaced with as follows: The second field is used to carry information indicating the MCS corresponding to each spatial stream of the receiver. For example, that the second field is used to carry the information indicating the number of spatial streams corresponding to the one or more MCSs in the MCS group may be replaced with as follows: The second field indicates information about the number of spatial streams corresponding to the one or more MCSs in the MCS group.

The following first describes the technical solutions provided in this application with reference to FIG. 2. FIG. 2 is an interaction flowchart of a modulation and coding scheme indication method according to an embodiment of this application. As shown in FIG. 2, the method includes the following steps.

201: A transmitter generates a PPDU.

In this application, the transmitter (which may be referred to as a transmitting device) is one of an AP and a station, and a receiver (which may be referred to as a receiving device) is the other of the AP and the station. For example, the transmitter is the AP, and the receiver is the station. For another example, the transmitter is the station, and the receiver is the AP. Alternatively, both the transmitter and the receiver are APs. Alternatively, both the transmitter and the receiver are stations. There may be one or more transmitters. This is not limited in embodiments of this application. In embodiments of this application, one receiver is used as an example for description.

The PPDU may include a first field and a second field. The first field indicates a first MCS group. The first field may be referred to as an unequalized (unequal) modulation (unequal modulation, UEQM) MCS group indication field, that is, a UEQM MCS group indication field. A name of a field in this application may be another different name, provided that functions essentially indicated are the same. The name of the field is not limited in this application. The first MCS group includes a plurality of MCSs. For example, the first MCS group includes combinations of BPSK, QPSK, 16-QAM, and 64-QAM and a same coding rate (for example, a coding rate of 1/2). For example, the first MCS group includes combinations of 64-QAM, 256-QAM, 1024-QAM, 4096-QAM and a same coding rate. For example, the first MCS group may include a combination of 16,384 QAM (16K QAM for short) and a coding rate, or may include a combination of 65,536 QAM (64K QAM for short) and a coding rate, or may include a combination of a higher QAM and a coding rate. The second field indicates a number of spatial streams corresponding to one or more MCSs in the first MCS group. The second field may be referred to as an NSS combination indication field.

It may be understood that, a person skilled in the art knows that the spatial stream is virtual exists. Therefore, there may be the following two understandings of a number of spatial streams corresponding to an MCS, and both may finally indicate MCSs used by different spatial streams.

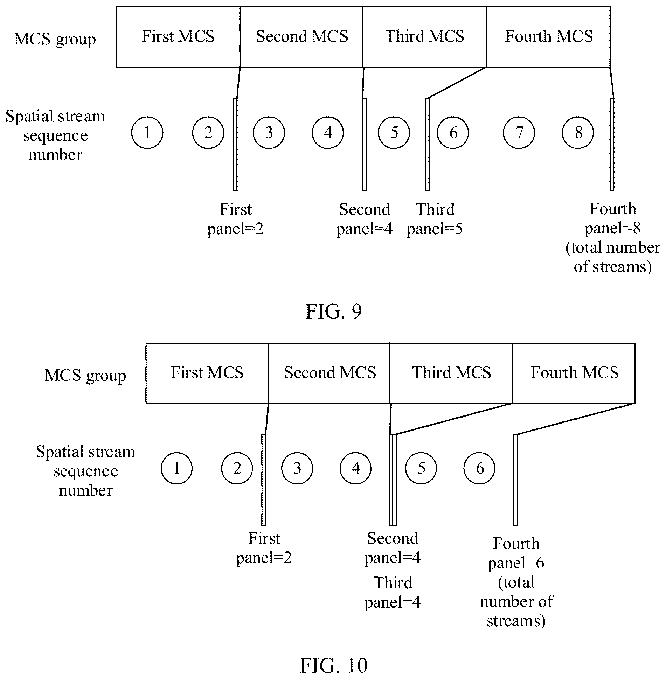

In a possible implementation, that the second field indicates the number of spatial streams corresponding to the one or more MCSs in the first MCS group may be that the second field indicates a spatial stream corresponding to the one or more MCSs in the first MCS group. In other words, the second field indicates MCSs respectively corresponding to a plurality of spatial streams corresponding to the first MCS group. In this implementation, the number of spatial streams may be understood as a sequence number of the spatial stream. For example, the second field indicates that one MCS in the first MCS group corresponds to a 2^{nd} spatial stream (or a spatial stream ②). For example, the first MCS group includes a first MCS, a second MCS, a third MCS, and a fourth MCS, and the second field indicates that the first MCS corresponds to a spatial stream ① and a spatial stream ②, the second MCS corresponds to a spatial stream ③ and a spatial stream ④, the third MCS corresponds to a spatial stream ⑤, and the fourth MCS corresponds to a spatial stream ⑥, a spatial stream ⑦, and a spatial stream ⑧. The spatial stream ① to the spatial stream ⑧ are spatial streams of any user. That an MCS corresponds to one or more spatial streams may be understood as that the one or more spatial streams use (or correspond to) the MCS. For example, that the first MCS corresponds to the spatial stream ① and the spatial stream ② may be understood as that the spatial stream ① and the spatial stream ② use the first MCS. For example, the first MCS group includes a first MCS, a second MCS, a third MCS, and a fourth MCS, and the second field indicates that the first MCS corresponds to a spatial stream ① and a spatial stream ②, the second MCS corresponds to a spatial stream ③ and a spatial stream ④, and the fourth MCS corresponds to a spatial stream ⑤ and a spatial stream ⑥. The spatial stream ① to the spatial stream ⑥ are spatial streams of any user. With reference to FIG. 9 to FIG. 11, the following describes a manner in which the second field indicates the spatial stream corresponding to the one or more MCSs in the first MCS group.

In another possible implementation, that the second field indicates the number of spatial streams corresponding to the one or more MCSs in the first MCS group may be that the second field indicates a number of spatial streams corresponding to the one or more MCSs in the first MCS group. It should be noted that the number of spatial streams is a total number of spatial streams, rather than a sequence number of a specific spatial stream. For example, an MCS corresponds to a 1^{st} spatial stream and a 2^{nd} spatial stream, and a number of spatial streams corresponding to the MCS is 2. For another example, a number of spatial streams of a receiver is 8, it indicates that a total number of spatial streams of the receiver is 8, rather than an 8^{th} spatial stream. For example, the first MCS group includes a first MCS, a second MCS, a third MCS, and a fourth MCS, and the second field indicates that the first MCS corresponds to two spatial streams (in other words, a number of spatial streams corresponding to the first MCS is 2), the second MCS corresponds to two spatial streams, the third MCS corresponds to one spatial stream (in other words, a number of spatial streams corresponding to the third MCS is 1), and the fourth MCS corresponds to three spatial streams. In this case, a total number of spatial streams corresponding to the MCSs in the first MCS group (that is, a total number of spatial streams corresponding to the first MCS group) is 8. For example, the first MCS group includes a first MCS, a second MCS, a third MCS, and a fourth MCS, and the second field indicates that the first MCS corresponds to two spatial streams (in other words, a number of spatial streams corresponding to the first MCS is 2), the second MCS corresponds to two spatial streams, the third MCS corresponds to zero spatial streams (in other words, a number of spatial streams corresponding to the third MCS is 0), and the fourth MCS corresponds to two spatial streams. In this case, a total number of spatial streams corresponding to the MCSs in the first MCS group is 6. With reference to FIG. 9 to FIG. 11, the following describes a manner in which the second field indicates the number of spatial streams corresponding to the one or more MCSs in the first MCS group.

The PPDU may include one or more user fields, and at least one user field includes the first field and the second field. For example, one user field in the PPDU is associated with one user (for example, a station), the user field includes information that needs to be read by the user associated with the user field, and another user does not need to read the user field. For example, a user field in the PPDU is associated with a user #1, the user field includes an identifier of the user #1, the user #1 determines, based on the identifier that is of the user #1 and that is included in the user field, that the user field includes information that needs to be read by the user #1, and another user (for example, a station) disregards (disregard) the user field when the identifier included in the user field is not an identifier of the another user.

The following describes a case in which the PPDU includes one user field and a case in which the PPDU includes a plurality of user fields.

In a possible implementation, the PPDU includes one user field, and the user field includes the first field, the second field, and a third field (optional). The third field indicates equal modulation (equal modulation, EQM) or UEQM. The third field may be referred to as an EQM/UEQM indication field or an EQM/UEQM field. FIG. 3 is an example of a format of a user field in the PPDU according to an embodiment of this application. As shown in FIG. 3, the user field in the PPDU includes a STA identifier (identifier, ID) subfield, an EQM/UEQM field (that is, the third field), a UEQM MCS group indication field (that is, the first field), an NSS combination indication field (that is, the second field), a beamformed subfield (optional), and a coding subfield. A STA identifier is an identifier of a STA (or a user) associated with the user field. The beamformed subfield indicates whether beamforming is used for data corresponding to the user. The coding subfield indicates a coding type of the user. The user field shown in FIG. 3 is only an example of one user field in the PPDU. The user field in the PPDU may include more or fewer fields than those in the user field shown in FIG. 3. For example, the user field in the PPDU includes the STA identifier (identifier, ID) subfield, the UEQM MCS group indication field (that is, the first field), the NSS combination indication field (that is, the second field), and the coding subfield. A length and a location of each field in the user field in the PPDU are not limited in embodiments of this application. For example, a length of the first field may be 3 bits (bits), 4 bits, 5 bits, or 6 bits. For example, a length of the second field may be 5 bits, 6 bits, 7 bits, 8 bits, or 9 bits. For example, in the user field in the PPDU, a length of the EQM/UEQM field is 1 bit (bit), a length of the UEQM MCS group indication field is 4 bits, and a length of the NSS combination indication field is 6 bits. For example, in the user field in the PPDU, a length of the EQM/UEQM field is 1 bit (bit), a length of the UEQM MCS group indication field is 4 bits, and a length of the NSS combination indication field is 5 bits. For example, when a value of the EQM/UEQM field is 0, the EQM/UEQM field indicates the EQM; or when a value of the EQM/UEQM field is 1, the EQM/UEQM field indicates the UEQM.

In a possible implementation, the PPDU includes a first signal field (signal field, SIG), and the first SIG field includes the user field. The following describes a format of the PPDU. In a possible implementation, the first SIG field is encoded and transmitted in frequency domain in a unit of 20 MHz. Herein, a concept of a content channel (content channel, CC) is introduced, to represent content transmitted in one 20 MHz in the first SIG field. For example, when a bandwidth of the PPDU is 20 MHz, the first SIG field has one CC. For example, when a bandwidth of the PPDU is 40 MHz, the first SIG field has two CCs, which are respectively a CC 1 and a CC 2 in ascending order of frequencies. Formats of signal fields in the two content channels are the same, but content may be different. For example, when a bandwidth of the PPDU is 80 MHz, there are still two CCs, and there are four channels in total. Therefore, resource unit allocation information is indicated on the four channels in a structure of CC 1, CC 2, CC 1, and CC 2 in ascending order of frequencies. For example, when a bandwidth of the PPDU is 160 MHz or higher, two content channels exist in each 80 MHz. The first SIG field may have different content in different 80 MHz. For example, content of one content channel in the first SIG field is divided into a common field and a user specific field, and content of common fields in PPDUs in different formats may be different.

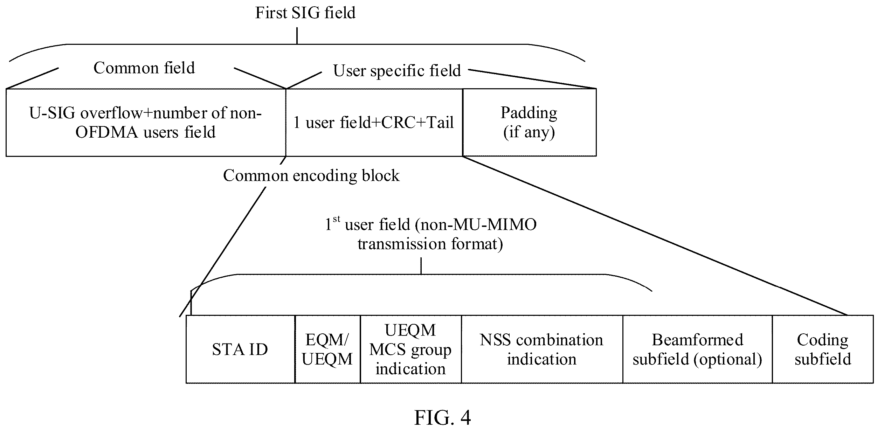

FIG. 4 is an example of a format of a first SIG field in the PPDU according to an embodiment of this application. As shown in FIG. 4, the first SIG field includes a common field and a user specific field, and the user specific field includes the user field, a cyclic redundancy check (cyclic redundancy check, CRC) field, a tail (Tail) bit, and a padding bit (optional). The common field may include common information that cannot be carried due to an insufficient number of bits in a universal signal (universal SIG, U-SIG) field in the PPDU, that is, U-SIG overflow bits (for example, a spatial reuse parameter or a guard interval+long training field size subfield). In addition, a number of non-OFDMA users field may be further included, to indicate that a number of users for transmission is 1. The tail bit is used to terminate binary circular convolutional coding, and the padding bit may exist or may not exist. The format of the first SIG field shown in FIG. 4 is for single-user transmission, in other words, the first SIG field includes one user field.

In a possible implementation, the transmitter may send a PPDU (referred to as a PPDU #1 below) including the first field and the second field. For example, a user field in the PPDU #1 includes the first field and the second field, the user field in the PPDU #1 is associated with a user #1, and the second field indicates the number of spatial streams corresponding to the one or more MCSs in the first MCS group. A number of spatial streams corresponding to an MCS in the first MCS group is a number of spatial streams that use the MCS and that are in spatial streams of the user #1. Alternatively, the transmitter may send a PPDU (referred to as a PPDU #2 below) including an MCS field (which may be referred to as an MCS indication field) and a number of spatial streams (number of spatial streams, NSS) field. For example, a user field in the PPDU #2 includes the MCS field and the NSS field, the user field in the PPDU #2 is associated with a user #2, the NSS field is a total number of spatial streams of the user #2, and the MCS field indicates a same MCS used by all the spatial streams of the user #2. In other words, the transmitter may send PPDUs including user fields in different formats, for example, the PPDU #1 and the PPDU #2.

For example, when a spatial stream of a user uses the UEQM, a user field in the PPDU sent by the transmitter includes the first field and the second field, to indicate an MCS used by each spatial stream of the user. When a spatial stream of a user uses the EQM, a user field in the PPDU sent by the transmitter includes the MCS field and the NSS field, to indicate a same MCS used by all spatial streams of the user. Specifically, when a spatial stream of a user uses the EQM, a user field in the PPDU sent by the transmitter includes an MCS field, an NSS field, the third field (that is, the EQM/UEQM field), and a coding subfield, and the third field indicates the EQM.

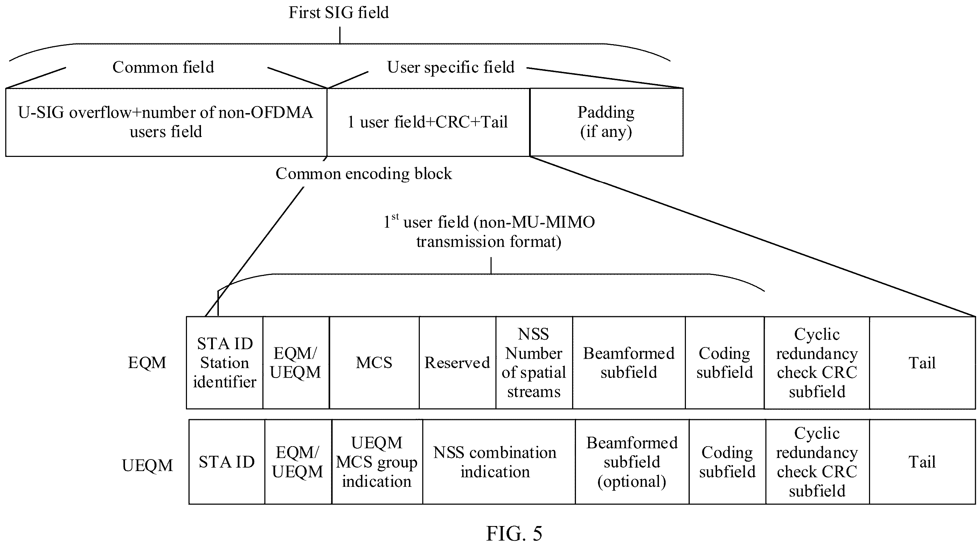

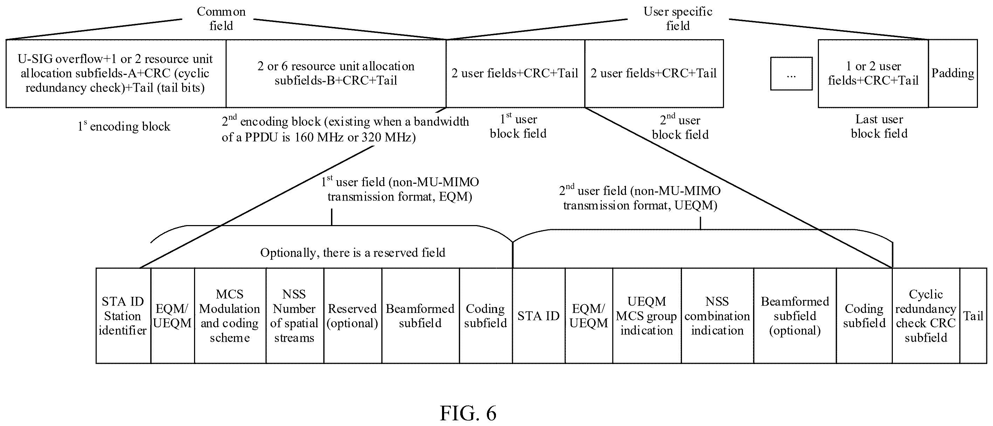

In a possible implementation, the PPDU sent by the transmitter includes the first SIG field, and the user field in the first SIG field includes an MCS field, an NSS field, the third field (that is, the EQM/UEQM field), and the coding subfield. FIG. 5 is another example of a format of a first SIG field in the PPDU according to an embodiment of this application. For descriptions of fields in the first SIG field shown in FIG. 5, refer to the descriptions of the fields in the first SIG field shown in FIG. 4. Details are not described herein again. The format of the first SIG field (including one user field) shown in FIG. 5 is for single-user transmission. A format of a first SIG field (including a plurality of user fields) shown in FIG. 6 is for OFDMA transmission.

Refer to FIG. 5. There are two possible formats of a user field in the first SIG field in the PPDU. One user field includes a STA ID subfield, an EQM/UEQM field (that is, the third field), a UEQM MCS group indication field (that is, the first field), an NSS combination indication field (that is, the second field), a beamformed subfield (optional), and a coding subfield. The other user field includes a STA ID subfield, an EQM/UEQM field, an MCS field, an NSS field, a reserved field (optional), a beamformed subfield (optional), and a coding subfield. Lengths of the user fields in two formats shown in FIG. 5 may be equal or may not be equal. In a possible manner, some bits (that is, the reserved field) are reserved in the user field, so that the lengths of the user fields in two formats shown in FIG. 5 are equal. In this way, complexity of parsing the user fields by the receiver can be reduced. For example, a location and a length of the reserved field in the user field may be flexibly configured based on a requirement, so that the lengths of the two user fields are equal. In another possible manner, bits that are used to make the lengths of the user fields in two formats equal (or aligned) are not reserved in the user field. In this way, bit overheads can be reduced. The following describes some examples in which the lengths of the user fields in two formats shown in FIG. 5 are equal. For example, a sum of a length of the UEQM MCS group indication field (that is, the first field) and a length of the NSS combination indication field (that is, the second field) is equal to a sum of a length of the MCS field, a length of the NSS field, and a length of the reserved field (optional). For example, in the one user field, the length of the UEQM MCS group indication field is 4 bits, and the length of the NSS combination indication field is 6 bits. In the other user field, the length of the MCS field is 4 bits, the length of the NSS field is 2 bits, and the length of the reserved field is 4 bits. For example, in the one user field, the length of the UEQM MCS group indication field is 4 bits, and the length of the NSS combination indication field is 8 bits. In the other user field, the length of the MCS field is 4 bits, the length of the NSS field is 2 bits, and the length of the reserved field is 6 bits. In this application, a location and a length of each field in the user field are not limited. In addition, the user field in this application may include more or fewer fields than those in the user field shown in FIG. 5.

In a possible implementation, the PPDU includes a plurality of user fields, p user fields in the plurality of user fields include the first field and the second field, q user fields in the plurality of user fields include a fourth field and a fifth field, the fourth field indicates a number of spatial streams of a user (a user associated with the user field), the fifth field indicates a same MCS used by all spatial streams of the user, and lengths of the user fields in the PPDU are equal or unequal. p is an integer greater than 0, and q is an integer greater than or equal to 0. In other words, the PPDU may include user fields in two different formats. The following uses an example in which the PPDU includes a first user field (including the first field and the second field) and a second user field (including the fourth field and the fifth field) to describe the PPDU including the user fields in two different formats. For example, the PPDU includes the first user field and the second user field, the first user field is associated with a first user, the second user field is associated with a second user, the first user field includes the first field and the second field, the second user field includes the fourth field and the fifth field, the fourth field indicates a number of spatial streams of the second user, the fifth field indicates a same MCS used by all the spatial streams of the second user, a length of the first user field is equal to a length of the second user field. For example, the first user field includes a STA ID (that is, an ID of the first user) subfield, an EQM/UEQM field (that is, the third field), a UEQM MCS group indication field (that is, the first field), an NSS combination indication field (that is, the second field), a beamformed subfield (optional), and a coding subfield. A format of the first user field may be the same as a format of the user field corresponding to the UEQM shown in FIG. 5. The second user field includes a STA ID subfield, an EQM/UEQM field, an MCS field, an NSS field, a reserved field (optional), a beamformed subfield (optional), and a coding subfield. A format of the second user field may be the same as a format of the user field corresponding to the EQM shown in FIG. 5.

There may be user fields in two formats in the PPDU, for example, the first user field and the second user field. Any user field may indicate, by using the EQM/UEQM field included in the user field, a type of the user field. Further, content of subfields in user fields in different formats is different. The user fields in different formats in the PPDU have an equal length (in other words, lengths of the user fields in different formats are equal). This can reduce decoding and parsing complexity of the receiver. The NSS combination indication field needs to indicate a number of spatial streams corresponding to one or more MCSs in an MCS group. Therefore, overheads are high. To enable the first user field and the second user field to have the equal length or nearly the equal length, one manner is to reduce the overheads of the NSS combination indication field as much as possible to achieve a tradeoff between the overheads and flexibility; and the other manner is to introduce some reserved bits (for example, a reserved field in a 1^{st} user field below) into the user field of the EQM (that is, the second user field). A location and a length of a reserved field (or the reserved bits) in the second user field are not limited. The location and the length of the reserved field (or the reserved bits) in the second user field may be flexibly configured based on a requirement. For example, the second user field includes a plurality of reserved fields, a part of the reserved fields in the second user field are used to align with the first user field, and the other part of the reserved fields in the second user field are not used to align with the first user field, but are introduced for another consideration. For example, before some reserved bits are introduced into the second user field, the second user field includes one or more reserved fields. After some reserved bits are introduced into the second user field, the length of the second user field is equal to the length of the first user field. The first user field may include one or more reserved fields, or may not include a reserved field. For example, a sum of a length of the MCS field and a length of the NSS field is S, a sum of a length of the UEQM MCS group indication field and a length of the NSS combination indication field is T, a length of the reserved field in the second user field is greater than or equal to (T-S), and (T-S) reserved bits in the second user field are used to align the length of the second user field with the length of the first user field, where both S and T are integers greater than 0, and S is less than T. FIG. 5 shows a possible format of a second user field. To be specific, the second user field includes one reserved field, and a length of the reserved field is equal to (T-S). The format of the second user field shown in FIG. 5 is merely a possible example, and should not be understood as a limitation on the second user field including one reserved field. In addition to the format of the second user field shown in FIG. 5, the second user field may include a plurality of reserved fields. Lengths and locations of the plurality of reserved fields are not limited in this application, and examples are not provided one by one herein. For example, in the first user field, the length of the UEQM MCS group indication field is 4 bits, and the length of the NSS combination indication field is 6 bits; and in the second user field, the length of the MCS field is 4 bits, the length of the NSS field is 3 bits, and the length of the reserved field is 3 bits. For another example, in the first user field, the length of the UEQM MCS group indication field is 4 bits, and the length of the NSS combination indication field is 8 bits; and in the second user field, the length of the MCS field is 4 bits, the length of the NSS field is 4 bits, and the length of the reserved field is 4 bits. In this embodiment of this application, the EQM and the UEQM may be implemented by using user fields in different formats with an equal length. An operation of parsing a plurality of user fields with an equal length by the receiver is simpler than an operation of parsing a plurality of user fields with unequal lengths by the receiver. This can improve efficiency of parsing the user field, and reduces complexity of implementation

In a possible implementation, the first SIG field in the PPDU includes the first user field and the second user field, and a format of the first SIG field in the PPDU is for OFDMA transmission. FIG. 6 is another example of a format of a first SIG field in the PPDU according to an embodiment of this application. As shown in FIG. 6, the first SIG field includes a common field and a user specific field. A 1^{st} encoding block in the common field includes U-SIG overflow bits (for example, including some common information that cannot be carried due to an insufficient number of bits in a U-SIG field), one or two resource unit allocation subfields (resource unit (RU) allocation subfield)-A, a CRC subfield, and tail bits. A 2^{nd} encoding block in the common field includes two or six resource unit allocation subfields-B, a CRC subfield, and tail bits. The user specific field includes a plurality of user block fields. One user block field includes one or two user fields, a CRC subfield, and tail bits. When one user block field includes two user fields, the two user fields are carried on two content channels, respectively. A resource unit allocation subfield in the 1^{st} encoding block may be referred to as a resource unit allocation subfield-A, and a resource unit allocation subfield in the 2^{nd} encoding block may be referred to as a resource unit allocation subfield-B. The resource unit allocation subfield is used to allocate an RU or an MRU of an entire bandwidth, which is equivalent to dividing the entire bandwidth into a plurality of frequency domain sub-bandwidths. The resource unit allocation subfield further indicates a number of users corresponding to each RU or multiple resource unit (multiple resource unit, MRU). The 2^{nd} encoding block in the common field exists when the bandwidth of the PPDU is 160 MHz or 320 MHz. A 1^{st} user field in FIG. 6 may be an example of the second user field, and a 2^{nd} user field in FIG. 6 may be an example of the first user field. As shown in FIG. 6, the 1^{st} user field (that is, the second user field) corresponds to the EQM, and the 1^{st} user field includes a STA ID subfield, an EQM/UEQM field, an MCS field, an NSS field, a reserved field (optional), a beamformed subfield (optional), and a coding subfield. The 2^{nd} user field (that is, the first user field) corresponds to the UEQM, and the 2^{nd} user field includes a STA ID (that is, an ID of the first user) subfield, an EQM/UEQM field (that is, the third field), a UEQM MCS group indication field (that is, the first field), an NSS combination indication field (that is, the second field), a beamformed subfield (optional), and a coding subfield. For example, lengths of user fields in the PPDU shown in FIG. 6 are equal.

In a possible implementation, the PPDU includes a plurality of user fields, and the plurality of user fields each include the first field and the second field. For example, the first SIG field in the PPDU includes a plurality of user fields, a format of one or more user fields is the same as the format of the first user field, and the format of the first SIG field in the PPDU is for OFDMA transmission.

The format of the PPDU is not limited in embodiments of this application. The PPDU may be any PPDU that may include the user field. The following describes two examples of the PPDU.

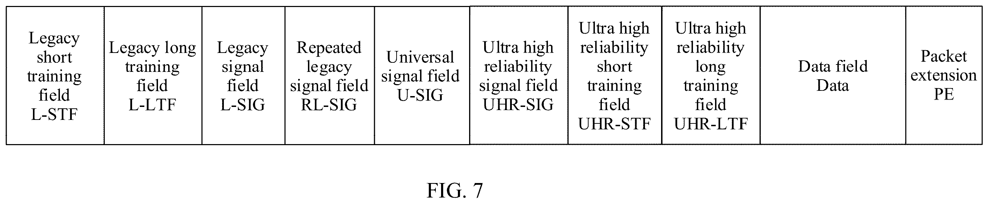

For example, the PPDU is a UHR PPDU, which may also be referred to as a UHR MU PPDU, where MU represents multiple users (multiple users). An example of the PPDU is shown in FIG. 7. FIG. 7 is an example of a format of a PPDU according to an embodiment of this application. As shown in FIG. 7, the UHR PPDU includes: a legacy short training field (legacy short training field, L-STF), a legacy long training field (legacy long training field, L-LTF), a legacy signal field (legacy signal field A, L-SIG), a repeated legacy signal field (repeated L-SIG, RL-SIG), a universal signal field (universal SIG, U-SIG), an ultra high reliability signal field (ultra high reliability signal field, UHR-SIG), an ultra high reliability short training field (ultra high reliability short training field, UHR-STF), an ultra high reliability long training field (ultra high reliability long training field, UHR-LTF), a data (data) field, and a packet extension (packet extension, PE) field. Table 1 shows meanings of the fields in the UHR PPDU. The first SIG field may be any field in the UHR PPDU. For example, the first SIG field is the UHR-SIG field in the UHR PPDU. For example, the first SIG field is the U-SIG field in the UHR PPDU.

**Table 1**

| **English acronyms and abbreviations** | **Complete English expression** | **Chinese expression** | Function |
|---|---|---|---|
| L-STF | Legacy Short Training Field | Legacy short training field | Used for PPDU discovery, coarse synchronization, and automatic gain control |
| L-LTF | Legacy Long Training Field | Legacy long training field | Used for precise synchronization and channel estimation |
| L-SIG | Legacy Signal Field A | Legacy signal field | Used for carrying signaling information related to a PPDU length, to ensure coexistence, where the repetition of the two fields is also used for automatic detection of the receiver |
| RL-SIG | Repeated L-SIG | Repeated legacy signal field | |
| U-SIG | Universal SIG | Universal signal field | Universal signal field, carrying signaling for demodulating subsequent data, where for 802.11be and later standards, a unified signal field is used |
| UHR-SIG | Ultra High Reliability Signal Field | Ultra high reliability signal field | Used for carrying signaling for demodulating subsequent data, where the ultra high reliability signal field is presented in different forms in different standards |
| UHR-STF | Ultra High Reliability Short Training Field | Ultra high reliability short training field | Used for automatic gain control of a subsequent field |
| UHR-LTF | Ultra High Reliability Long Training Field | Ultra high reliability long training field | Used for channel estimation |
| Data | | Data | Carry data information |
| PE | Packet Extension | Packet extension | Used for prolonging processing time of the receiver |

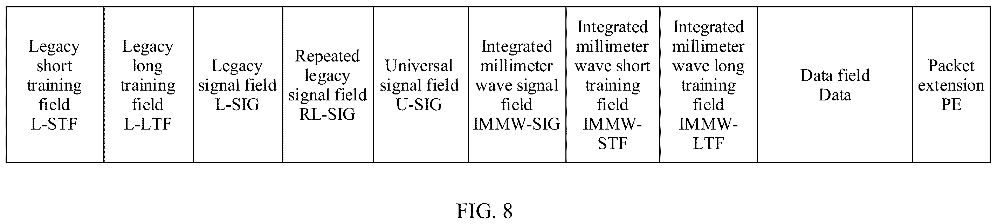

For example, the PPDU is an IMMW PPDU, and the PPDU may support an IMMW standard. An example of the PPDU is shown in FIG. 8. FIG. 8 is an example of a format of another PPDU according to an embodiment of this application. As shown in FIG. 8, the IMMW PPDU includes: a legacy short training field, a legacy long training field, a legacy signal field, a repeated legacy signal field, a universal signal field, an integrated millimeter wave signal field (IMMW signal field, IMMW-SIG), an integrated millimeter wave short training field (IMMW short training field, IMMW-STF), an integrated millimeter wave long training field (IMMW long training field, IMMW-LTF), a data (data) field, and a packet extension (packet extension, PE) field. The first SIG field may be any field in the IMMW PPDU. For example, the first SIG field is the IMMW-SIG field in the IMMW PPDU. For example, the first SIG field is the U-SIG field in the IMMW PPDU. The IMMW PPDU and the UHR PPDU are merely two examples of the PPDU. The PPDU may alternatively be another type of PPDU. This is not limited in embodiments of this application.

202: The transmitter sends the PPDU.

Correspondingly, the receiver receives the PPDU. For example, when the PPDU is for single-user transmission, one receiver (that is, a single user to which the PPDU is directed) receives the PPDU, and parses the PPDU. For example, when the PPDU is for multi-user transmission, a plurality of receivers (that is, users to which the PPDU is directed) receive the PPDU, and parse the PPDU.

203: The receiver obtains, based on the PPDU, an MCS corresponding to each spatial stream.

In a possible implementation, the PPDU includes one user field, in other words, the PPDU is for single-user transmission, the user field is associated with the receiver, the user field includes the first field and the second field, the first field indicates the first MCS group, the second field indicates the spatial stream corresponding to the one or more MCSs in the first MCS group, and a spatial stream corresponding to an MCS in the first MCS group is a spatial stream for which the receiver uses the MCS. That the receiver obtains, based on the PPDU, the MCS corresponding to each spatial stream may be that the receiver obtains, based on the PPDU, an MCS used by each spatial stream of the receiver. For example, the first MCS group includes a first MCS, a second MCS, a third MCS, and a fourth MCS. The receiver learns, based on the PPDU, that the first MCS corresponds to a spatial stream ① and a spatial stream ②, that the second MCS corresponds to a spatial stream ③ and a spatial stream ④, and that the fourth MCS corresponds to a spatial stream ⑤ and a spatial stream ⑥. The spatial stream ① to the spatial stream ⑥ are spatial streams of the receiver.

In a possible implementation, the PPDU includes one user field, in other words, the PPDU is for single-user transmission, the user field is associated with the receiver, the user field includes the first field and the second field, the first field indicates the first MCS group, the second field indicates the number of spatial streams corresponding to the one or more MCSs in the first MCS group, and a number of spatial streams corresponding to an MCS in the first MCS group is a number of spatial streams that use this MCS and that are in spatial streams of the receiver. That the receiver obtains, based on the PPDU, the MCS corresponding to each spatial stream may be that the receiver obtains, based on the PPDU, a number of spatial streams that use various MCSs and that are in spatial streams of the receiver. For example, the first MCS group includes a first MCS, a second MCS, a third MCS, and a fourth MCS. The receiver learns, based on the PPDU, that two spatial streams of the receiver use the first MCS, two spatial streams use the second MCS, one spatial stream uses the third MCS, and three spatial streams use the fourth MCS. For another example, the first MCS group includes a first MCS, a second MCS, a third MCS, and a fourth MCS. The receiver learns, based on the PPDU, that two spatial streams of the receiver use the first MCS, two spatial streams use the second MCS, zero spatial streams use the third MCS, and two spatial streams use the fourth MCS.

In a possible implementation, the PPDU includes the first user field and the second user field, in other words, the PPDU is for multi-user transmission, the first user field is associated with the first user (a receiver #1), the second user field is associated with the second user (a receiver #2), the first user field includes the first field and the second field, the second user field includes the fourth field and the fifth field, the fourth field indicates the number of spatial streams of the second user, and the fifth field indicates the same MCS used by all the spatial streams of the second user. For example, the receiver #1 reads content of the first user field in the PPDU and disregards content of the second user field in the PPDU, and the receiver #2 reads the content of the second user field in the PPDU and disregards the content of the first user field in the PPDU. An example of step 203 is as follows: The receiver #1 obtains, based on the PPDU, an MCS used by each spatial stream of the receiver #1. Another example of step 203 is as follows: The receiver #1 obtains, based on the PPDU, a number of spatial streams that use various MCSs and that are in spatial streams of the receiver #1. Another example of step 203 is as follows: The receiver #2 obtains, based on the PPDU, a same MCS used by all spatial streams of the receiver #2.

In a possible implementation, after obtaining MCSs used by the spatial streams of the first user, the receiver demodulates data based on the MCSs used by the spatial streams of the first user. For example, the receiver demodulates a data field in the PPDU based on the MCS used by each spatial stream of the first user.

In this embodiment of this application, the PPDU includes the first field and the second field, the first field indicates the first MCS group, and the second field indicates the number of spatial streams corresponding to the one or more MCSs in the first MCS group. Different MCSs used by a plurality of spatial streams can be flexibly indicated by using the first MCS group, and signaling overheads are lower compared with those of indicating, by using one index, an MCS used by each spatial stream under different numbers of spatial streams.

With reference to Table 2 and Table 4, the following describes a manner in which the first field indicates the first MCS group.

In a possible implementation, a value of the first field is an index, and the index indicates an MCS group, that is, the first MCS group. The index indicated by the value of the first field may be any index in a basic MCS indication table, and one index that has been defined in the basic MCS indication table indicates one MCS group. The basic MCS indication table may be referred to as an MCS group indication table, or may be referred to as another table. This is not limited in this application. An index in the basic MCS indication table indicates a QAM combination at a specific coding rate, that is, an MCS group. Table 2 is an example of the basic MCS indication table.

**Table 2**

| Index | Modulation (Modulation) | Coding rate (Rate) |
|---|---|---|
| 0 | BPSK, QPSK, 16-QAM, and 64-QAM | 1/2 |
| 1 | QPSK, 16-QAM, 64-QAM, and 256-QAM | 1/2 |
| 2 | | 3/4 |
| 3 | 16-QAM, 64-QAM, 256-QAM, and 1024-QAM | 1/2 |
| 4 | | 3/4 |
| 5 | 64-QAM, 256-QAM, 1024-QAM, and 4096-QAM | 2/3 |
| 6 | | 3/4 |
| 7 | | 5/6 |
| 8 | BPSK-DCM, BPSK, QPSK, and 16-QAM | 1/2 |
| 9 to 15 | Reserved | |

Refer to Table 2. When the value of the first field is the index 0, the first MCS group is a combination of a first QAM combination and the coding rate of 1/2, and the first QAM combination includes BPSK, QPSK, 16-QAM, and 64-QAM. When the value of the first field is the index 1, the first MCS group is a combination of a second QAM combination and the coding rate of 1/2, and the second QAM combination includes QPSK, 16-QAM, 64-QAM, and 256-QAM. When the value of the first field is the index 2, the first MCS group is a combination of the second QAM combination and the coding rate of 3/4, and the second QAM combination includes QPSK, 16-QAM, 64-QAM, and 256-QAM. The rest may be deduced by analogy. It should be noted that Table 2 is an example of the basic MCS indication table. Compared with Table 2, the basic MCS indication table may include more or fewer correspondences between indexes and MCS groups. In addition, a correspondence between the index and the MCS group in Table 2 is not limited. In other words, a table obtained by adding, deleting, transforming, or modifying a correspondence between an index and an MCS group based on Table 2 belongs to basic MCS indication tables protected in this application.

In a possible implementation, a meaning of the index in the basic MCS indication table may correspond to a meaning of an index in an MCS indication table under the EQM modulation.

**Table 3**

| Index | Modulation (modulation) | Coding rate (rate) |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 14 | UHR duplicate (UHR duplicate, UHR DUP) | 1/2 |
| 15 | Dual carrier modulation (BPSK-dual carrier modulation, BPSK-DCM) | 1/2 |

Table 4 is another example of the basic MCS indication table.

**Table 4**

| Index | Modulation (modulation) | | Coding rate (rate) |
|---|---|---|---|
| | Meaning under the EQM (same as Table 3) | Meaning under the UEQM | |
| 0 | BPSK | BPSK, QPSK, 16-QAM, and 64-QAM | 1/2 |
| 1 | QPSK | QPSK, 16-QAM, 64-QAM, and 256-QAM | 1/2 |
| 2 | | | 3/4 |
| 3 | 16-QAM | 16-QAM, 64-QAM, 256-QAM, and 1024-QAM | 1/2 |
| 4 | | | 3/4 |
| 5 | 64-QAM | 64-QAM, 256-QAM, 1024-QAM, and 4096- | 2/3 |
| 6 | | | 3/4 |
| 7 | | QAM | 5/6 |
| 8 | 256-QAM | Reserved | 3/4 |
| 9 | | Reserved | 5/6 |
| 10 | 1024-QAM | Reserved | 3/4 |
| 11 | | Reserved | 5/6 |
| 12 | 4096-QAM | Reserved | 3/4 |
| 13 | | Reserved | 5/6 |
| 14 | UHR duplicate (UHR duplicate, UHR DUP) | Reserved | 1/2 |
| 15 | Dual carrier modulation (BPSK-dual carrier modulation, BPSK-DCM) | BPSK-DCM, BPSK, QPSK, and 16-QAM | 1/2 |

Refer to Table 4. The meaning of the index in the basic MCS indication table corresponds to the meaning of the index in the MCS indication table under the EQM modulation. Alternatively, Table 4 shows the meaning of the index under the EQM and the meaning of the index under the UEQM. Table 4 may be obtained by combining Table 2 and Table 3. For example, the index 0 indicates a combination of BPSK and 1/2 and the first MCS group, the first MCS group is the combination of the first QAM combination and the coding rate of 1/2, and the first QAM combination includes BPSK, QPSK, 16-QAM, and 64-QAM. Table 4 may be used as an MCS indication table under the EQM modulation, and may also be used as a basic MCS indication table. The receiver may learn of, based on an EQM/UEQM field, whether an index in Table 4 indicates an MCS (meaning under the EQM) or an MCS group (meaning under the UEQM). For example, when a value of the EQM/UEQM field is 0, the receiver learns that the index in Table 4 indicates an MCS; or when a value of the EQM/UEQM field is 1, the receiver learns that the index in Table 4 indicates an MCS group. For example, when the EQM/UEQM field in a user field indicates the EQM, if a value of a field (for example, an MCS field) in the user field is the index 0, the field indicates the combination of BPSK and 1/2; or when the EQM/UEQM field in a user field indicates the UEQM, if a value of a field (for example, an UEQM MCS group indication field) in the user field is the index 0, the field indicates the first MCS group, where the first MCS group is the combination of the first QAM combination and the coding rate of 1/2. It should be noted that Table 4 is an example of the basic MCS indication table. Compared with Table 4, the basic MCS indication table may include more or fewer correspondences between indexes and MCS groups. In addition, a correspondence between the index and the MCS group in Table 4 is not limited. In other words, a table obtained by adding, deleting, transforming, or modifying a correspondence between an index and an MCS group based on Table 4 belongs to the basic MCS indication tables protected in this application.

The foregoing describes the manner in which the first field indicates the first MCS group. The following describes a possible manner in which the second field indicates the number of spatial streams corresponding to the one or more MCSs in the first MCS group.

In a possible implementation, the second field indicates the spatial stream corresponding to the one or more MCSs in the first MCS group. In other words, the second field indicates which spatial streams of a user (for example, a receiver) correspond to which MCS in the first MCS group. In a possible implementation, the second field indicates a spatial stream boundary corresponding to any MCS in the first MCS group. In other words, the second field indicates a boundary of a spatial stream of the any MCS in the first MCS group. A spatial stream boundary corresponding to an MCS may indicate a maximum sequence number (or a maximum index) of a spatial stream using the MCS. A spatial stream corresponding to an MCS may be a spatial stream between a spatial stream boundary corresponding to the MCS (including a spatial stream corresponding to a sequence number indicated by the spatial stream boundary corresponding to the MCS) and a spatial stream boundary corresponding to a previous MCS of the MCS (excluding a spatial stream corresponding to a sequence number indicated by the spatial stream boundary corresponding to the previous MCS). For example, sequence numbers of the plurality of spatial streams corresponding to the first MCS group are successively ①, ②, ③, ...; a spatial stream whose sequence number is less than or equal to a sequence number indicated by a spatial stream boundary corresponding to the first MCS uses the first MCS; a spatial stream whose sequence number is greater than that for the spatial stream boundary corresponding to the first MCS and less than or equal to a sequence number indicated by a spatial stream boundary corresponding to the second MCS uses the second MCS; a spatial stream whose sequence number is greater than that for the spatial stream boundary corresponding to the second MCS and is less than or equal to a sequence number indicated by a spatial stream boundary corresponding to the third MCS uses the third MCS; and the rest may be deduced by analogy. A number of spatial streams corresponding to the first MCS group is not limited in embodiments of this application.

For example, if the first MCS group includes the first MCS, the second MCS, the third MCS, and the fourth MCS, the second field indicates a spatial stream boundary corresponding to the first MCS, a spatial stream boundary corresponding to the second MCS, a spatial stream boundary corresponding to the third MCS, and a spatial stream boundary corresponding to the fourth MCS. For example, a value of the second field represents an index 175 in Table 5. Four spatial stream boundaries indicated by the index 175 are represented by 2 4 5 8, where 2 represents the spatial stream boundary corresponding to the first MCS (that is, represents that a maximum sequence number of a spatial stream using the first MCS is ②), 4 represents the spatial stream boundary corresponding to the second MCS, 5 represents the spatial stream boundary corresponding to the third MCS, and 8 represents the spatial stream boundary corresponding to the fourth MCS. The four spatial stream boundaries indicate that the first MCS corresponds to the spatial stream ① and the spatial stream ②, the second MCS corresponds to the spatial stream ③ and the spatial stream ④, the third MCS corresponds to the spatial stream ⑤, and the fourth MCS corresponds to the spatial stream ⑥, the spatial stream ⑦, and the spatial stream ⑧. For ease of understanding, the four spatial stream boundaries indicated by the second field may be understood as locations of four panels for segmenting the plurality of spatial streams corresponding to the first MCS group. The four panels correspond to four MCSs: A spatial stream whose sequence number is less than or equal to that for a first panel uses the first MCS. A spatial stream whose sequence number is greater than that for the first panel and less than or equal to that for a second panel uses the second MCS. A spatial stream whose sequence number is greater than that for the second panel and less than or equal to that for a third panel uses the third MCS. A spatial stream whose sequence number is greater than that for the third panel and less than or equal to that for a fourth panel uses the fourth MCS. The sequence numbers of the plurality of spatial streams corresponding to the first MCS group are successively ①, ②, ③, .... A number of spatial streams corresponding to the first MCS group is not limited.

In a possible implementation, the second field further indicates the total number of spatial streams corresponding to the first MCS group. For example, the first MCS group includes g MCSs, the value of the second field represents one index (for example, an index in Table 5), g spatial stream boundaries indicated by the index are represented by G1 G2 ... Gg (for example, 2 4 5 8), and Gg is the total number of spatial streams corresponding to the first MCS group, where g is an integer greater than 0. G1 represents a spatial stream boundary corresponding to a first MCS, G2 represents a spatial stream boundary corresponding to a second MCS, ..., and Gg represents a spatial stream boundary corresponding to a g^{th} MCS. G1, G2, ..., and Gg are all integers greater than 0, and G is an integer greater than 1. For example, the first MCS group includes four MCSs, the value of the second field represents one index, a spatial stream boundary corresponding to a fourth MCS indicated by the index is represented by H, the second field further indicates that the total number of spatial streams corresponding to the first MCS group is H, and H is an integer greater than 0.

FIG. 9 is an example of a correspondence between an MCS and a spatial stream according to an embodiment of this application. For example, the value of the second field represents the index 175 in Table 5, the four spatial stream boundaries indicated by the index 175 are represented by 2 4 5 8, and locations of four panels in FIG. 9 represent four spatial stream boundaries indicated by the second field. The four spatial stream boundaries indicated by the second field indicate the spatial stream corresponding to the one or more MCSs in the first MCS group. As shown in FIG. 9, a first panel is equal to 2, a second panel is equal to 4, a third panel is equal to 5, and a fourth panel is equal to 8. A first MCS corresponds to a spatial stream ① and a spatial stream ② (in other words, the spatial stream ① and the spatial stream ② use the first MCS), a second MCS corresponds to a spatial stream ③ and a spatial stream , a third MCS corresponds to a spatial stream ⑤, and a fourth MCS corresponds to a spatial stream ⑥, a spatial stream ⑦, and a spatial stream ⑧. For example, a spatial stream boundary that corresponds to the fourth MCS and that is indicated by the second field is represented by H, the second field further indicates that the total number of spatial streams corresponding to the first MCS group is H, and H is an integer greater than 0. Refer to FIG. 9. The total number of spatial streams corresponding to the first MCS group may be obtained based on a location of the fourth panel (a last panel), in other words, the total number of spatial streams is 8.

In the panels for segmenting the plurality of spatial streams corresponding to the first MCS group, locations of more than one panel may overlap. If two panels overlap, it indicates that no spatial stream uses an MCS corresponding to the middle of the two panels. FIG. 10 is another example of a correspondence between an MCS and a spatial stream according to an embodiment of this application. For example, the value of the second field represents an index 169 (for example, the value of the second field is 169) in Table 5, four spatial stream boundaries indicated by the index 169 in Table 5 are represented by 2 4 4 6, and locations of four panels in FIG. 10 represent four spatial stream boundaries indicated by the second field. As shown in FIG. 10, a first panel is equal to 2, a second panel is equal to 4, a third panel is equal to 4, and a fourth panel is equal to 6. A first MCS corresponds to a spatial stream ① and a spatial stream ② (in other words, the spatial stream ① and the spatial stream ② use the first MCS), a second MCS corresponds to a spatial stream ③ and a spatial stream ④, a fourth MCS corresponds to a spatial stream ⑤ and a spatial stream ⑥, and a total number of spatial streams is 6. Refer to FIG. 10. The total number of spatial streams corresponding to the first MCS group may be obtained based on a location of the fourth panel, in other words, the total number of spatial streams is 6.

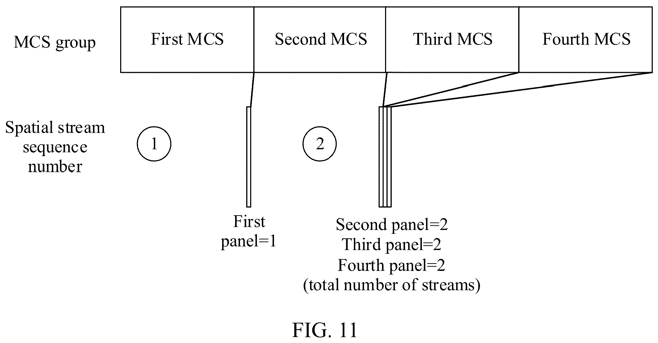

FIG. 11 is another example of a correspondence between an MCS and a spatial stream according to an embodiment of this application. For example, the value of the second field represents an index 35 in Table 5, four spatial stream boundaries indicated by the index 35 in Table 5 are represented by 1 2 2 2, and locations of four panels in FIG. 11 represent four spatial stream boundaries indicated by the second field. The four spatial stream boundaries indicated by the second field indicate the spatial stream corresponding to the one or more MCSs in the first MCS group. As shown in FIG. 11, a first panel is equal to 1, a second panel is equal to 2, a third panel is equal to 2, and a fourth panel is equal to 2. A first MCS corresponds to a spatial stream ① (in other words, the spatial stream ① uses the first MCS), a second MCS corresponds to a spatial stream ②, and a total number of spatial streams is 2. Refer to FIG. 10. The total number of spatial streams corresponding to the first MCS group may be obtained based on a location of the fourth panel, in other words, the total number of spatial streams is 2.

In a possible implementation, the second field indicates the number of spatial streams corresponding to the one or more MCSs in the first MCS group. An example in which the second field indicates the number of spatial streams corresponding to the one or more MCSs in the first MCS group is as follows: The second field indicates the spatial stream boundary corresponding to the any MCS in the first MCS group. In other words, the second field indicates a boundary of a spatial stream of the any MCS in the first MCS group. A spatial stream boundary corresponding to an MCS may be an integer. The spatial stream boundary corresponding to the first MCS in the first MCS group indicates the number of spatial streams corresponding to the first MCS. A difference between a spatial stream boundary corresponding to an m^{th} MCS and a spatial stream boundary corresponding to an (m-1)^{th} MCS in the first MCS group is a number of spatial streams corresponding to the m^{th} MCS, where m is an integer greater than or equal to 2. For example, the value of the second field represents the index 175 in Table 5. The four spatial stream boundaries indicated by the index 175 are represented by 2 4 5 8, where 2 represents the spatial stream boundary corresponding to the first MCS, 4 represents the spatial stream boundary corresponding to the second MCS, 5 represents the spatial stream boundary corresponding to the third MCS, and 8 represents the spatial stream boundary corresponding to the fourth MCS. The four spatial stream boundaries indicate that the first MCS corresponds to two spatial streams (in other words, the two spatial streams use the first MCS), the second MCS corresponds to two spatial streams, the third MCS corresponds to one spatial stream, and the fourth MCS corresponds to three spatial streams. For ease of understanding, the four spatial stream boundaries indicated by the second field may be understood as the locations of the four panels for segmenting the plurality of spatial streams corresponding to the first MCS group. The four panels correspond to the four MCSs: the first MCS for a quantity of streams less than or equal to that for the first panel, the second MCS for a quantity of streams greater than that for the first panel and less than or equal to that for the second panel, the third MCS for a quantity of streams greater than that for the second panel and less than or equal to that for the third panel, and the fourth MCS for a quantity of streams greater than the that for the third panel and less than or equal to that for the fourth panel.

FIG. 9 is reused. The value of the second field represents the index 175 in Table 5. The four spatial stream boundaries (that is, the four spatial stream boundaries indicated by the second field) indicated by the index 175 in Table 5 are represented by 2 4 5 8. The locations of the four panels in FIG. 9 represent the four spatial stream boundaries indicated by the second field. As shown in FIG. 9, the first panel is equal to 2, the second panel is equal to 4, the third panel is equal to 5, and the fourth panel is equal to 8, the first MCS corresponds to two spatial streams, the second MCS corresponds to two spatial streams, the third MCS corresponds to one spatial stream, and the fourth MCS corresponds to three spatial streams. FIG. 10 is reused. The value of the second field represents the index 169 in Table 5. The four spatial stream boundaries (that is, the four spatial stream boundaries indicated by the second field) indicated by the index 169 in Table 5 are represented by 2 4 4 6. The first panel is equal to 2, the second panel is equal to 4, the third panel is equal to 4, and the fourth panel is equal to 6. The first MCS corresponds to two spatial streams, the second MCS corresponds to two spatial streams, and the third MCS corresponds to zero spatial streams, the fourth MCS corresponds to two spatial streams, and the total number of spatial streams is 6.

An example in which the second field indicates the number of spatial streams corresponding to the one or more MCSs in the first MCS group is as follows: The second field indicates a number of spatial streams corresponding to each MCS in the first MCS group. In this example, the second field further indicates the total number of spatial streams corresponding to the first MCS group, and the total number of spatial streams corresponding to the first MCS group is a sum of the numbers of spatial streams corresponding to all the MCSs in the first MCS group. For example, the first MCS group includes the g MCSs, the value of the second field represents one index, and the index indicates G1 G2 ... Gg, where G1 represents a number of spatial streams corresponding to the first MCS, G2 represents a number of spatial streams corresponding to the second MCS, ..., and Gg represents a number of spatial streams corresponding to the g^{th} MCS. G1, G2, ..., and Gg are all integers greater than 0, and G is an integer greater than 1. g is an integer greater than 0. The receiver may determine, based on the number of spatial streams corresponding to each MCS in the first MCS group, the MCS corresponding to each spatial stream of the receiver. For example, G1=2 indicates that spatial streams corresponding to the first MCS are a 1^{st} spatial stream and a 2^{nd} spatial stream. G2=2 indicates two spatial streams (that is, a 3^{rd} spatial stream and a 4^{th} spatial stream) that correspond to the second MCS and that increase by using the last spatial stream corresponding to G1 (the 2^{nd} spatial stream) as a start point. G3=0 indicates 0 spatial streams that correspond to the third MCS and that increase by using the last spatial stream corresponding to G2 (the 4^{th} spatial stream) as a start point. G4=2 indicates two spatial streams (that is, a 5^{th} spatial stream and a 6^{th} spatial stream) that correspond to the fourth MCS and that increase by using the last spatial stream corresponding to G3 (the 4^{th} spatial stream) as a start point. In conclusion, an i^{th} MCS in the first MCS group sequentially corresponds to spatial streams represented by Gi, and the spatial streams represented by Gi corresponding to the i^{th} MCS are Gi spatial streams that increase by using the last spatial stream corresponding to (Gi-1)^{th} as a start point, where i is an integer greater than or equal to 1, and Gi is greater than or equal to 2. Spatial streams represented by G1 corresponding to the first MCS are the 1^{st} spatial stream to a G1^{th} spatial stream.

In the foregoing embodiment, one MCS group includes four MCSs, and the four spatial stream boundaries (which may be considered as the four panels) indicated by the second field indicate the spatial stream corresponding to the one or more MCSs in the first MCS group. It should be noted that in embodiments of this application, one MCS group may be extended to include M MCSs, and the second field indicates M spatial stream boundaries, to indicate a case in which the maximum number of spatial streams is N. Values of M and N are not limited in embodiments of this application. M is an integer greater than 0, and N is an integer greater than 0.

In a possible implementation, the value of the second field is an index, and the index is any index in a spatial stream grouping index table. The spatial stream grouping index table may be referred to as a UEQM spatial stream grouping index table, and a name of the spatial stream grouping index table is not limited. Any index (defined) in the spatial stream grouping index table indicates the M spatial stream boundaries. The spatial stream grouping index table includes correspondences between a plurality of indexes and a spatial stream boundary. Different spatial stream grouping index tables correspond to different maximum numbers of spatial streams. The following illustrates several spatial stream grouping index tables. Table 5 is an example of the spatial stream grouping index table provided in embodiments of this application. In Table 5, a maximum number of supported spatial streams under the UEQM is 8, in other words, one index in Table 5 corresponds to a maximum of eight spatial streams. Spatial stream grouping index tables (including Table 5) shown in this specification are merely a part of examples. For example, a spatial stream grouping index table may include only a part of the entries in Table 5. In addition, a correspondence between an index in the spatial stream grouping index table and a spatial stream boundary is not limited. Refer to Table 5. 1 1 1 2 corresponding to an index 0 represents four spatial stream boundaries. In some possible spatial stream grouping index tables, the index 1 corresponds to four spatial stream boundaries represented by 1 1 1 3. It is uniformly noted herein that tables obtained by adding, deleting, transforming, or modifying correspondences between indexes and spatial stream boundaries based on spatial stream grouping index tables (for example, Table 5 to Table 10) shown in this specification belong to spatial stream grouping index tables protected in this application. An example of a variation of the spatial stream grouping index table (for example, Table 5 to Table 10) is as follows: A first column and a second column in the spatial stream grouping index table remain unchanged, a value of each row in a third column is changed to the value of each row in the third column minus a value of a corresponding row in the second column, a value of each row in a fourth column is changed to the value of each row in the fourth column minus a value of a corresponding row in the third column, and the rest may be deduced by analogy. In a transformed spatial stream grouping index table, a value in a column in which the m^{th} MCS is located is the number of spatial streams corresponding to the m^{th} MCS, where m is an integer greater than 0. For example, 2 4 5 8 indicated by the index 175 in Table 5 is transformed into 2 2 1 3, and 2 2 1 3 sequentially represents the number of spatial streams corresponding to the first MCS, the number of spatial streams corresponding to the second MCS, the number of spatial streams corresponding to the third MCS, and a number of spatial streams corresponding to the fourth MCS. For another example, 2 4 4 6 indicated by the index 169 in Table 5 is transformed into 2 2 0 2. Herein, only an example of the variation of the spatial stream grouping index table (for example, Table 5 to Table 10) is shown, and the spatial stream grouping index table may have another form of variation. Both the transformed spatial stream grouping index table and the untransformed spatial stream grouping index table may be used to determine an MCS corresponding to a spatial stream. Therefore, the transformed spatial stream grouping index table and the untransformed spatial stream grouping index table may be considered equivalent.

**Table 5**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 1 | 5 |
| 4 | 1 | 1 | 1 | 6 |
| 5 | 1 | 1 | 1 | 7 |
| 6 | 1 | 1 | 1 | 8 |
| 7 | 1 | 1 | 2 | 2 |
| 8 | 1 | 1 | 2 | 3 |
| 9 | 1 | 1 | 2 | 4 |
| 10 | 1 | 1 | 2 | 5 |
| 11 | 1 | 1 | 2 | 6 |
| 12 | 1 | 1 | 2 | 7 |
| 13 | 1 | 1 | 2 | 8 |
| 14 | 1 | 1 | 3 | 3 |
| 15 | 1 | 1 | 3 | 4 |
| 16 | 1 | 1 | 3 | 5 |
| 17 | 1 | 1 | 3 | 6 |
| 18 | 1 | 1 | 3 | 7 |
| 19 | 1 | 1 | 3 | 8 |
| 20 | 1 | 1 | 4 | 4 |
| 21 | 1 | 1 | 4 | 5 |
| 22 | 1 | 1 | 4 | 6 |
| 23 | 1 | 1 | 4 | 7 |
| 24 | 1 | 1 | 4 | 8 |
| 25 | 1 | 1 | 5 | 5 |
| 26 | 1 | 1 | 5 | 6 |
| 27 | 1 | 1 | 5 | 7 |
| 28 | 1 | 1 | 5 | 8 |
| 29 | 1 | 1 | 6 | 6 |
| 30 | 1 | 1 | 6 | 7 |
| 31 | 1 | 1 | 6 | 8 |
| 32 | 1 | 1 | 7 | 7 |
| 33 | 1 | 1 | 7 | 8 |
| 34 | 1 | 1 | 8 | 8 |
| 35 | 1 | 2 | 2 | 2 |
| 36 | 1 | 2 | 2 | 3 |
| 37 | 1 | 2 | 2 | 4 |
| 38 | 1 | 2 | 2 | 5 |
| 39 | 1 | 2 | 2 | 6 |
| 40 | 1 | 2 | 2 | 7 |
| 41 | 1 | 2 | 2 | 8 |
| 42 | 1 | 2 | 3 | 3 |
| 43 | 1 | 2 | 3 | 4 |
| 44 | 1 | 2 | 3 | 5 |
| 45 | 1 | 2 | 3 | 6 |
| 46 | 1 | 2 | 3 | 7 |
| 47 | 1 | 2 | 3 | 8 |
| 48 | 1 | 2 | 4 | 4 |
| 49 | 1 | 2 | 4 | 5 |
| 50 | 1 | 2 | 4 | 6 |
| 51 | 1 | 2 | 4 | 7 |
| 52 | 1 | 2 | 4 | 8 |
| 53 | 1 | 2 | 5 | 5 |
| 54 | 1 | 2 | 5 | 6 |
| 55 | 1 | 2 | 5 | 7 |
| 56 | 1 | 2 | 5 | 8 |
| 57 | 1 | 2 | 6 | 6 |
| 58 | 1 | 2 | 6 | 7 |
| 59 | 1 | 2 | 6 | 8 |
| 60 | 1 | 2 | 7 | 7 |
| 61 | 1 | 2 | 7 | 8 |
| 62 | 1 | 2 | 8 | 8 |
| 63 | 1 | 3 | 3 | 3 |
| 64 | 1 | 3 | 3 | 4 |
| 65 | 1 | 3 | 3 | 5 |
| 66 | 1 | 3 | 3 | 6 |
| 67 | 1 | 3 | 3 | 7 |
| 68 | 1 | 3 | 3 | 8 |
| 69 | 1 | 3 | 4 | 4 |
| 70 | 1 | 3 | 4 | 5 |
| 71 | 1 | 3 | 4 | 6 |
| 72 | 1 | 3 | 4 | 7 |
| 73 | 1 | 3 | 4 | 8 |
| 74 | 1 | 3 | 5 | 5 |
| 75 | 1 | 3 | 5 | 6 |
| 76 | 1 | 3 | 5 | 7 |
| 77 | 1 | 3 | 5 | 8 |
| 78 | 1 | 3 | 6 | 6 |
| 79 | 1 | 3 | 6 | 7 |
| 80 | 1 | 3 | 6 | 8 |
| 81 | 1 | 3 | 7 | 7 |
| 82 | 1 | 3 | 7 | 8 |
| 83 | 1 | 3 | 8 | 8 |
| 84 | 1 | 4 | 4 | 4 |
| 85 | 1 | 4 | 4 | 5 |
| 86 | 1 | 4 | 4 | 6 |
| 87 | 1 | 4 | 4 | 7 |
| 88 | 1 | 4 | 4 | 8 |
| 89 | 1 | 4 | 5 | 5 |
| 90 | 1 | 4 | 5 | 6 |
| 91 | 1 | 4 | 5 | 7 |
| 92 | 1 | 4 | 5 | 8 |
| 93 | 1 | 4 | 6 | 6 |
| 94 | 1 | 4 | 6 | 7 |
| 95 | 1 | 4 | 6 | 8 |
| 96 | 1 | 4 | 7 | 7 |
| 97 | 1 | 4 | 7 | 8 |
| 98 | 1 | 4 | 8 | 8 |
| 99 | 1 | 5 | 5 | 5 |
| 100 | 1 | 5 | 5 | 6 |
| 101 | 1 | 5 | 5 | 7 |
| 102 | 1 | 5 | 5 | 8 |
| 103 | 1 | 5 | 6 | 6 |
| 104 | 1 | 5 | 6 | 7 |
| 105 | 1 | 5 | 6 | 8 |
| 106 | 1 | 5 | 7 | 7 |
| 107 | 1 | 5 | 7 | 8 |
| 108 | 1 | 5 | 8 | 8 |
| 109 | 1 | 6 | 6 | 6 |
| 110 | 1 | 6 | 6 | 7 |
| 111 | 1 | 6 | 6 | 8 |
| 112 | 1 | 6 | 7 | 7 |
| 113 | 1 | 6 | 7 | 8 |
| 114 | 1 | 6 | 8 | 8 |
| 115 | 1 | 7 | 7 | 7 |
| 116 | 1 | 7 | 7 | 8 |
| 117 | 1 | 7 | 8 | 8 |
| 118 | 1 | 8 | 8 | 8 |
| 119 | 2 | 2 | 2 | 3 |
| 120 | 2 | 2 | 2 | 4 |
| 121 | 2 | 2 | 2 | 5 |
| 122 | 2 | 2 | 2 | 6 |
| 123 | 2 | 2 | 2 | 7 |
| 124 | 2 | 2 | 2 | 8 |
| 125 | 2 | 2 | 3 | 3 |
| 126 | 2 | 2 | 3 | 4 |
| 127 | 2 | 2 | 3 | 5 |
| 128 | 2 | 2 | 3 | 6 |
| 129 | 2 | 2 | 3 | 7 |
| 130 | 2 | 2 | 3 | 8 |
| 131 | 2 | 2 | 4 | 4 |
| 132 | 2 | 2 | 4 | 5 |
| 133 | 2 | 2 | 4 | 6 |
| 134 | 2 | 2 | 4 | 7 |
| 135 | 2 | 2 | 4 | 8 |
| 136 | 2 | 2 | 5 | 5 |
| 137 | 2 | 2 | 5 | 6 |
| 138 | 2 | 2 | 5 | 7 |
| 139 | 2 | 2 | 5 | 8 |
| 140 | 2 | 2 | 6 | 6 |
| 141 | 2 | 2 | 6 | 7 |
| 142 | 2 | 2 | 6 | 8 |
| 143 | 2 | 2 | 7 | 7 |
| 144 | 2 | 2 | 7 | 8 |
| 145 | 2 | 2 | 8 | 8 |
| 146 | 2 | 3 | 3 | 3 |
| 147 | 2 | 3 | 3 | 4 |
| 148 | 2 | 3 | 3 | 5 |
| 149 | 2 | 3 | 3 | 6 |
| 150 | 2 | 3 | 3 | 7 |
| 151 | 2 | 3 | 3 | 8 |
| 152 | 2 | 3 | 4 | 4 |
| 153 | 2 | 3 | 4 | 5 |
| 154 | 2 | 3 | 4 | 6 |
| 155 | 2 | 3 | 4 | 7 |
| 156 | 2 | 3 | 4 | 8 |
| 157 | 2 | 3 | 5 | 5 |
| 158 | 2 | 3 | 5 | 6 |
| 159 | 2 | 3 | 5 | 7 |
| 160 | 2 | 3 | 5 | 8 |
| 161 | 2 | 3 | 6 | 6 |
| 162 | 2 | 3 | 6 | 7 |
| 163 | 2 | 3 | 6 | 8 |
| 164 | 2 | 3 | 7 | 7 |
| 165 | 2 | 3 | 7 | 8 |
| 166 | 2 | 3 | 8 | 8 |
| 167 | 2 | 4 | 4 | 4 |
| 168 | 2 | 4 | 4 | 5 |
| 169 | 2 | 4 | 4 | 6 |
| 170 | 2 | 4 | 4 | 7 |
| 171 | 2 | 4 | 4 | 8 |
| 172 | 2 | 4 | 5 | 5 |
| 173 | 2 | 4 | 5 | 6 |
| 174 | 2 | 4 | 5 | 7 |
| 175 | 2 | 4 | 5 | 8 |
| 176 | 2 | 4 | 6 | 6 |
| 177 | 2 | 4 | 6 | 7 |
| 178 | 2 | 4 | 6 | 8 |
| 179 | 2 | 4 | 7 | 7 |
| 180 | 2 | 4 | 7 | 8 |
| 181 | 2 | 4 | 8 | 8 |
| 182 | 2 | 5 | 5 | 5 |
| 183 | 2 | 5 | 5 | 6 |
| 184 | 2 | 5 | 5 | 7 |
| 185 | 2 | 5 | 5 | 8 |
| 186 | 2 | 5 | 6 | 6 |
| 187 | 2 | 5 | 6 | 7 |
| 188 | 2 | 5 | 6 | 8 |
| 189 | 2 | 5 | 7 | 7 |
| 190 | 2 | 5 | 7 | 8 |
| 191 | 2 | 5 | 8 | 8 |
| 192 | 2 | 6 | 6 | 6 |
| 193 | 2 | 6 | 6 | 7 |
| 194 | 2 | 6 | 6 | 8 |
| 195 | 2 | 6 | 7 | 7 |
| 196 | 2 | 6 | 7 | 8 |
| 197 | 2 | 6 | 8 | 8 |
| 198 | 2 | 7 | 7 | 7 |
| 199 | 2 | 7 | 7 | 8 |
| 200 | 2 | 7 | 8 | 8 |
| 201 | 2 | 8 | 8 | 8 |
| 202 | 3 | 3 | 3 | 4 |
| 203 | 3 | 3 | 3 | 5 |
| 204 | 3 | 3 | 3 | 6 |
| 205 | 3 | 3 | 3 | 7 |
| 206 | 3 | 3 | 3 | 8 |
| 207 | 3 | 3 | 4 | 4 |
| 208 | 3 | 3 | 4 | 5 |
| 209 | 3 | 3 | 4 | 6 |
| 210 | 3 | 3 | 4 | 7 |
| 211 | 3 | 3 | 4 | 8 |
| 212 | 3 | 3 | 5 | 5 |
| 213 | 3 | 3 | 5 | 6 |
| 214 | 3 | 3 | 5 | 7 |
| 215 | 3 | 3 | 5 | 8 |
| 216 | 3 | 3 | 6 | 6 |
| 217 | 3 | 3 | 6 | 7 |
| 218 | 3 | 3 | 6 | 8 |
| 219 | 3 | 3 | 7 | 7 |
| 220 | 3 | 3 | 7 | 8 |
| 221 | 3 | 3 | 8 | 8 |
| 222 | 3 | 4 | 4 | 4 |
| 223 | 3 | 4 | 4 | 5 |
| 224 | 3 | 4 | 4 | 6 |
| 225 | 3 | 4 | 4 | 7 |
| 226 | 3 | 4 | 4 | 8 |
| 227 | 3 | 4 | 5 | 5 |
| 228 | 3 | 4 | 5 | 6 |
| 229 | 3 | 4 | 5 | 7 |
| 230 | 3 | 4 | 5 | 8 |
| 231 | 3 | 4 | 6 | 6 |
| 232 | 3 | 4 | 6 | 7 |
| 233 | 3 | 4 | 6 | 8 |
| 234 | 3 | 4 | 7 | 7 |
| 235 | 3 | 4 | 7 | 8 |
| 236 | 3 | 4 | 8 | 8 |
| 237 | 3 | 5 | 5 | 5 |
| 238 | 3 | 5 | 5 | 6 |
| 239 | 3 | 5 | 5 | 7 |
| 240 | 3 | 5 | 5 | 8 |
| 241 | 3 | 5 | 6 | 6 |
| 242 | 3 | 5 | 6 | 7 |
| 243 | 3 | 5 | 6 | 8 |
| 244 | 3 | 5 | 7 | 7 |
| 245 | 3 | 5 | 7 | 8 |
| 246 | 3 | 5 | 8 | 8 |
| 247 | 3 | 6 | 6 | 6 |
| 248 | 3 | 6 | 6 | 7 |
| 249 | 3 | 6 | 6 | 8 |
| 250 | 3 | 6 | 7 | 7 |
| 251 | 3 | 6 | 7 | 8 |
| 252 | 3 | 6 | 8 | 8 |
| 253 | 3 | 7 | 7 | 7 |
| 254 | 3 | 7 | 7 | 8 |
| 255 | 3 | 7 | 8 | 8 |
| 256 | 3 | 8 | 8 | 8 |
| 257 | 4 | 4 | 4 | 5 |
| 258 | 4 | 4 | 4 | 6 |
| 259 | 4 | 4 | 4 | 7 |
| 260 | 4 | 4 | 4 | 8 |
| 261 | 4 | 4 | 5 | 5 |
| 262 | 4 | 4 | 5 | 6 |
| 263 | 4 | 4 | 5 | 7 |
| 264 | 4 | 4 | 5 | 8 |
| 265 | 4 | 4 | 6 | 6 |
| 266 | 4 | 4 | 6 | 7 |
| 267 | 4 | 4 | 6 | 8 |
| 268 | 4 | 4 | 7 | 7 |
| 269 | 4 | 4 | 7 | 8 |
| 270 | 4 | 4 | 8 | 8 |
| 271 | 4 | 5 | 5 | 5 |
| 272 | 4 | 5 | 5 | 6 |
| 273 | 4 | 5 | 5 | 7 |
| 274 | 4 | 5 | 5 | 8 |
| 275 | 4 | 5 | 6 | 6 |
| 276 | 4 | 5 | 6 | 7 |
| 277 | 4 | 5 | 6 | 8 |
| 278 | 4 | 5 | 7 | 7 |
| 279 | 4 | 5 | 7 | 8 |
| 280 | 4 | 5 | 8 | 8 |
| 281 | 4 | 6 | 6 | 6 |
| 282 | 4 | 6 | 6 | 7 |
| 283 | 4 | 6 | 6 | 8 |
| 284 | 4 | 6 | 7 | 7 |
| 285 | 4 | 6 | 7 | 8 |
| 286 | 4 | 6 | 8 | 8 |
| 287 | 4 | 7 | 7 | 7 |
| 288 | 4 | 7 | 7 | 8 |
| 289 | 4 | 7 | 8 | 8 |
| 290 | 4 | 8 | 8 | 8 |
| 291 | 5 | 5 | 5 | 6 |
| 292 | 5 | 5 | 5 | 7 |
| 293 | 5 | 5 | 5 | 8 |
| 294 | 5 | 5 | 6 | 6 |
| 295 | 5 | 5 | 6 | 7 |
| 296 | 5 | 5 | 6 | 8 |
| 297 | 5 | 5 | 7 | 7 |
| 298 | 5 | 5 | 7 | 8 |
| 299 | 5 | 5 | 8 | 8 |
| 300 | 5 | 6 | 6 | 6 |
| 301 | 5 | 6 | 6 | 7 |
| 302 | 5 | 6 | 6 | 8 |
| 303 | 5 | 6 | 7 | 7 |
| 304 | 5 | 6 | 7 | 8 |
| 305 | 5 | 6 | 8 | 8 |
| 306 | 5 | 7 | 7 | 7 |
| 307 | 5 | 7 | 7 | 8 |
| 308 | 5 | 7 | 8 | 8 |
| 309 | 5 | 8 | 8 | 8 |
| 310 | 6 | 6 | 6 | 7 |
| 311 | 6 | 6 | 6 | 8 |
| 312 | 6 | 6 | 7 | 7 |
| 313 | 6 | 6 | 7 | 8 |
| 314 | 6 | 6 | 8 | 8 |
| 315 | 6 | 7 | 7 | 7 |
| 316 | 6 | 7 | 7 | 8 |
| 317 | 6 | 7 | 8 | 8 |
| 318 | 6 | 8 | 8 | 8 |
| 319 | 7 | 7 | 7 | 8 |
| 320 | 7 | 7 | 8 | 8 |
| 321 | 7 | 8 | 8 | 8 |
| 322 to END (for example, END=511) | Reserved | | | |

The index 175 in Table 5 is used as an example. The four spatial stream boundaries indicated by the index 175 are respectively represented by 2 4 5 8. To be specific, the spatial stream boundary corresponding to the first MCS is 2, the spatial stream boundary corresponding to the second MCS is 4, the spatial stream boundary corresponding to the third MCS is 5, and the spatial stream boundary corresponding to the fourth MCS is 8. The spatial streams that correspond to the one or more MCSs in the first MCS group and that are indicated by the four spatial stream boundaries indicated by the index 175 are shown in FIG. 9. Details are not described herein again. The index 169 in Table 5 is used as an example. The four spatial stream boundaries indicated by the index 169 are respectively represented by 2 4 4 6. To be specific, the spatial stream boundary corresponding to the first MCS is 2, the spatial stream boundary corresponding to the second MCS is 4, the spatial stream boundary corresponding to the third MCS is 4, and the spatial stream boundary corresponding to the fourth MCS is 6. The spatial streams that correspond to the one or more MCSs in the first MCS group and that are indicated by the four spatial stream boundaries indicated by the index 169 are shown in FIG. 10. Details are not described herein again. The index 35 in Table 5 is used as an example. The four spatial stream boundaries indicated by the index 35 are respectively represented by 1 2 2 2. To be specific, the spatial stream boundary corresponding to the first MCS is 1, the spatial stream boundary corresponding to the second MCS is 2, the spatial stream boundary corresponding to the third MCS is 2, and the spatial stream boundary corresponding to the fourth MCS is 2. The spatial streams that correspond to the one or more MCSs in the first MCS group and that are indicated by the four spatial stream boundaries indicated by the index 35 are shown in FIG. 11. Details are not described herein again.

Table 6 is an example of another spatial stream grouping index table provided in embodiments of this application. In Table 6, a maximum number of supported spatial streams under the UEQM is 4, in other words, one index in Table 6 corresponds to a maximum of four spatial streams.

**Table 6**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 2 | 2 |
| 4 | 1 | 1 | 2 | 3 |
| 5 | 1 | 1 | 2 | 4 |
| 6 | 1 | 1 | 3 | 3 |
| 7 | 1 | 1 | 3 | 4 |
| 8 | 1 | 1 | 4 | 4 |
| 9 | 1 | 2 | 2 | 2 |
| 10 | 1 | 2 | 2 | 3 |
| 11 | 1 | 2 | 2 | 4 |
| 12 | 1 | 2 | 3 | 3 |
| 13 | 1 | 2 | 3 | 4 |
| 14 | 1 | 2 | 4 | 4 |
| 15 | 1 | 3 | 3 | 3 |
| 16 | 1 | 3 | 3 | 4 |
| 17 | 1 | 3 | 4 | 4 |
| 18 | 1 | 4 | 4 | 4 |
| 19 | 2 | 2 | 2 | 3 |
| 20 | 2 | 2 | 2 | 4 |
| 21 | 2 | 2 | 3 | 3 |
| 22 | 2 | 2 | 3 | 4 |
| 23 | 2 | 2 | 4 | 4 |
| 24 | 2 | 3 | 3 | 3 |
| 25 | 2 | 3 | 3 | 4 |
| 26 | 2 | 3 | 4 | 4 |
| 27 | 2 | 4 | 4 | 4 |
| 28 | 3 | 3 | 3 | 4 |
| 29 | 3 | 3 | 4 | 4 |
| 30 | 3 | 4 | 4 | 4 |
| 31 to END (for example, END=31, only one row) | Reserved | | | |

The index 9 in Table 6 is used as an example. Four spatial stream boundaries indicated by the index 9 are respectively represented by 1 2 2 2. To be specific, the spatial stream boundary corresponding to the first MCS is 1, the spatial stream boundary corresponding to the second MCS is 2, the spatial stream boundary corresponding to the third MCS is 2, and the spatial stream boundary corresponding to the fourth MCS is 2. The spatial streams that correspond to the one or more MCSs in the first MCS group and that are indicated by the four spatial stream boundaries indicated by the index 9 are shown in FIG. 11. Details are not described herein again.

When it is assumed that the maximum number of supported spatial streams under the UEQM is 4, the second field may occupy 5 bits. Compared with an MCS indication (4 bits) under the EQM modulation, only additional 1 bit needs to be provided, to ensure an approximately same length. For example, by using a reserved bit or a beamformed bit, user fields under the EQM and the UEQM can be easily equal in length.

To further reduce a number of entries in the spatial stream grouping index table, a number of spatial streams that correspond to a same MCS and that are indicated by one index in the spatial stream grouping index table may be limited to being less than or equal to a first threshold. In a possible implementation, the number of spatial streams that correspond to the same MCS and that are indicated by the second field is less than or equal to the first threshold, and the first threshold is a positive integer less than 8. For example, the first threshold is any one of 4, 5, 6, and 7. Because if a number of streams (that is, a number of spatial streams) corresponding to one MCS exceeds the first threshold, the EQM may be used, or two MCSs may be used for replacement. Table 7 is an example of another spatial stream grouping index table provided in embodiments of this application. In Table 7, a maximum number of supported spatial streams under the UEQM is 8. A number of spatial streams that correspond to a same MCS and that are indicated by each index in Table 7 is less than or equal to 4. Table 7 may be understood as being obtained by optimizing Table 5 in an optimization manner 1. Optimizing Table 5 in the optimization manner 1 means removing (deleting) one or more indexes in Table 5, where a number of spatial streams that correspond to a same MCS and that are indicated by the one or more indexes is greater than the first threshold.

**Table 7**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 1 | 5 |
| 4 | 1 | 1 | 2 | 2 |
| 5 | 1 | 1 | 2 | 3 |
| 6 | 1 | 1 | 2 | 4 |
| 7 | 1 | 1 | 2 | 5 |
| 8 | 1 | 1 | 2 | 6 |
| 9 | 1 | 1 | 3 | 3 |
| 10 | 1 | 1 | 3 | 4 |
| 11 | 1 | 1 | 3 | 5 |
| 12 | 1 | 1 | 3 | 6 |
| 13 | 1 | 1 | 3 | 7 |
| 14 | 1 | 1 | 4 | 4 |
| 15 | 1 | 1 | 4 | 5 |
| 16 | 1 | 1 | 4 | 6 |
| 17 | 1 | 1 | 4 | 7 |
| 18 | 1 | 1 | 4 | 8 |
| 19 | 1 | 1 | 5 | 5 |
| 20 | 1 | 1 | 5 | 6 |
| 21 | 1 | 1 | 5 | 7 |
| 22 | 1 | 1 | 5 | 8 |
| 23 | 1 | 2 | 2 | 2 |
| 24 | 1 | 2 | 2 | 3 |
| 25 | 1 | 2 | 2 | 4 |
| 26 | 1 | 2 | 2 | 5 |
| 27 | 1 | 2 | 2 | 6 |
| 28 | 1 | 2 | 3 | 3 |
| 29 | 1 | 2 | 3 | 4 |
| 30 | 1 | 2 | 3 | 5 |
| 31 | 1 | 2 | 3 | 6 |
| 32 | 1 | 2 | 3 | 7 |
| 33 | 1 | 2 | 4 | 4 |
| 34 | 1 | 2 | 4 | 5 |
| 35 | 1 | 2 | 4 | 6 |
| 36 | 1 | 2 | 4 | 7 |
| 37 | 1 | 2 | 4 | 8 |
| 38 | 1 | 2 | 5 | 5 |
| 39 | 1 | 2 | 5 | 6 |
| 40 | 1 | 2 | 5 | 7 |
| 41 | 1 | 2 | 5 | 8 |
| 42 | 1 | 2 | 6 | 6 |
| 43 | 1 | 2 | 6 | 7 |
| 44 | 1 | 2 | 6 | 8 |
| 45 | 1 | 3 | 3 | 3 |
| 46 | 1 | 3 | 3 | 4 |
| 47 | 1 | 3 | 3 | 5 |
| 48 | 1 | 3 | 3 | 6 |
| 49 | 1 | 3 | 3 | 7 |
| 50 | 1 | 3 | 4 | 4 |
| 51 | 1 | 3 | 4 | 5 |
| 52 | 1 | 3 | 4 | 6 |
| 53 | 1 | 3 | 4 | 7 |
| 54 | 1 | 3 | 4 | 8 |
| 55 | 1 | 3 | 5 | 5 |
| 56 | 1 | 3 | 5 | 6 |
| 57 | 1 | 3 | 5 | 7 |
| 58 | 1 | 3 | 5 | 8 |
| 59 | 1 | 3 | 6 | 6 |
| 60 | 1 | 3 | 6 | 7 |
| 61 | 1 | 3 | 6 | 8 |
| 62 | 1 | 3 | 7 | 7 |
| 63 | 1 | 3 | 7 | 8 |
| 64 | 1 | 4 | 4 | 4 |
| 65 | 1 | 4 | 4 | 5 |
| 66 | 1 | 4 | 4 | 6 |
| 67 | 1 | 4 | 4 | 7 |
| 68 | 1 | 4 | 4 | 8 |
| 69 | 1 | 4 | 5 | 5 |
| 70 | 1 | 4 | 5 | 6 |
| 71 | 1 | 4 | 5 | 7 |
| 72 | 1 | 4 | 5 | 8 |
| 73 | 1 | 4 | 6 | 6 |
| 74 | 1 | 4 | 6 | 7 |
| 75 | 1 | 4 | 6 | 8 |
| 76 | 1 | 4 | 7 | 7 |
| 77 | 1 | 4 | 7 | 8 |
| 78 | 1 | 4 | 8 | 8 |
| 79 | 1 | 5 | 5 | 5 |
| 80 | 1 | 5 | 5 | 6 |
| 81 | 1 | 5 | 5 | 7 |
| 82 | 1 | 5 | 5 | 8 |
| 83 | 1 | 5 | 6 | 6 |
| 84 | 1 | 5 | 6 | 7 |
| 85 | 1 | 5 | 6 | 8 |
| 86 | 1 | 5 | 7 | 7 |
| 87 | 1 | 5 | 7 | 8 |
| 88 | 1 | 5 | 8 | 8 |
| 89 | 2 | 2 | 2 | 3 |
| 90 | 2 | 2 | 2 | 4 |
| 91 | 2 | 2 | 2 | 5 |
| 92 | 2 | 2 | 2 | 6 |
| 93 | 2 | 2 | 3 | 3 |
| 94 | 2 | 2 | 3 | 4 |
| 95 | 2 | 2 | 3 | 5 |
| 96 | 2 | 2 | 3 | 6 |
| 97 | 2 | 2 | 3 | 7 |
| 98 | 2 | 2 | 4 | 4 |
| 99 | 2 | 2 | 4 | 5 |
| 100 | 2 | 2 | 4 | 6 |
| 101 | 2 | 2 | 4 | 7 |
| 102 | 2 | 2 | 4 | 8 |
| 103 | 2 | 2 | 5 | 5 |
| 104 | 2 | 2 | 5 | 6 |
| 105 | 2 | 2 | 5 | 7 |
| 106 | 2 | 2 | 5 | 8 |
| 107 | 2 | 2 | 6 | 6 |
| 108 | 2 | 2 | 6 | 7 |
| 109 | 2 | 2 | 6 | 8 |
| 110 | 2 | 3 | 3 | 3 |
| 111 | 2 | 3 | 3 | 4 |
| 112 | 2 | 3 | 3 | 5 |
| 113 | 2 | 3 | 3 | 6 |
| 114 | 2 | 3 | 3 | 7 |
| 115 | 2 | 3 | 4 | 4 |
| 116 | 2 | 3 | 4 | 5 |
| 117 | 2 | 3 | 4 | 6 |
| 118 | 2 | 3 | 4 | 7 |
| 119 | 2 | 3 | 4 | 8 |
| 120 | 2 | 3 | 5 | 5 |
| 121 | 2 | 3 | 5 | 6 |
| 122 | 2 | 3 | 5 | 7 |
| 123 | 2 | 3 | 5 | 8 |
| 124 | 2 | 3 | 6 | 6 |
| 125 | 2 | 3 | 6 | 7 |
| 126 | 2 | 3 | 6 | 8 |
| 127 | 2 | 3 | 7 | 7 |
| 128 | 2 | 3 | 7 | 8 |
| 129 | 2 | 4 | 4 | 4 |
| 130 | 2 | 4 | 4 | 5 |
| 131 | 2 | 4 | 4 | 6 |
| 132 | 2 | 4 | 4 | 7 |
| 133 | 2 | 4 | 4 | 8 |
| 134 | 2 | 4 | 5 | 5 |
| 135 | 2 | 4 | 5 | 6 |
| 136 | 2 | 4 | 5 | 7 |
| 137 | 2 | 4 | 5 | 8 |
| 138 | 2 | 4 | 6 | 6 |
| 139 | 2 | 4 | 6 | 7 |
| 140 | 2 | 4 | 6 | 8 |
| 141 | 2 | 4 | 7 | 7 |
| 142 | 2 | 4 | 7 | 8 |
| 143 | 2 | 4 | 8 | 8 |
| 144 | 2 | 5 | 5 | 5 |
| 145 | 2 | 5 | 5 | 6 |
| 146 | 2 | 5 | 5 | 7 |
| 147 | 2 | 5 | 5 | 8 |
| 148 | 2 | 5 | 6 | 6 |
| 149 | 2 | 5 | 6 | 7 |
| 150 | 2 | 5 | 6 | 8 |
| 151 | 2 | 5 | 7 | 7 |
| 152 | 2 | 5 | 7 | 8 |
| 153 | 2 | 5 | 8 | 8 |
| 154 | 2 | 6 | 6 | 6 |
| 155 | 2 | 6 | 6 | 7 |
| 156 | 2 | 6 | 6 | 8 |
| 157 | 2 | 6 | 7 | 7 |
| 158 | 2 | 6 | 7 | 8 |
| 159 | 2 | 6 | 8 | 8 |
| 160 | 3 | 3 | 3 | 4 |
| 161 | 3 | 3 | 3 | 5 |
| 162 | 3 | 3 | 3 | 6 |
| 163 | 3 | 3 | 3 | 7 |
| 164 | 3 | 3 | 4 | 4 |
| 165 | 3 | 3 | 4 | 5 |
| 166 | 3 | 3 | 4 | 6 |
| 167 | 3 | 3 | 4 | 7 |
| 168 | 3 | 3 | 4 | 8 |
| 169 | 3 | 3 | 5 | 5 |
| 170 | 3 | 3 | 5 | 6 |
| 171 | 3 | 3 | 5 | 7 |
| 172 | 3 | 3 | 5 | 8 |
| 173 | 3 | 3 | 6 | 6 |
| 174 | 3 | 3 | 6 | 7 |
| 175 | 3 | 3 | 6 | 8 |
| 176 | 3 | 3 | 7 | 7 |
| 177 | 3 | 3 | 7 | 8 |
| 178 | 3 | 4 | 4 | 4 |
| 179 | 3 | 4 | 4 | 5 |
| 180 | 3 | 4 | 4 | 6 |
| 181 | 3 | 4 | 4 | 7 |
| 182 | 3 | 4 | 4 | 8 |
| 183 | 3 | 4 | 5 | 5 |
| 184 | 3 | 4 | 5 | 6 |
| 185 | 3 | 4 | 5 | 7 |
| 186 | 3 | 4 | 5 | 8 |
| 187 | 3 | 4 | 6 | 6 |
| 188 | 3 | 4 | 6 | 7 |
| 189 | 3 | 4 | 6 | 8 |
| 190 | 3 | 4 | 7 | 7 |
| 191 | 3 | 4 | 7 | 8 |
| 192 | 3 | 4 | 8 | 8 |
| 193 | 3 | 5 | 5 | 5 |
| 194 | 3 | 5 | 5 | 6 |
| 195 | 3 | 5 | 5 | 7 |
| 196 | 3 | 5 | 5 | 8 |
| 197 | 3 | 5 | 6 | 6 |
| 198 | 3 | 5 | 6 | 7 |
| 199 | 3 | 5 | 6 | 8 |
| 200 | 3 | 5 | 7 | 7 |
| 201 | 3 | 5 | 7 | 8 |
| 202 | 3 | 5 | 8 | 8 |
| 203 | 3 | 6 | 6 | 6 |
| 204 | 3 | 6 | 6 | 7 |
| 205 | 3 | 6 | 6 | 8 |
| 206 | 3 | 6 | 7 | 7 |
| 207 | 3 | 6 | 7 | 8 |
| 208 | 3 | 6 | 8 | 8 |
| 209 | 3 | 7 | 7 | 7 |
| 210 | 3 | 7 | 7 | 8 |
| 211 | 3 | 7 | 8 | 8 |
| 212 | 4 | 4 | 4 | 5 |
| 213 | 4 | 4 | 4 | 6 |
| 214 | 4 | 4 | 4 | 7 |
| 215 | 4 | 4 | 4 | 8 |
| 216 | 4 | 4 | 5 | 5 |
| 217 | 4 | 4 | 5 | 6 |
| 218 | 4 | 4 | 5 | 7 |
| 219 | 4 | 4 | 5 | 8 |
| 220 | 4 | 4 | 6 | 6 |
| 221 | 4 | 4 | 6 | 7 |
| 222 | 4 | 4 | 6 | 8 |
| 223 | 4 | 4 | 7 | 7 |
| 224 | 4 | 4 | 7 | 8 |
| 225 | 4 | 4 | 8 | 8 |
| 226 | 4 | 5 | 5 | 5 |
| 227 | 4 | 5 | 5 | 6 |
| 228 | 4 | 5 | 5 | 7 |
| 229 | 4 | 5 | 5 | 8 |
| 230 | 4 | 5 | 6 | 6 |
| 231 | 4 | 5 | 6 | 7 |
| 232 | 4 | 5 | 6 | 8 |
| 233 | 4 | 5 | 7 | 7 |
| 234 | 4 | 5 | 7 | 8 |
| 235 | 4 | 5 | 8 | 8 |
| 236 | 4 | 6 | 6 | 6 |
| 237 | 4 | 6 | 6 | 7 |
| 238 | 4 | 6 | 6 | 8 |
| 239 | 4 | 6 | 7 | 7 |
| 240 | 4 | 6 | 7 | 8 |
| 241 | 4 | 6 | 8 | 8 |
| 242 | 4 | 7 | 7 | 7 |
| 243 | 4 | 7 | 7 | 8 |
| 244 | 4 | 7 | 8 | 8 |
| 245 | 4 | 8 | 8 | 8 |
| 246 | 5 | 5 | 5 | 6 |
| 247 | 5 | 5 | 5 | 7 |
| 248 | 5 | 5 | 5 | 8 |
| 249 | 5 | 5 | 6 | 6 |
| 250 | 5 | 5 | 6 | 7 |
| 251 | 5 | 5 | 6 | 8 |
| 252 | 5 | 5 | 7 | 7 |
| 253 | 5 | 5 | 7 | 8 |
| 254 | 5 | 5 | 8 | 8 |
| 255 | 5 | 6 | 6 | 6 |
| 256 | 5 | 6 | 6 | 7 |
| 257 | 5 | 6 | 6 | 8 |
| 258 | 5 | 6 | 7 | 7 |
| 259 | 5 | 6 | 7 | 8 |
| 260 | 5 | 6 | 8 | 8 |
| 261 | 5 | 7 | 7 | 7 |
| 262 | 5 | 7 | 7 | 8 |
| 263 | 5 | 7 | 8 | 8 |
| 264 | 5 | 8 | 8 | 8 |
| 265 | 6 | 6 | 6 | 7 |
| 266 | 6 | 6 | 6 | 8 |
| 267 | 6 | 6 | 7 | 7 |
| 268 | 6 | 6 | 7 | 8 |
| 269 | 6 | 6 | 8 | 8 |
| 270 | 6 | 7 | 7 | 7 |
| 271 | 6 | 7 | 7 | 8 |
| 272 | 6 | 7 | 8 | 8 |
| 273 | 6 | 8 | 8 | 8 |
| 274 | 7 | 7 | 7 | 8 |
| 275 | 7 | 7 | 8 | 8 |
| 276 | 7 | 8 | 8 | 8 |
| 277 to END (for example, END=511) | Reserved | | | |

It can be learned by comparing Table 7 and Table 5 that, when the optimization manner 1 is used, compared with Table 7, a number of entries in Table 5 is reduced by 321-276=45. This reduces complexity of the transmitter and the receiver. If some entries are further deleted from

Table 7, the number of entries in the spatial stream grouping index table may be reduced to less than 256. When a number of entries in a spatial stream grouping index table used by the transmitter and the receiver (the transmitter and the receiver) are reduced to less than 256, the length of the second field may be 8 bits.

Further, entries in the spatial stream grouping index table can be reduced by limiting a maximum of one MCS corresponding to an odd number of spatial stream in the number of spatial streams that correspond to the one or more MCSs and that are indicated by the second field. For example, in the number of spatial streams that correspond to the one or more MCSs and that are indicated by the second field, a maximum of one MCS corresponds to an odd number of spatial stream. For example, in a number of spatial streams that correspond to the M MCSs and that are indicated by the second field, a number of spatial streams corresponding to a first MCS to a number of spatial streams corresponding to an (M-1)^{th} MCS are all even numbers, a number of spatial streams corresponding to an M^{th} MCS is an even number or an odd number, and M is an integer greater than 0. For example, Table 5 is optimized in an optimization manner 2. Optimizing Table 5 in the optimization manner 2 means removing (deleting) one or more indexes in Table 5. In numbers of spatial streams that correspond to one or more MCSs and that are indicated by the one or more indexes, numbers of spatial streams corresponding to at least two MCSs are odd numbers. Table 8 is an example of another spatial stream grouping index table provided in embodiments of this application. In Table 8, a maximum number of supported spatial streams under the UEQM is 8. Table 8 is obtained by optimizing Table 5 in the optimization manner 1 and the optimization manner 2. In other words, Table 8 is obtained by optimizing Table 7 in the optimization manner 2.

**Table 8**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 2 | 2 | 2 | 3 |
| 1 | 2 | 2 | 2 | 4 |
| 2 | 2 | 2 | 2 | 5 |
| 3 | 2 | 2 | 2 | 6 |
| 4 | 2 | 2 | 4 | 4 |
| 5 | 2 | 2 | 4 | 5 |
| 6 | 2 | 2 | 4 | 6 |
| 7 | 2 | 2 | 4 | 7 |
| 8 | 2 | 2 | 4 | 8 |
| 9 | 2 | 2 | 6 | 6 |
| 10 | 2 | 2 | 6 | 7 |
| 11 | 2 | 2 | 6 | 8 |
| 12 | 2 | 4 | 4 | 4 |
| 13 | 2 | 4 | 4 | 5 |
| 14 | 2 | 4 | 4 | 6 |
| 15 | 2 | 4 | 4 | 7 |
| 16 | 2 | 4 | 4 | 8 |
| 17 | 2 | 4 | 6 | 6 |
| 18 | 2 | 4 | 6 | 7 |
| 19 | 2 | 4 | 6 | 8 |
| 20 | 2 | 4 | 8 | 8 |
| 21 | 2 | 6 | 6 | 6 |
| 22 | 2 | 6 | 6 | 7 |
| 23 | 2 | 6 | 6 | 8 |
| 24 | 2 | 6 | 8 | 8 |
| 25 | 4 | 4 | 4 | 5 |
| 26 | 4 | 4 | 4 | 6 |
| 27 | 4 | 4 | 4 | 7 |
| 28 | 4 | 4 | 4 | 8 |
| 29 | 4 | 4 | 6 | 6 |
| 30 | 4 | 4 | 6 | 7 |
| 31 | 4 | 4 | 6 | 8 |
| 32 | 4 | 4 | 8 | 8 |
| 33 | 4 | 6 | 6 | 6 |
| 34 | 4 | 6 | 6 | 7 |
| 35 | 4 | 6 | 6 | 8 |
| 36 | 4 | 6 | 8 | 8 |
| 37 | 4 | 8 | 8 | 8 |
| 38 | 6 | 6 | 6 | 7 |
| 39 | 6 | 6 | 6 | 8 |
| 40 | 6 | 6 | 8 | 8 |
| 41 | 6 | 8 | 8 | 8 |
| 42 to END (for example, END=63) | Reserved | | | |

There are 12 entries in Table 8, which greatly reduces complexity of the transmitter and the receiver. When the used spatial stream grouping index table is Table 8, the length of the second field may be 6 bits.

When the spatial stream grouping index table (for example, Table 7) is optimized in the optimization manner 2, a case in which each MCS in the spatial stream grouping index table corresponds to one spatial stream is prohibited (or deleted), in other words, a case in which each spatial stream uses a different MCS. For example, the case in which each MCS corresponds to one spatial stream may be used as a special example, and is added back to Table 8, which is referred to as an optimization manner 3. Table 9 is an example of another spatial stream grouping index table provided in embodiments of this application. In Table 9, a maximum number of supported spatial streams under the UEQM is 8. Table 9 may be obtained by optimizing Table 8 in the optimization manner 3, that is, the case in which each MCS corresponds to one spatial stream is added back to Table 8.

**Table 9**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 2 | 2 | 2 | 3 |
| 1 | 2 | 2 | 2 | 4 |
| 2 | 2 | 2 | 2 | 5 |
| 3 | 2 | 2 | 2 | 6 |
| 4 | 2 | 2 | 4 | 4 |
| 5 | 2 | 2 | 4 | 5 |
| 6 | 2 | 2 | 4 | 6 |
| 7 | 2 | 2 | 4 | 7 |
| 8 | 2 | 2 | 4 | 8 |
| 9 | 2 | 2 | 6 | 6 |
| 10 | 2 | 2 | 6 | 7 |
| 11 | 2 | 2 | 6 | 8 |
| 12 | 2 | 4 | 4 | 4 |
| 13 | 2 | 4 | 4 | 5 |
| 14 | 2 | 4 | 4 | 6 |
| 15 | 2 | 4 | 4 | 7 |
| 16 | 2 | 4 | 4 | 8 |
| 17 | 2 | 4 | 6 | 6 |
| 18 | 2 | 4 | 6 | 7 |
| 19 | 2 | 4 | 6 | 8 |
| 20 | 2 | 4 | 8 | 8 |
| 21 | 2 | 6 | 6 | 6 |
| 22 | 2 | 6 | 6 | 7 |
| 23 | 2 | 6 | 6 | 8 |
| 24 | 2 | 6 | 8 | 8 |
| 25 | 4 | 4 | 4 | 5 |
| 26 | 4 | 4 | 4 | 6 |
| 27 | 4 | 4 | 4 | 7 |
| 28 | 4 | 4 | 4 | 8 |
| 29 | 4 | 4 | 6 | 6 |
| 30 | 4 | 4 | 6 | 7 |
| 31 | 4 | 4 | 6 | 8 |
| 32 | 4 | 4 | 8 | 8 |
| 33 | 4 | 6 | 6 | 6 |
| 34 | 4 | 6 | 6 | 7 |
| 35 | 4 | 6 | 6 | 8 |
| 36 | 4 | 6 | 8 | 8 |
| 37 | 4 | 8 | 8 | 8 |
| 38 | 6 | 6 | 6 | 7 |
| 39 | 6 | 6 | 6 | 8 |
| 40 | 6 | 6 | 8 | 8 |
| 41 | 6 | 8 | 8 | 8 |
| 42 | 1 | 1 | 1 | 2 |
| 43 | 1 | 1 | 2 | 2 |
| 44 | 1 | 1 | 2 | 3 |
| 45 | 1 | 2 | 2 | 2 |
| 46 | 1 | 2 | 2 | 3 |
| 47 | 1 | 2 | 3 | 3 |
| 48 | 1 | 2 | 3 | 4 |
| 49 to END (for example, END=63) | Reserved | | | |

In a possible implementation, one or more indexes in the spatial stream grouping index table indicate the EQM and a number of spatial streams under the EQM, and the one or more indexes may be understood as an indication of the number of spatial streams under the EQM. When a part of indexes in the spatial stream grouping index table indicate spatial stream boundaries (for example, the index 0 in Table 10), and a part of indexes indicate the EQM and the number of spatial streams under the EQM (for example, an index 31 in Table 10), that is, the UEQM and the EQM use a unified spatial stream allocation indication field, that is, the second field, an indication of the EQM/UEQM can be reduced.

Table 10 is an example of another spatial stream grouping index table provided in embodiments of this application. In Table 10, a maximum number of supported spatial streams under the UEQM is 4. In Table 10, EQM transmission of one spatial stream to eight spatial streams corresponding to indexes 31 to 38 may be added based on Table 6. For example, the index 31 indicates EQM with a number of spatial streams equal to 1, and the index 32 indicates EQM with a number of spatial streams equal to 2. In this application, one row in one table is one entry. A sequence of entries in Table 10 is not limited. For example, the indexes 31 to 38 may alternatively be located at the front of Table 10, to be specific, the index 0 indicates EQM with NSS=1. A number of indexes indicating the EQM and the number of spatial streams under the EQM in Table 10 is not limited. For example, the last index in Table 10 is 31. For another example, the last index in Table 10 is 34.

**Table 10**

| Index | Spatial stream boundary corresponding to the first MCS | Spatial stream boundary corresponding to the second MCS | Spatial stream boundary corresponding to the third MCS | Spatial stream boundary corresponding to the fourth MCS |
|---|---|---|---|---|
| 0 | 1 | 1 | 1 | 2 |
| 1 | 1 | 1 | 1 | 3 |
| 2 | 1 | 1 | 1 | 4 |
| 3 | 1 | 1 | 2 | 2 |
| 4 | 1 | 1 | 2 | 3 |
| 5 | 1 | 1 | 2 | 4 |
| 6 | 1 | 1 | 3 | 3 |
| 7 | 1 | 1 | 3 | 4 |
| 8 | 1 | 1 | 4 | 4 |
| 9 | 1 | 2 | 2 | 2 |
| 10 | 1 | 2 | 2 | 3 |
| 11 | 1 | 2 | 2 | 4 |
| 12 | 1 | 2 | 3 | 3 |
| 13 | 1 | 2 | 3 | 4 |
| 14 | 1 | 2 | 4 | 4 |
| 15 | 1 | 3 | 3 | 3 |
| 16 | 1 | 3 | 3 | 4 |
| 17 | 1 | 3 | 4 | 4 |
| 18 | 1 | 4 | 4 | 4 |
| 19 | 2 | 2 | 2 | 3 |
| 20 | 2 | 2 | 2 | 4 |
| 21 | 2 | 2 | 3 | 3 |
| 22 | 2 | 2 | 3 | 4 |
| 23 | 2 | 2 | 4 | 4 |
| 24 | 2 | 3 | 3 | 3 |
| 25 | 2 | 3 | 3 | 4 |
| 26 | 2 | 3 | 4 | 4 |
| 27 | 2 | 4 | 4 | 4 |
| 28 | 3 | 3 | 3 | 4 |
| 29 | 3 | 3 | 4 | 4 |
| 30 | 3 | 4 | 4 | 4 |
| 31 | EQM with NSS=1 | | | |
| 32 | EQM with NSS=2 | | | |
| 33 | EQM with NSS=3 | | | |
| 34 | EQM with NSS=4 | | | |
| 35 | EQM with NSS=5 | | | |
| 36 | EQM with NSS=6 | | | |
| 37 | EQM with NSS=7 | | | |
| 38 | EQM with NSS=8 | | | |
| 39 to END (for example, END=63, only one row) | Reserved | | | |

In a possible implementation, the second field indicates a number of spatial streams corresponding to one MCS in the first MCS group, or the second field indicates a number of spatial streams corresponding to a plurality of MCSs in the first MCS group. For example, when a value indicated by the second field is a first index, the second field indicates the number of spatial streams corresponding to the one MCS in the first MCS group; or when a value indicated by the second field is a second index, the second field indicates the number of spatial streams corresponding to the plurality of MCSs in the first MCS group. That the second field indicates the number of spatial streams corresponding to the one MCS in the first MCS group may be that the second field indicates the EQM and the number of spatial streams under the EQM. For example, the first index is any one of the index 0 to the index 30 in Table 10, and the second index is any one of the index 31 to the index 38 in Table 10. In this specification, a value indicated by a field may be a value of the field.

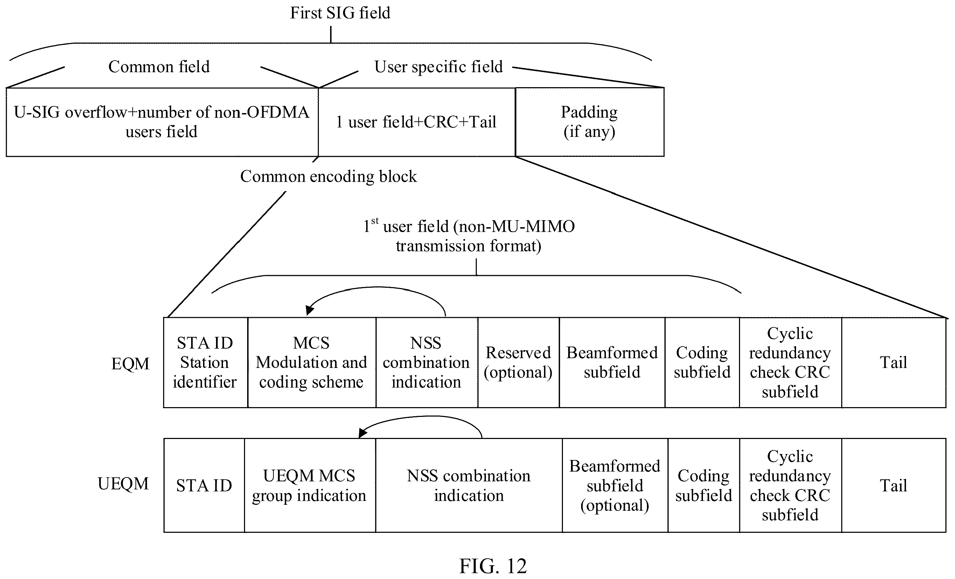

In a possible implementation, the first SIG field in the PPDU includes one user field, and the user field includes the second field. The user field in the first SIG field has two possible formats. FIG. 12 is another example of a format of a first SIG field in the PPDU according to an embodiment of this application. FIG. 12 shows user fields in two formats. One user field includes a STA ID subfield, a UEQM MCS group indication field (that is, the first field), an NSS combination indication field (that is, the second field), a beamformed subfield (optional), and a coding subfield. The other user field includes a STA ID subfield, an MCS field, an NSS combination indication field, a reserved field (optional), a beamformed subfield (optional), and a coding subfield. For functions of fields in FIG. 12, refer to the descriptions of the fields in FIG. 4. Lengths of the user fields in two formats shown in FIG. 12 are equal or unequal. FIG. 12 shows that a sum of a length of the NSS combination indication field and a length of the reserved field in the user field corresponding to the EQM is equal to a length of the NSS combination indication field in the user field corresponding to the UEQM. The formats of the two user fields shown in FIG. 12 are merely examples. A format of the user field in the first SIG field may alternatively be another format, in other words, different from the format of the user field shown in FIG. 12. For example, the lengths of the NSS combination indication fields in the two user fields are equal, and a length of the MCS field is equal to a length of the UEQM MCS group indication field. For another example, the lengths of the NSS combination indication fields in the two user fields are equal, and a length of the UEQM MCS group indication field (that is, the first field) is equal to a sum of a length of the MCS field and the length of the reserved field (optional). For another example, the lengths of the NSS combination indication fields in the two user fields are equal, and a sum of a length of the UEQM MCS group indication field (that is, the first field) and the length of the reserved field is equal to a sum of a length of the MCS field and the length of the reserved field (optional).

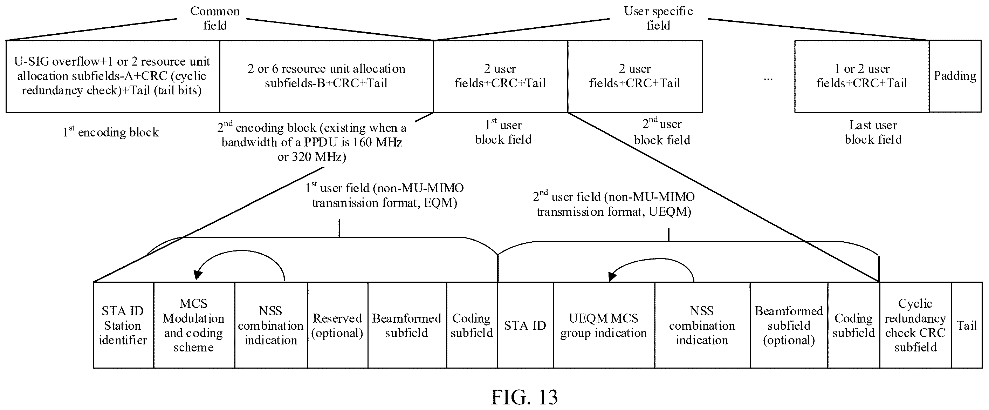

In a possible implementation, the first SIG field in the PPDU includes a user field in a format 1 and a user field in a format 2. The user field in the format 1 includes the second field and an EQM MCS group indication field, and the user field in the format 2 includes the second field and an MCS field. For example, the user field in the format 1 indicates that a spatial stream of a user associated with the user field uses the UEQM, and the user field in the format 2 indicates that a spatial stream of a user associated with the user field uses the EQM. The user field in the first SIG field has two possible formats. FIG. 13 is another example of a format of a first SIG field in the PPDU according to an embodiment of this application. FIG. 13 shows user fields in two formats. One user field (that is, the user field in the format 1) includes a STAID subfield, a UEQM MCS group indication field (that is, the first field), an NSS combination indication field (that is, the second field), a beamformed subfield (optional), and a coding subfield. The other user field (that is, the user field in the format 2) includes a STA ID subfield, an MCS field, an NSS combination indication field, a reserved field (optional), a beamformed subfield (optional), and a coding subfield. For functions of fields in FIG. 13, refer to the descriptions of the fields in FIG. 6. Lengths of the user fields in two formats shown in FIG. 13 are equal or unequal. For example, a length of the UEQM MCS group indication field (that is, the first field) is equal to a sum of a length of the MCS field and a length of the reserved field (optional). For example, a length of the UEQM MCS group indication field (that is, the first field) is equal to a length of the MCS field. For example, a sum of a length of the UEQM MCS group indication field (that is, the first field) and a length of the reserved field is equal to a sum of a length of the MCS field and the length of the reserved field (optional). When the lengths of the user fields in two formats are equal, the receiver does not need to learn of the length of the user field when parsing the user field, so that an operation of parsing the user field is easier to implement.

It should be noted that the user field provided in this application supports a non-MU-MIMO transmission format, to be specific, one RU is allocated to one user. For example, the user field in the PPDU supports a MU-MIMO transmission format, and the PPDU may use the modulation scheme EQM.

The following describes a manner in which the receiver parses the user field.

The receiver may first obtain the EQM/UEQM field by using the spatial stream grouping index table, to be specific, obtain a number of spatial streams under the EQM/a spatial stream boundary under the UEQM, and then read the MCS field/the UEQM MCS group indication field. For example, an implementation in which the receiver parses a user field that matches an association identifier (association identifier, AID) of the receiver is as follows: The receiver reads the NSS combination indication field, and obtains an index indicated by the NSS combination indication field; obtains a spatial stream boundary or EQM and a number of spatial streams under the EQM that are indicated by the index; and when the index indicates the spatial stream boundary, obtains an MCS group indicated by an UEQM MCS group indication field, and determines, based on the MCS group indicated by the UEQM MCS group indication field and the spatial stream boundary indicated by the index, a number of spatial streams corresponding to one or more MCSs in the MCS group; or when the index indicates the EQM and the number of spatial streams under the EQM, reads an MCS field, where an MCS indicated by the MCS field is an MCS used by each spatial stream of the receiver.

The following describes an example in which the receiver parses the user field by using an example in which an NSS combination indication field in the user field represents an index in Table 10.

For example, a value of the NSS combination indication field in the user field is 31, in other words, the NSS combination indication field indicates the index 31. The receiver learns, based on the index 31 and Table 10, that the spatial stream of the receiver uses the EQM and the number of spatial streams is 1, and then reads the MCS field to learn of an MCS, that is, an MCS used by the spatial stream of the receiver. An example in which the receiver reads the MCS field to learn of the MCS is as follows: The receiver learns that a value of the MCS field represents an index #1, and reads an MCS indicated by the index #1 in Table 3 or Table 4. For another example, a value of the NSS combination indication field in the user field is 15, in other words, the NSS combination indication field indicates the index 15. The receiver learns, based on the index 15 and Table 10, that the spatial stream of the receiver uses the UEQM and spatial stream boundaries corresponding to four MCSs, and then reads the UEQM MCS group indication field to learn an MCS group; and determines, based on the MCS group and the spatial stream boundaries corresponding to the four MCSs, a number of spatial streams corresponding to one or more MCSs in the MCS group. An example in which the receiver reads the UEQM MCS group indication field to learn the MCS group is as follows: The receiver learns that a value of the UEQM MCS group indication field represents an index #2, and reads an MCS group indicated by the index #2 in Table 2 or Table 4.

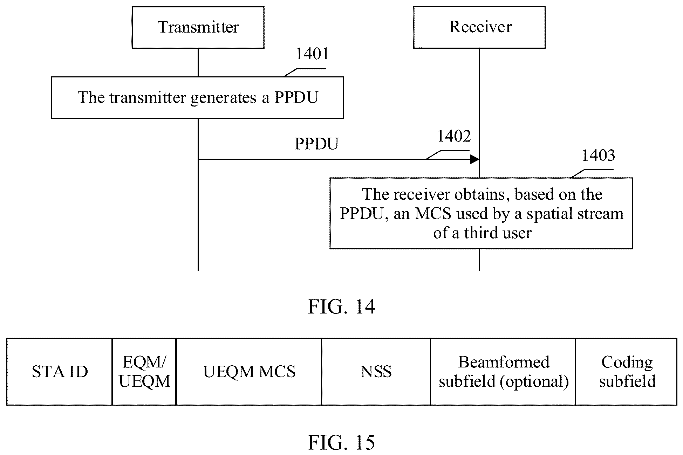

FIG. 14 is an interaction flowchart of another modulation and coding scheme indication method according to an embodiment of this application. As shown in FIG. 14, the method includes the following steps.

1401: A transmitter generates a PPDU.

The PPDU includes a sixth field and a seventh field. The sixth field indicates a number of spatial streams of a third user (for example, one or more stations). A user may be a group of users in multicast transmission. For example, a value of the sixth field indicates the number of spatial streams of the third user (a station). The sixth field may be replaced with an NSS (a number of spatial streams) field. In this specification, a number of spatial streams of a user is a number of spatial streams used by the user. The seventh field indicates an MCS used by each spatial stream of the third user. The seventh field may be referred to as a UEQM MCS field, or may be referred to as another field. The MCS that is used by the spatial stream and that is indicated by the seventh field is related to the number of spatial streams of the third user. That the MCS that is used by the spatial stream and that is indicated by the seventh field is related to the number of spatial streams of the third user may be: When numbers of spatial streams of the third user are different, MCSs that are used by the spatial streams and that are indicated by the seventh field are different. For example, the number of spatial streams of the third user is 2, and the seventh field indicates MCSs respectively used by two spatial streams of the third user. For another example, the number of spatial streams of the third user is 3, and the seventh field indicates MCSs respectively used by three spatial streams of the third user. For example, a value of the seventh field is an index, and the index indicates the MCS used by each spatial stream of the third user.

In a possible implementation, the PPDU includes one or more user fields, and one user field includes the sixth field and the seventh field. For example, one user field in the PPDU is associated with one user (for example, a station), the user field includes information that needs to be read by the user associated with the user field, and another user does not need to read the user field. For example, a user field in the PPDU is associated with a user #3, the user field includes an identifier of the user #3, the user #3 determines, based on the identifier that is of the user #3 and that is included in the user field, that the user field includes information that needs to be read by the user #3, and another user (for example, a station) disregards (disregard) the user field when the identifier included in the user field is not an identifier of the another user.

The following describes a case in which the PPDU includes one user field and a case in which the PPDU includes a plurality of user fields.

In a possible implementation, the PPDU includes one user field, and the user field includes the sixth field, the seventh field, and an eighth field (optional). The eighth field indicates EQM or UEQM. The eighth field may be referred to as an EQM/UEQM indication field or an EQM/UEQM field. For example, when a value of the EQM/UEQM field is 0, the EQM/UEQM field indicates the EQM; or when a value of the EQM/UEQM field is 1, the EQM/UEQM field indicates the UEQM. FIG. 15 is an example of a format of a user field in the PPDU according to an embodiment of this application. As shown in FIG. 15, the user field in the PPDU includes a STA ID subfield, an EQM/UEQM field (optional), a UEQM MCS field (that is, the seventh field), an NSS field (that is, the sixth field), a beamformed subfield (optional), and a coding subfield. For descriptions of the fields in the user field shown in FIG. 15, refer to the descriptions of the fields in the user field shown in FIG. 3. The user field shown in FIG. 15 is only an example of one user field in the PPDU. The user field in the PPDU may include more or fewer fields than those in the user field shown in FIG. 15. For example, the user field in the PPDU includes the STAID subfield, the UEQM MCS field, the NSS field, and the coding subfield. A length and a location of each field in the user field in the PPDU are not limited in embodiments of this application. For example, a length of the sixth field may be 2 bits, 3 bits, or 4 bits. For example, a length of the seventh field may be 5 bits, 6 bits, 7 bits, 8 bits, or 9 bits. For example, in the user field in the PPDU, a length of the EQM/UEQM field is 1 bit (bit), a length of the UEQM MCS field is 7 bits, and a length of the NSS field is 2 bits. For example, in the user field in the PPDU, a length of the EQM/UEQM field is 1 bit, a length of a UEQM MCS group indication field is 9 bits, and a length of the NSS field is 3 bits.

In a possible implementation, the PPDU includes a first SIG field, and the first SIG field includes the user field. The PPDU may be the PPDU shown in FIG. 7 or FIG. 8. The first SIG field may be any field in the UHR PPDU. For example, the first SIG field is the UHR-SIG field in the UHR PPDU. For example, the first SIG field is the L-SIG field in the UHR PPDU. The first SIG field may be any field in the IMMW PPDU. For example, the first SIG field is the IMMW-SIG field in the IMMW PPDU. For example, the first SIG field is the L-SIG field in the IMMW PPDU.

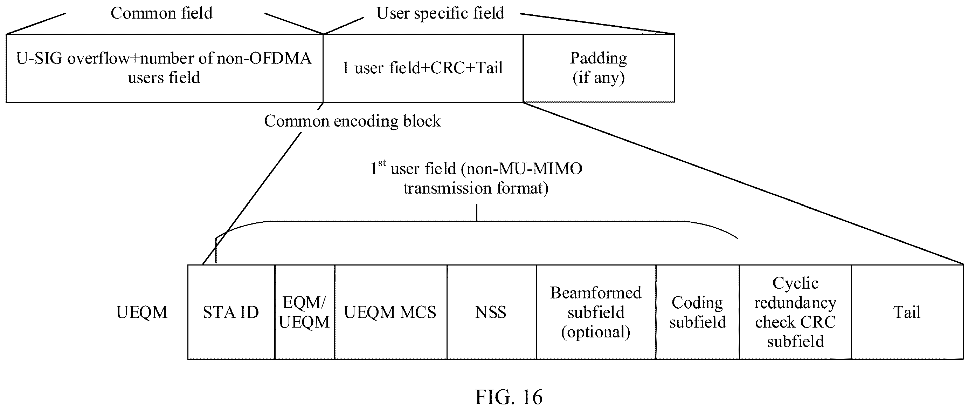

FIG. 16 is another example of a format of a first SIG field in the PPDU according to an embodiment of this application. As shown in FIG. 16, the first SIG field includes a common field and a user specific field. The user specific field includes the user field, a CRC field, tail bits, and a padding bit (optional). For descriptions of fields in the first SIG field shown in FIG. 16, refer to the descriptions of the fields in the first SIG field shown in FIG. 4. The format of the first SIG field shown in FIG. 16 is for single-user transmission, in other words, the first SIG field includes one user field.

In a possible implementation, the transmitter may send a PPDU (referred to as a PPDU #3 below) including the sixth field (the NSS field) and the seventh field (the UEQM MCS field). For example, a user field in the PPDU #3 includes the sixth field and the seventh field, the user field in the PPDU #3 is associated with the user #3, the sixth field indicates a total number of spatial streams of the user #3, and the seventh field indicates an MCS used by each spatial stream of the user #3. Alternatively, the transmitter may send a PPDU (referred to as a PPDU #4 below) including an MCS field and an NSS field. For example, a user field in the PPDU #4 includes the MCS field and the NSS field, the user field in the PPDU #4 is associated with a user #4, the NSS is a total number of spatial streams of the user #4, and the MCS field indicates a same MCS used by all the spatial streams of the user #4. That is, the transmitter may send the PPDUs in two different formats. A user field in one PPDU includes the UEQM MCS field, and a user field in the other PPDU includes the MCS field and the NSS field. When the user field in the PPDU includes the UEQM MCS field and the NSS field, the spatial stream of the user associated with the user field uses the UEQM. When the user field in the PPDU includes the MCS field and the NSS field, the spatial stream of the user associated with the user field uses the EQM. In other words, when a spatial stream of a user uses the UEQM, a user field in the PPDU sent by the transmitter includes the UEQM MCS field and the NSS field, to indicate an MCS used by each spatial stream of the user. When a spatial stream of a user uses the EQM, a user field in the PPDU sent by the transmitter includes the MCS field and the NSS field, to indicate a same MCS used by all spatial streams of the user. For example, the user field in the PPDU sent by the transmitter includes the MCS field, the NSS field, the eighth field (that is, the EQM/UEQM field), and the coding subfield, and the eighth field indicates the EQM. For example, the first SIG field in the PPDU sent by the transmitter includes a user field, and the user field includes an MCS field, an NSS field, an EQM/UEQM field, and a coding subfield.

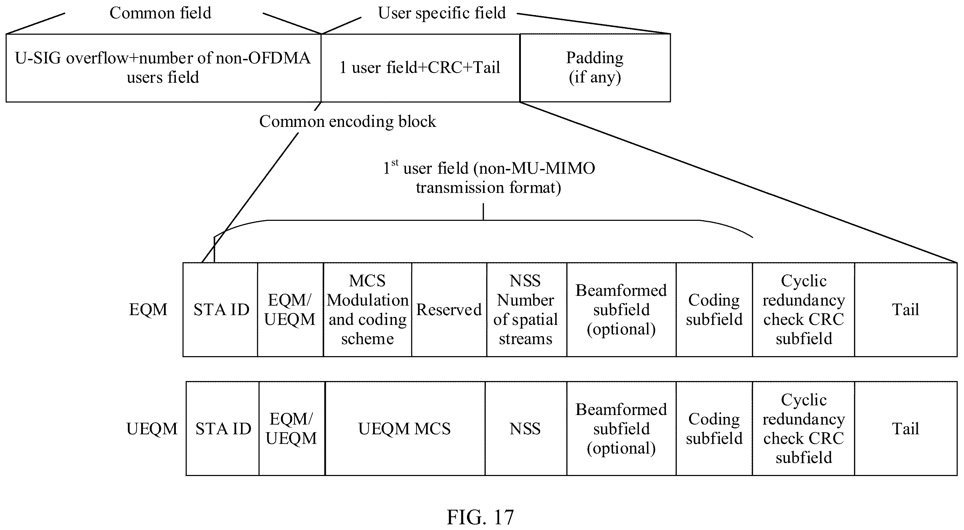

FIG. 17 is another example of a format of a first SIG field in the PPDU according to an embodiment of this application. For descriptions of fields in the first SIG field shown in FIG. 17, refer to the descriptions of the fields in the first SIG field shown in FIG. 4. Details are not described herein again. Refer to FIG. 17. There are two possible formats of a user field in the first SIG field in the PPDU. Lengths of user fields in two formats may be equal. One user field includes a STA ID subfield, an EQM/UEQM field, a UEQM MCS field, an NSS field, a beamformed subfield (optional), and a coding subfield. The other user field includes a STA ID subfield, an EQM/UEQM field, an MCS field, a reserved field (optional), an NSS field, a beamformed subfield (optional), and a coding subfield. For example, a length of the UEQM MCS field is equal to a sum of a length of the MCS field and a length of the reserved field (optional). For example, a location and a length of the reserved field in the user field may be flexibly configured based on a requirement, so that the lengths of the two user fields are equal. For example, in the one user field, the length of the UEQM MCS field is 7 bits; and in the other user field, the length of the MCS field is 4 bits, and the length of the reserved field is 3 bits. For example, in the one user field, the length of the UEQM MCS field is 9 bits; and in the other user field, the length of the MCS field is 4 bits, and the length of the reserved field is 5 bits. The user field in this application may include more or fewer fields than those in the user field shown in FIG. 17.

In a possible implementation, the PPDU includes a plurality of user fields, s user fields in the plurality of user fields include the UEQM MCS field and the NSS field, t user fields in the plurality of user fields include an MCS field and an NSS field, the NSS field indicates a number of spatial streams of a user (a user associated with the user field), the MCS field indicates a same MCS used by all spatial streams of the user, and lengths of the user fields in the PPDU are equal or unequal. s is an integer greater than 0, and t is an integer greater than 0. In other words, the PPDU may include user fields in two different formats. An example in which the PPDU includes a third user field (including the seventh field) and a fourth user field (including the MCS field) is used to describe the PPDU including the user fields in two different formats. For example, the third user field includes a STA ID subfield, an EQM/UEQM field, a UEQM MCS field, an NSS field, a beamformed subfield (optional), and a coding subfield. The fourth user field includes a STA ID subfield, an EQM/UEQM field, an MCS field, an NSS field, a reserved field (optional), a beamformed subfield (optional), and a coding subfield.

There may be user fields in two formats in the PPDU, for example, the third user field and the fourth user field. Any user field may indicate, by using the EQM/UEQM field included in the user field, a type of the user field. Further, content of subfields in user fields in different formats is different. If the user fields in different formats in the PPDU have an equal length (in other words, lengths of the user fields in different formats are equal), decoding and parsing complexity of a receiver can be reduced. Because a length of the UEQM MCS field is greater than a length of the MCS field, to enable the third user field and the fourth user field to have the equal length or nearly equal length, one manner is to reduce overheads of the UEQM MCS field as much as possible, so as to achieve a tradeoff between the overheads and flexibility; and the other manner is to introduce some reserved bits (for example, the reserved field in FIG. 17) into the fourth user field. A location and a length of the reserved field (or the reserved bits) in the fourth user field are not limited. For example, the length of the UEQM MCS field is 7 bits. In the fourth user field, the length of the MCS field is 4 bits, and the length of the reserved field is 3 bits. For example, the length of the UEQM MCS field is 9 bits. In the fourth user field, the length of the MCS field is 4 bits, and the length of the reserved field is 5 bits. The user field in this application may include more or fewer fields than those in the user field shown in FIG. 17. In this embodiment of this application, the EQM and the UEQM may be implemented by using user fields in different formats with an equal length. When parsing a user field, the receiver does not need to learn of a length of the user field, so that an operation of parsing the user field is easier to implement.

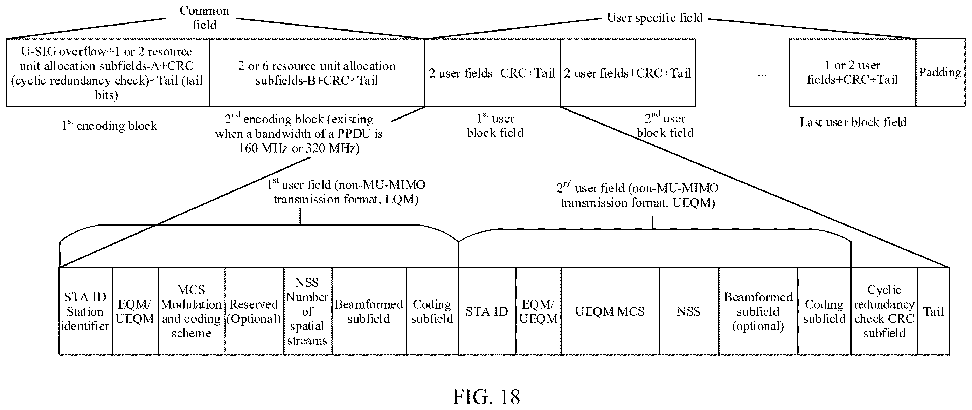

In a possible implementation, the first SIG field in the PPDU includes the third user field and the fourth user field, and the format of the first SIG field in the PPDU is for OFDMA transmission. FIG. 18 is another example of a format of a first SIG field in the PPDU according to an embodiment of this application. As shown in FIG. 18, the first SIG field includes a common field and a user specific field, the user specific field includes a plurality of user block fields, and one user block field includes one or two user fields, a CRC subfield, and tail bits. For descriptions of fields in the first SIG field shown in FIG. 18, refer to the descriptions of the fields in the first SIG field shown in FIG. 6. A 1^{st} user field in FIG. 18 may be an example of the fourth user field, and a 2^{nd} user field in FIG. 18 may be an example of the third user field. As shown in FIG. 18, the 1^{st} user field (that is, the fourth user field) corresponds to the EQM, and the 1^{st} user field includes a STA ID subfield, an EQM/UEQM field, an MCS field, an NSS field, a reserved field (optional), a beamformed subfield (optional), and a coding subfield. The 2^{nd} user field (that is, the fourth user field) corresponds to the UEQM, and the 2^{nd} user field includes a STA ID subfield, an EQM/UEQM field, a UEQM MCS field, an NSS field, a beamformed subfield (optional), and a coding subfield. For example, lengths of the user fields in the PPDU shown in FIG. 18 are equal.

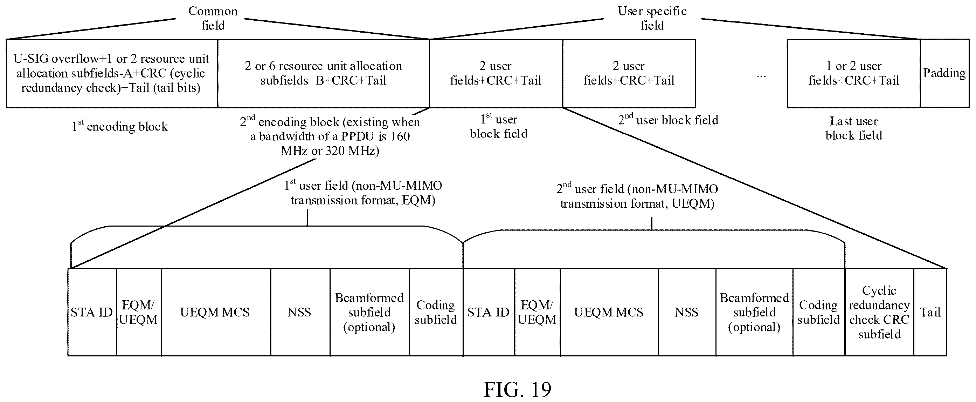

In a possible implementation, the PPDU includes the plurality of user fields, and the plurality of user fields include the third user field and the fourth user field. A format of the third user field is the same as a format of the fourth user field. The third user field is associated with the third user, and the fourth user field is associated with a fourth user. The seventh field included in the third user field indicates that at least two spatial streams of the third user use different MCSs, and a seventh field included in the fourth user field indicates a same MCS used by all spatial streams of the fourth user. For example, an index represented by the value of the seventh field in the third user field is an index 16 in Table 13, and an index represented by a value of the seventh field in the fourth user field is an index 0 in Table 13. A length of the third user field is equal to a length of the fourth user field. FIG. 19 is another example of a format of a first SIG field in the PPDU according to an embodiment of this application. For descriptions of fields in the first SIG field shown in FIG. 19, refer to the descriptions of the fields in the first SIG field shown in FIG. 6. A 1^{st} user field in FIG. 19 may be an example of the fourth user field, and a 2^{nd} user field in FIG. 19 may be an example of the third user field.

1402: The transmitter sends the PPDU.

Correspondingly, the receiver receives the PPDU. For example, when the PPDU is for single-user transmission, one receiver (that is, a single user to which the PPDU is directed) receives the PPDU, and parses the PPDU. For example, when the PPDU is for multi-user transmission, a plurality of receivers (that is, users to which the PPDU is directed) receive the PPDU, and parse the PPDU.

1403: The receiver obtains, based on the PPDU, the MCS used by the spatial stream of the third user.

In this embodiment of this application, the seventh field indicates the MCS used by each spatial stream of the third user, and the MCS that is used by the spatial stream and that is indicated by the seventh field is related to the number of spatial streams of the third user. Signaling overheads are lower compared with those of indicating, by using one index, an MCS used by each spatial stream under different numbers of spatial streams. In addition, in embodiments of this application, it further balanced that the user fields under the UEQM and the EQM have the equal length. This reduce demodulation and parsing complexity of the device.

The following describes, based on a format of the user field, a manner of indicating the MCS used by the spatial stream of the user.

An example of a format of a user field is shown in FIG. 17. The user field includes an EQM/UEQM field, an MCS field, and an NSS field. For example, the MCS field indicates 16 entries shown in Table 11. For example, a value of the MCS field is an index in Table 11, and the value of the MCS field ranges from 0 to 15. In Table 11, an index 14 and an index 15 are two special modulation schemes, which are respectively a duplicate transmission mode and a BPSK modulation scheme using dual carrier modulation. A sequence of the entries in Table 11 and a correspondence between an index and an MCS are not limited in embodiments of this application. The MCS field may indicate a part of the entries in Table 11. For example, the value of the MCS field ranges from 0 to 11. For example, the user field in the PPDU includes an identifier of the fourth user, an EQM/UEQM field, an MCS field, and an NSS field. A value of the EQM/UEQM field is 0 (indicating the EQM), a value of the NSS field is 3, and a value of the MCS field is 4. The value of the NSS field is a total number of spatial streams of the fourth user, and the MCS field (indicating an index 4) indicates that each spatial stream of the fourth user uses 16-QAM and a coding rate of 3/4. The fourth user learns, based on the value of the EQM/UEQM field, that the spatial stream of the fourth user uses the EQM; and then learns, based on the NSS field, that the total number of spatial streams of the fourth user is 3, and learns, based on the MCS field, that each spatial stream of the fourth user uses 16-QAM and the coding rate of 3/4.

**Table 11**

| Index | Modulation (Modulation) | Coding rate (Rate) |
|---|---|---|
| 0 | BPSK | 1/2 |
| 1 | QPSK | 1/2 |
| 2 | | 3/4 |
| 3 | 16-QAM | 1/2 |
| 4 | | 3/4 |
| 5 | 64-QAM | 2/3 |
| 6 | | 3/4 |
| 7 | | 5/6 |
| 8 | 256-QAM | 3/4 |
| 9 | | 5/6 |
| 10 | 1024-QAM | 3/4 |
| 11 | | 5/6 |
| 12 | 4096-QAM | 3/4 |
| 13 | | 5/6 |
| 14 | UHR duplicate (UHR duplicate, UHR DUP) | 1/2 |
| 15 | BPSK-DCM (BPSK-dual carrier modulation, dual carrier modulation) | 1/2 |

Another example of a format of a user field is shown in FIG. 17. The user field includes an EQM/UEQM field, a UEQM MCS field, and an NSS field. For example, a value of the UEQM MCS field is an index, and the index corresponds to different tables under different NSSs. For example, when a value of the NSS field in the user field is 2, a value of the UEQM MCS field is an index in Table 12. For another example, when a value of the NSS field in the user field is 3, a value of the UEQM MCS field is an index in Table 13. If an index in a UEQM index table corresponds to L spatial streams, the UEQM index table is a UEQM index table with NSS=L, where L is an integer greater than 0. For example, Table 12 is a UEQM index table with NSS=2, and Table 13 is a UEQM index table with NSS=3. Table 12 and Table 13 are examples of two UEQM index tables provided in this application. One index in the UEQM index table corresponds to modulation schemes of a plurality of spatial streams, and the plurality of spatial streams use a same coding rate. For example, one index in Table 12 corresponds to modulation schemes respectively used by two spatial streams, and the two spatial streams use a same coding rate.

In the UEQM index table, a modulation scheme used by a spatial stream may be any one of 4096-QAM, 1024-QAM, 256-QAM, 64-QAM, 16-QAM, QPSK, and BPSK, and a used coding rate may be any one of 1/2, 2/3, 3/4, 5/6, 7/8, and the like. In the following UEQM index table, the spatial stream uses the coding rate of 1/2, 3/4, or 5/6, and BPSK is not introduced. Because a rate of BPSK is low, introducing BPSK into UEQM transmission does not greatly improve total throughput. In addition, the BPSK modulation scheme is not introduced in consideration of the overheads of the UEQM MCS field and complexity caused by excessive variety of implementations. Modulation schemes, coding rates, and indexes in the following UEQM index table are merely examples. A UEQM index table used by the transmitter and the receiver may be a part of the UEQM index table shown in this specification, or an index may alternatively be in another corresponding manner. This is not limited in embodiments of this application. In addition, there may be some reserved entries in the UEQM index table. For example, in Table 12, indexes 45 to 63 are reserved starting from 45. Because for an index represented by N bits, a maximum of 2ⁿ entries may be indicated. In addition, when numbers of spatial streams are different, UEQM MCS fields of a same length are used. Therefore, parsing by the receiver is simple. For a UEQM index table with a small number of spatial streams, there may also be many reserved entries. In embodiments of this application, two reserved entries are introduced: validated (Validate) entry and disregarded (Disregard) entry. If the receiver finds that an index indicates a validated entry, the receiver stops further parsing the PPDU. If the receiver finds that an index indicates a disregarded entry, the receiver disregards the field, and continues to read another field.

**Table 12**

| Index | Modulation (Modulation) | | Coding rate (Rate) |
|---|---|---|---|
| | Modulation scheme of a first spatial stream | Modulation scheme of a second spatial stream | |
| 0 | 16-QAM | QPSK | 1/2 |
| 1 | **64-QAM** | QPSK | 1/2 |
| 2 | **256-QAM** | QPSK | 1/2 |
| 3 | **1024-QAM** | QPSK | 1/2 |
| 4 | **4096-QAM** | QPSK | 1/2 |
| 5 | **64-QAM** | 16-QAM | 1/2 |
| 6 | **256-QAM** | 16-QAM | 1/2 |
| 7 | **1024-QAM** | 16-QAM | 1/2 |
| 8 | **4096-QAM** | 16-QAM | 1/2 |
| 9 | **256-QAM** | **64-QAM** | 1/2 |
| 10 | **1024-QAM** | **64-QAM** | 1/2 |
| 11 | **4096-QAM** | **64-QAM** | 1/2 |
| 12 | **1024-QAM** | **256-QAM** | 1/2 |
| 13 | **4096-QAM** | **256-QAM** | 1/2 |
| 14 | **4096-QAM** | **1024-QAM** | 1/2 |
| 15 | 16-QAM | QPSK | 3/4 |
| 16 | 64-QAM | QPSK | 3/4 |
| 17 | 256-QAM | QPSK | 3/4 |
| 18 | 1024-QAM | QPSK | 3/4 |
| 19 | 4096-QAM | QPSK | 3/4 |
| 20 | 64-QAM | 16-QAM | 3/4 |
| 21 | 256-QAM | 16-QAM | 3/4 |
| 22 | 1024-QAM | 16-QAM | 3/4 |
| 23 | 4096-QAM | 16-QAM | 3/4 |
| 24 | 256-QAM | 64-QAM | 3/4 |
| 25 | 1024-QAM | 64-QAM | 3/4 |
| 26 | 4096-QAM | 64-QAM | 3/4 |
| 27 | 1024-QAM | 256-QAM | 3/4 |
| 28 | 4096-QAM | 256-QAM | 3/4 |
| 29 | 4096-QAM | 1024-QAM | 3/4 |
| 30 | **16-QAM** | **QPSK** | 5/6 |
| 31 | 64-QAM | **QPSK** | 5/6 |
| 32 | 256-QAM | **QPSK** | 5/6 |
| 33 | 1024-QAM | **QPSK** | 5/6 |
| 34 | 4096-QAM | **QPSK** | 5/6 |
| 35 | 64-QAM | **16-QAM** | 5/6 |
| 36 | 256-QAM | **16-QAM** | 5/6 |
| 37 | 1024-QAM | **16-QAM** | 5/6 |
| 38 | 4096-QAM | **16-QAM** | 5/6 |
| 39 | 256-QAM | 64-QAM | 5/6 |
| 40 | 1024-QAM | 64-QAM | 5/6 |
| 41 | 4096-QAM | 64-QAM | 5/6 |
| 42 | 1024-QAM | 256-QAM | 5/6 |
| 43 | 4096-QAM | 256-QAM | 5/6 |
| 44 | 4096-QAM | 1024-QAM | 5/6 |
| 45 to End (for example, End=63) | Reserved (for a user field matching an identifier of a station, the index indicates validate; otherwise, the index indicates disregard) | | |

One index in Table 12 corresponds to modulation schemes respectively used by two spatial streams, and the two spatial streams use a same coding rate. Each index in Table 12 indicates the EQM modulation. The receiver may learn, according to Table 12, MCSs respectively used by two spatial streams of the receiver. For example, the user field in the PPDU includes an identifier of the third user, an EQM/UEQM field, a UEQM MCS field, and an NSS field. A value of the EQM/UEQM field is 1 (indicating the UEQM), a value of the NSS field is 2, and a value of the UEQM MCS field is 4. The value of the NSS field is a total number of spatial streams of the third user. The third user learns, based on the value of the EQM/UEQM field, that the spatial stream of the third user uses the UEQM; then learns, based on the NSS field, that the total number of spatial streams of the third user is 2, and an index indicated by the UEQM MCS field is an index in the UEQM index table with NSS=2; and learns of, based on the UEQM MCS field and Table 12, MCSs respectively used by two spatial streams of the third user.

**Table 13**

| Index | Modulation (Modulation) | | | Coding rate (Rate) |
|---|---|---|---|---|
| | Modulation scheme of a first spatial stream | Modulation scheme of a second spatial stream | Modulation scheme of a third spatial stream | |
| 0 to 15 | Same as Table 11 | | | |
| 16 | 16-QAM | QPSK | QPSK | 1/2 |
| 17 | **64-QAM** | QPSK | QPSK | 1/2 |
| 18 | **256-QAM** | QPSK | QPSK | 1/2 |
| 19 | **1024-QAM** | QPSK | QPSK | 1/2 |
| 20 | **4096-QAM** | QPSK | QPSK | 1/2 |
| 21 | 16-QAM | 16-QAM | QPSK | 1/2 |
| 22 | **64-QAM** | 16-QAM | QPSK | 1/2 |
| 23 | **256-QAM** | 16-QAM | QPSK | 1/2 |
| 24 | **1024-QAM** | 16-QAM | QPSK | 1/2 |
| 25 | **4096-QAM** | 16-QAM | QPSK | 1/2 |
| 26 | **64-QAM** | **64-QAM** | QPSK | 1/2 |
| 27 | **256-QAM** | **64-QAM** | QPSK | 1/2 |
| 28 | **1024-QAM** | **64-QAM** | QPSK | 1/2 |
| 29 | **4096-QAM** | **64-QAM** | QPSK | 1/2 |
| 30 | **256-QAM** | **256-QAM** | QPSK | 1/2 |
| 31 | **1024-QAM** | **256-QAM** | QPSK | 1/2 |
| 32 | **4096-QAM** | **256-QAM** | QPSK | 1/2 |
| 33 | **1024-QAM** | **1024-QAM** | QPSK | 1/2 |
| 34 | **4096-QAM** | **1024-QAM** | QPSK | 1/2 |
| 35 | **4096-QAM** | **4096-QAM** | QPSK | 1/2 |
| 36 | **64-QAM** | 16-QAM | 16-QAM | 1/2 |
| 37 | **256-QAM** | 16-QAM | 16-QAM | 1/2 |
| 38 | **1024-QAM** | 16-QAM | 16-QAM | 1/2 |
| 39 | **4096-QAM** | 16-QAM | 16-QAM | 1/2 |
| 40 | **64-QAM** | **64-QAM** | 16-QAM | 1/2 |
| 41 | **256-QAM** | **64-QAM** | 16-QAM | 1/2 |
| 42 | **1024-QAM** | **64-QAM** | 16-QAM | 1/2 |
| 43 | **4096-QAM** | **64-QAM** | 16-QAM | 1/2 |
| 44 | **256-QAM** | **256-QAM** | 16-QAM | 1/2 |
| 45 | **1024-QAM** | **256-QAM** | 16-QAM | 1/2 |
| 46 | **4096-QAM** | **256-QAM** | 16-QAM | 1/2 |
| 47 | **1024-QAM** | **1024-QAM** | 16-QAM | 1/2 |
| 48 | **4096-QAM** | **1024-QAM** | 16-QAM | 1/2 |
| 49 | **4096-QAM** | **4096-QAM** | 16-QAM | 1/2 |
| 50 | **256-QAM** | **64-QAM** | **64-QAM** | 1/2 |
| 51 | **1024-QAM** | **64-QAM** | **64-QAM** | 1/2 |
| 52 | **4096-QAM** | **64-QAM** | **64-QAM** | 1/2 |
| 53 | **256-QAM** | **256-QAM** | **64-QAM** | 1/2 |
| 54 | **1024-QAM** | **256-QAM** | **64-QAM** | 1/2 |
| 55 | **4096-QAM** | **256-QAM** | **64-QAM** | 1/2 |
| 56 | **1024-QAM** | **1024-QAM** | **64-QAM** | 1/2 |
| 57 | **4096-QAM** | **1024-QAM** | **64-QAM** | 1/2 |
| 58 | **4096-QAM** | **4096-QAM** | **64-QAM** | 1/2 |
| 59 | **1024-QAM** | **256-QAM** | **256-QAM** | 1/2 |
| 60 | **4096-QAM** | **256-QAM** | **256-QAM** | 1/2 |
| 61 | **1024-QAM** | **1024-QAM** | **256-QAM** | 1/2 |
| 62 | **4096-QAM** | **1024-QAM** | **256-QAM** | 1/2 |
| 63 | **4096-QAM** | **4096-QAM** | **256-QAM** | 1/2 |
| 64 | **4096-QAM** | **1024-QAM** | **1024-QAM** | 1/2 |
| 65 | **4096-QAM** | **4096-QAM** | **1024-QAM** | 1/2 |
| 66 | 16-QAM | QPSK | QPSK | 3/4 |
| 67 | 64-QAM | QPSK | QPSK | 3/4 |
| 68 | 256-QAM | QPSK | QPSK | 3/4 |
| 69 | 1024-QAM | QPSK | QPSK | 3/4 |
| 70 | 4096-QAM | QPSK | QPSK | 3/4 |
| 71 | 16-QAM | 16-QAM | QPSK | 3/4 |
| 72 | 64-QAM | 16-QAM | QPSK | 3/4 |
| 73 | 256-QAM | 16-QAM | QPSK | 3/4 |
| 74 | 1024-QAM | 16-QAM | QPSK | 3/4 |
| 75 | 4096-QAM | 16-QAM | QPSK | 3/4 |
| 76 | 64-QAM | 64-QAM | QPSK | 3/4 |
| 77 | 256-QAM | 64-QAM | QPSK | 3/4 |
| 78 | 1024-QAM | 64-QAM | QPSK | 3/4 |
| 79 | 4096-QAM | 64-QAM | QPSK | 3/4 |
| 80 | 256-QAM | 256-QAM | QPSK | 3/4 |
| 81 | 1024-QAM | 256-QAM | QPSK | 3/4 |
| 82 | 4096-QAM | 256-QAM | QPSK | 3/4 |
| 83 | 1024-QAM | 1024-QAM | QPSK | 3/4 |
| 84 | 4096-QAM | 1024-QAM | QPSK | 3/4 |
| 85 | 4096-QAM | 4096-QAM | QPSK | 3/4 |
| 86 | 64-QAM | 16-QAM | 16-QAM | 3/4 |
| 87 | 256-QAM | 16-QAM | 16-QAM | 3/4 |
| 88 | 1024-QAM | 16-QAM | 16-QAM | 3/4 |
| 89 | 4096-QAM | 16-QAM | 16-QAM | 3/4 |
| 90 | 64-QAM | 64-QAM | 16-QAM | 3/4 |
| 91 | 256-QAM | 64-QAM | 16-QAM | 3/4 |
| 92 | 1024-QAM | 64-QAM | 16-QAM | 3/4 |
| 93 | 4096-QAM | 64-QAM | 16-QAM | 3/4 |
| 94 | 256-QAM | 256-QAM | 16-QAM | 3/4 |
| 95 | 1024-QAM | 256-QAM | 16-QAM | 3/4 |
| 96 | 4096-QAM | 256-QAM | 16-QAM | 3/4 |
| 97 | 1024-QAM | 1024-QAM | 16-QAM | 3/4 |
| 98 | 4096-QAM | 1024-QAM | 16-QAM | 3/4 |
| 99 | 4096-QAM | 4096-QAM | 16-QAM | 3/4 |
| 100 | 256-QAM | 64-QAM | 64-QAM | 3/4 |
| 101 | 1024-QAM | 64-QAM | 64-QAM | 3/4 |
| 102 | 4096-QAM | 64-QAM | 64-QAM | 3/4 |
| 103 | 256-QAM | 256-QAM | 64-QAM | 3/4 |
| 104 | 1024-QAM | 256-QAM | 64-QAM | 3/4 |
| 105 | 4096-QAM | 256-QAM | 64-QAM | 3/4 |
| 106 | 1024-QAM | 1024-QAM | 64-QAM | 3/4 |
| 107 | 4096-QAM | 1024-QAM | 64-QAM | 3/4 |
| 108 | 4096-QAM | 4096-QAM | 64-QAM | 3/4 |
| 109 | 1024-QAM | 256-QAM | 256-QAM | 3/4 |
| 110 | 4096-QAM | 256-QAM | 256-QAM | 3/4 |
| 111 | 1024-QAM | 1024-QAM | 256-QAM | 3/4 |
| 112 | 4096-QAM | 1024-QAM | 256-QAM | 3/4 |
| 113 | 4096-QAM | 4096-QAM | 256-QAM | 3/4 |
| 114 | 4096-QAM | 1024-QAM | 1024-QAM | 3/4 |
| 115 | 4096-QAM | 4096-QAM | 1024-QAM | 3/4 |
| 116 | **16-QAM** | **QPSK** | **QPSK** | 5/6 |
| 117 | 64-QAM | **QPSK** | **QPSK** | 5/6 |
| 118 | 256-QAM | **QPSK** | **QPSK** | 5/6 |
| 119 | 1024-QAM | **QPSK** | **QPSK** | 5/6 |
| 120 | 4096-QAM | **QPSK** | **QPSK** | 5/6 |
| 121 | **16-QAM** | **16-QAM** | **QPSK** | 5/6 |
| 122 | 64-QAM | **16-QAM** | **QPSK** | 5/6 |
| 123 | 256-QAM | **16-QAM** | **QPSK** | 5/6 |
| 124 | 1024-QAM | **16-QAM** | **QPSK** | 5/6 |
| 125 | 4096-QAM | **16-QAM** | **QPSK** | 5/6 |
| 126 | 64-QAM | 64-QAM | **QPSK** | 5/6 |
| 127 | 256-QAM | 64-QAM | **QPSK** | 5/6 |
| 128 | 1024-QAM | 64-QAM | **QPSK** | 5/6 |
| 129 | 4096-QAM | 64-QAM | **QPSK** | 5/6 |
| 130 | 256-QAM | 256-QAM | **QPSK** | 5/6 |
| 131 | 1024-QAM | 256-QAM | **QPSK** | 5/6 |
| 132 | 4096-QAM | 256-QAM | **QPSK** | 5/6 |
| 133 | 1024-QAM | 1024-QAM | **QPSK** | 5/6 |
| 134 | 4096-QAM | 1024-QAM | **QPSK** | 5/6 |
| 135 | 4096-QAM | 4096-QAM | **QPSK** | 5/6 |
| 136 | 64-QAM | **16-QAM** | **16-QAM** | 5/6 |
| 137 | 256-QAM | **16-QAM** | **16-QAM** | 5/6 |
| 138 | 1024-QAM | **16-QAM** | **16-QAM** | 5/6 |
| 139 | 4096-QAM | **16-QAM** | **16-QAM** | 5/6 |
| 140 | 64-QAM | 64-QAM | **16-QAM** | 5/6 |
| 141 | 256-QAM | 64-QAM | **16-QAM** | 5/6 |
| 142 | 1024-QAM | 64-QAM | **16-QAM** | 5/6 |
| 143 | 4096-QAM | 64-QAM | **16-QAM** | 5/6 |
| 144 | 256-QAM | 256-QAM | **16-QAM** | 5/6 |
| 145 | 1024-QAM | 256-QAM | **16-QAM** | 5/6 |
| 146 | 4096-QAM | 256-QAM | **16-QAM** | 5/6 |
| 147 | 1024-QAM | 1024-QAM | **16-QAM** | 5/6 |
| 148 | 4096-QAM | 1024-QAM | **16-QAM** | 5/6 |
| 149 | 4096-QAM | 4096-QAM | **16-QAM** | 5/6 |
| 150 | 256-QAM | 64-QAM | 64-QAM | 5/6 |
| 151 | 1024-QAM | 64-QAM | 64-QAM | 5/6 |
| 152 | 4096-QAM | 64-QAM | 64-QAM | 5/6 |
| 153 | 256-QAM | 256-QAM | 64-QAM | 5/6 |
| 154 | 1024-QAM | 256-QAM | 64-QAM | 5/6 |
| 155 | 4096-QAM | 256-QAM | 64-QAM | 5/6 |
| 156 | 1024-QAM | 1024-QAM | 64-QAM | 5/6 |
| 157 | 4096-QAM | 1024-QAM | 64-QAM | 5/6 |
| 158 | 4096-QAM | 4096-QAM | 64-QAM | 5/6 |
| 159 | 1024-QAM | 256-QAM | 256-QAM | 5/6 |
| 160 | 4096-QAM | 256-QAM | 256-QAM | 5/6 |
| 161 | 1024-QAM | 1024-QAM | 256-QAM | 5/6 |
| 162 | 4096-QAM | 1024-QAM | 256-QAM | 5/6 |
| 163 | 4096-QAM | 4096-QAM | 256-QAM | 5/6 |
| 164 | 4096-QAM | 1024-QAM | 1024-QAM | 5/6 |
| 165 | 4096-QAM | 4096-QAM | 1024-QAM | 5/6 |
| 166 to END (for example, End=255) | 4096-QAM | 4096-QAM | 1024-QAM | 5/6 |

In Table 13, meanings of indexes 0 to 15 may be the same as the meanings of the indexes 0 to 15 in Table 11. In some possible implementations, the indexes 0 to 15 may indicate a modulation scheme of the EQM. For example, when the value of the UEQM MCS field indicates the index 0, the UEQM MCS field indicates that each spatial stream of the third user uses the modulation scheme of BPSK and the coding rate of 1/2. When the value of the UEQM MCS field indicates the index 16, the UEQM MCS field indicates that a first spatial stream of the third user uses the modulation scheme of 16-QAM and the coding rate of 1/2, a second spatial stream uses the modulation scheme of QPSK and the coding rate of 1/2, and a third spatial stream uses the modulation scheme of QPSK and the coding rate of 1/2. The receiver may learn of, according to Table 13, MCSs respectively used by three spatial streams of the receiver or a same MCS used by three spatial streams of the receiver. For example, the user field in the PPDU includes the identifier of the third user, an EQM/UEQM field, a UEQM MCS field, and an NSS field. A value of the EQM/UEQM field is 0 (indicating the EQM), a value of the NSS field is 3, and a value of the UEQM MCS field is 0. The value of the NSS field is the total number of spatial streams of the third user. The third user learns, based on the value of the EQM/UEQM field, that the spatial stream of the third user uses the EQM; then learns, based on the NSS field, that the total number of spatial streams of the third user is 3, and an index indicated by the UEQM MCS field is an index in the UEQM index table with NSS=3 (for example, Table 13); and learns of, based on the UEQM MCS field and Table 13, the same MCS used by the three spatial streams of the third user.

**Table 14**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | **64-QAM** | QPSK | QPSK | QPSK | 1/2 |
| 18 | **256-QAM** | QPSK | QPSK | QPSK | 1/2 |
| 19 | **1024-QAM** | QPSK | QPSK | QPSK | 1/2 |
| 20 | **4096-QAM** | QPSK | QPSK | QPSK | 1/2 |
| 21 | 16-QAM | 16-QAM | QPSK | QPSK | 1/2 |
| 22 | **64-QAM** | 16-QAM | QPSK | QPSK | 1/2 |
| 23 | **256-QAM** | 16-QAM | QPSK | QPSK | 1/2 |
| 24 | **1024-QAM** | 16-QAM | QPSK | QPSK | 1/2 |
| 25 | **4096-QAM** | 16-QAM | QPSK | QPSK | 1/2 |
| 26 | **64-QAM** | **64-QAM** | QPSK | QPSK | 1/2 |
| 27 | **256-QAM** | **64-QAM** | QPSK | QPSK | 1/2 |
| 28 | **1024-QAM** | **64-QAM** | QPSK | QPSK | 1/2 |
| 29 | **4096-QAM** | **64-QAM** | QPSK | QPSK | 1/2 |
| 30 | **256-QAM** | **256-QAM** | QPSK | QPSK | 1/2 |
| 31 | **1024-QAM** | **256-QAM** | QPSK | QPSK | 1/2 |
| 32 | **4096-QAM** | **256-QAM** | QPSK | QPSK | 1/2 |
| 33 | **1024-QAM** | **1024-QAM** | QPSK | QPSK | 1/2 |
| 34 | **4096-QAM** | **1024-QAM** | QPSK | QPSK | 1/2 |
| 35 | **4096-QAM** | **4096-QAM** | QPSK | QPSK | 1/2 |
| 36 | 16-QAM | 16-QAM | 16-QAM | QPSK | 1/2 |
| 37 | 64-QAM | 16-QAM | 16-QAM | QPSK | 1/2 |
| 38 | **256-QAM** | 16-QAM | 16-QAM | QPSK | 1/2 |
| 39 | **1024-QAM** | 16-QAM | 16-QAM | QPSK | 1/2 |
| 40 | **4096-QAM** | 16-QAM | 16-QAM | QPSK | 1/2 |
| 41 | **64-QAM** | **64-QAM** | 16-QAM | QPSK | 1/2 |
| 42 | **256-QAM** | **64-QAM** | 16-QAM | QPSK | 1/2 |
| 43 | **1024-QAM** | **64-QAM** | 16-QAM | QPSK | 1/2 |
| 44 | **4096-QAM** | **64-QAM** | 16-QAM | QPSK | 1/2 |
| 45 | **256-QAM** | **256-QAM** | 16-QAM | QPSK | 1/2 |
| 46 | **1024-QAM** | **256-QAM** | 16-QAM | QPSK | 1/2 |
| 47 | **4096-QAM** | **256-QAM** | 16-QAM | QPSK | 1/2 |
| 48 | **1024-QAM** | **1024-QAM** | 16-QAM | QPSK | 1/2 |
| 49 | **4096-QAM** | **1024-QAM** | 16-QAM | QPSK | 1/2 |
| 50 | **4096-QAM** | **4096-QAM** | 16-QAM | QPSK | 1/2 |
| 51 | **64-QAM** | **64-QAM** | **64-QAM** | QPSK | 1/2 |
| 52 | **256-QAM** | **64-QAM** | **64-QAM** | QPSK | 1/2 |
| 53 | **1024-QAM** | **64-QAM** | **64-QAM** | QPSK | 1/2 |
| 54 | **4096-QAM** | **64-QAM** | **64-QAM** | QPSK | 1/2 |
| 55 | **256-QAM** | **256-QAM** | **64-QAM** | QPSK | 1/2 |
| 56 | **1024-QAM** | **256-QAM** | **64-QAM** | QPSK | 1/2 |
| 57 | **4096-QAM** | **256-QAM** | **64-QAM** | QPSK | 1/2 |
| 58 | **1024-QAM** | **1024-QAM** | **64-QAM** | QPSK | 1/2 |
| 59 | **4096-QAM** | **1024-QAM** | **64-QAM** | QPSK | 1/2 |
| 60 | **4096-QAM** | **4096-QAM** | **64-QAM** | QPSK | 1/2 |
| 61 | **256-QAM** | **256-QAM** | **256-QAM** | QPSK | 1/2 |
| 62 | **1024-QAM** | **256-QAM** | **256-QAM** | QPSK | 1/2 |
| 63 | **4096-QAM** | **256-QAM** | **256-QAM** | QPSK | 1/2 |
| 64 | **1024-QAM** | **1024-QAM** | **256-QAM** | QPSK | 1/2 |
| 65 | **4096-QAM** | **1024-QAM** | **256-QAM** | QPSK | 1/2 |
| 66 | **4096-QAM** | **4096-QAM** | **256-QAM** | QPSK | 1/2 |
| 67 | **1024-QAM** | **1024-QAM** | **1024-QAM** | QPSK | 1/2 |
| 68 | **4096-QAM** | **1024-QAM** | **1024-QAM** | QPSK | 1/2 |
| 69 | **4096-QAM** | **4096-QAM** | **1024-QAM** | QPSK | 1/2 |
| 70 | **4096-QAM** | **4096-QAM** | **4096-QAM** | QPSK | 1/2 |
| 71 | **64-QAM** | 16-QAM | 16-QAM | 16-QAM | 1/2 |
| 72 | **256-QAM** | 16-QAM | 16-QAM | 16-QAM | 1/2 |
| 73 | **1024-QAM** | 16-QAM | 16-QAM | 16-QAM | 1/2 |
| 74 | **4096-QAM** | 16-QAM | 16-QAM | 16-QAM | 1/2 |
| 75 | **64-QAM** | **64-QAM** | 16-QAM | 16-QAM | 1/2 |
| 76 | **256-QAM** | **64-QAM** | 16-QAM | 16-QAM | 1/2 |
| 77 | **1024-QAM** | **64-QAM** | 16-QAM | 16-QAM | 1/2 |
| 78 | **4096-QAM** | **64-QAM** | 16-QAM | 16-QAM | 1/2 |
| 79 | **256-QAM** | **256-QAM** | 16-QAM | 16-QAM | 1/2 |
| 80 | **1024-QAM** | **256-QAM** | 16-QAM | 16-QAM | 1/2 |
| 81 | **4096-QAM** | **256-QAM** | 16-QAM | 16-QAM | 1/2 |
| 82 | **1024-QAM** | **1024-QAM** | 16-QAM | 16-QAM | 1/2 |
| 83 | **4096-QAM** | **1024-QAM** | 16-QAM | 16-QAM | 1/2 |
| 84 | **4096-QAM** | **4096-QAM** | 16-QAM | 16-QAM | 1/2 |
| 85 | **64-QAM** | **64-QAM** | **64-QAM** | 16-QAM | 1/2 |
| 86 | **256-QAM** | **64-QAM** | **64-QAM** | 16-QAM | 1/2 |
| 87 | **1024-QAM** | **64-QAM** | **64-QAM** | 16-QAM | 1/2 |
| 88 | **4096-QAM** | **64-QAM** | **64-QAM** | 16-QAM | 1/2 |
| 89 | **256-QAM** | **256-QAM** | **64-QAM** | 16-QAM | 1/2 |
| 90 | **1024-QAM** | **256-QAM** | **64-QAM** | 16-QAM | 1/2 |
| 91 | **4096-QAM** | **256-QAM** | **64-QAM** | 16-QAM | 1/2 |
| 92 | **1024-QAM** | **1024-QAM** | **64-QAM** | 16-QAM | 1/2 |
| 93 | **4096-QAM** | **1024-QAM** | **64-QAM** | 16-QAM | 1/2 |
| 94 | **4096-QAM** | **4096-QAM** | **64-QAM** | 16-QAM | 1/2 |
| 95 | **256-QAM** | **256-QAM** | **256-QAM** | 16-QAM | 1/2 |
| 96 | **1024-QAM** | **256-QAM** | **256-QAM** | 16-QAM | 1/2 |
| 97 | **4096-QAM** | **256-QAM** | **256-QAM** | 16-QAM | 1/2 |
| 98 | **1024-QAM** | **1024-QAM** | **256-QAM** | 16-QAM | 1/2 |
| 99 | **4096-QAM** | **1024-QAM** | **256-QAM** | 16-QAM | 1/2 |
| 100 | **4096-QAM** | **4096-QAM** | **256-QAM** | 16-QAM | 1/2 |
| 101 | **1024-QAM** | **1024-QAM** | **1024-QAM** | 16-QAM | 1/2 |
| 102 | **4096-QAM** | **1024-QAM** | **1024-QAM** | 16-QAM | 1/2 |
| 103 | **4096-QAM** | **4096-QAM** | **1024-QAM** | 16-QAM | 1/2 |
| 104 | **4096-QAM** | **4096-QAM** | **4096-QAM** | 16-QAM | 1/2 |
| 105 | **256-QAM** | **64-QAM** | **64-QAM** | **64-QAM** | 1/2 |
| 106 | **1024-QAM** | **64-QAM** | **64-QAM** | **64-QAM** | 1/2 |
| 107 | **4096-QAM** | **64-QAM** | **64-QAM** | **64-QAM** | 1/2 |
| 108 | **256-QAM** | **256-QAM** | **64-QAM** | **64-QAM** | 1/2 |
| 109 | **1024-QAM** | **256-QAM** | **64-QAM** | **64-QAM** | 1/2 |
| 110 | **4096-QAM** | **256-QAM** | **64-QAM** | **64-QAM** | 1/2 |
| 111 | **1024-QAM** | **1024-QAM** | **64-QAM** | **64-QAM** | 1/2 |
| 112 | **4096-QAM** | **1024-QAM** | **64-QAM** | **64-QAM** | 1/2 |
| 113 | **4096-QAM** | **4096-QAM** | **64-QAM** | **64-QAM** | 1/2 |
| 114 | **256-QAM** | **256-QAM** | **256-QAM** | **64-QAM** | 1/2 |
| 115 | **1024-QAM** | **256-QAM** | **256-QAM** | **64-QAM** | 1/2 |
| 116 | **4096-QAM** | **256-QAM** | **256-QAM** | **64-QAM** | 1/2 |
| 117 | **1024-QAM** | **1024-QAM** | **256-QAM** | **64-QAM** | 1/2 |
| 118 | **4096-QAM** | **1024-QAM** | **256-QAM** | **64-QAM** | 1/2 |
| 119 | **4096-QAM** | **4096-QAM** | **256-QAM** | **64-QAM** | 1/2 |
| 120 | **1024-QAM** | **1024-QAM** | **1024-QAM** | **64-QAM** | 1/2 |
| 121 | **4096-QAM** | **1024-QAM** | **1024-QAM** | **64-QAM** | 1/2 |
| 122 | **4096-QAM** | **4096-QAM** | **1024-QAM** | **64-QAM** | 1/2 |
| 123 | **4096-QAM** | **4096-QAM** | **4096-QAM** | **64-QAM** | 1/2 |
| 124 | **1024-QAM** | **256-QAM** | **256-QAM** | **256-QAM** | 1/2 |
| 125 | **4096-QAM** | **256-QAM** | **256-QAM** | **256-QAM** | 1/2 |
| 126 | **1024-QAM** | **1024-QAM** | **256-QAM** | **256-QAM** | 1/2 |
| 127 | **4096-QAM** | **1024-QAM** | **256-QAM** | **256-QAM** | 1/2 |
| 128 | **4096-QAM** | **4096-QAM** | **256-QAM** | **256-QAM** | 1/2 |
| 129 | **1024-QAM** | **1024-QAM** | **1024-QAM** | **256-QAM** | 1/2 |
| 130 | **4096-QAM** | **1024-QAM** | **1024-QAM** | **256-QAM** | 1/2 |
| 131 | **4096-QAM** | **4096-QAM** | **1024-QAM** | **256-QAM** | 1/2 |
| 132 | **4096-QAM** | **4096-QAM** | **4096-QAM** | **256-QAM** | 1/2 |
| 133 | **4096-QAM** | **1024-QAM** | **1024-QAM** | **1024-QAM** | 1/2 |
| 134 | **4096-QAM** | **4096-QAM** | **1024-QAM** | **1024-QAM** | 1/2 |
| 135 | **4096-QAM** | **4096-QAM** | **4096-QAM** | **1024-QAM** | 1/2 |
| 136 | 16-QAM | QPSK | QPSK | QPSK | 3/4 |
| 137 | 64-QAM | QPSK | QPSK | QPSK | 3/4 |
| 138 | 256-QAM | QPSK | QPSK | QPSK | 3/4 |
| 139 | 1024-QAM | QPSK | QPSK | QPSK | 3/4 |
| 140 | 4096-QAM | QPSK | QPSK | QPSK | 3/4 |
| 141 | 16-QAM | 16-QAM | QPSK | QPSK | 3/4 |
| 142 | 64-QAM | 16-QAM | QPSK | QPSK | 3/4 |
| 143 | 256-QAM | 16-QAM | QPSK | QPSK | 3/4 |
| 144 | 1024-QAM | 16-QAM | QPSK | QPSK | 3/4 |
| 145 | 4096-QAM | 16-QAM | QPSK | QPSK | 3/4 |
| 146 | 64-QAM | 64-QAM | QPSK | QPSK | 3/4 |
| 147 | 256-QAM | 64-QAM | QPSK | QPSK | 3/4 |
| 148 | 1024-QAM | 64-QAM | QPSK | QPSK | 3/4 |
| 149 | 4096-QAM | 64-QAM | QPSK | QPSK | 3/4 |
| 150 | 256-QAM | 256-QAM | QPSK | QPSK | 3/4 |
| 151 | 1024-QAM | 256-QAM | QPSK | QPSK | 3/4 |
| 152 | 4096-QAM | 256-QAM | QPSK | QPSK | 3/4 |
| 153 | 1024-QAM | 1024-QAM | QPSK | QPSK | 3/4 |
| 154 | 4096-QAM | 1024-QAM | QPSK | QPSK | 3/4 |
| 155 | 4096-QAM | 4096-QAM | QPSK | QPSK | 3/4 |
| 156 | 16-QAM | 16-QAM | 16-QAM | QPSK | 3/4 |
| 157 | 64-QAM | 16-QAM | 16-QAM | QPSK | 3/4 |
| 158 | 256-QAM | 16-QAM | 16-QAM | QPSK | 3/4 |
| 159 | 1024-QAM | 16-QAM | 16-QAM | QPSK | 3/4 |
| 160 | 4096-QAM | 16-QAM | 16-QAM | QPSK | 3/4 |
| 161 | 64-QAM | 64-QAM | 16-QAM | QPSK | 3/4 |
| 162 | 256-QAM | 64-QAM | 16-QAM | QPSK | 3/4 |
| 163 | 1024-QAM | 64-QAM | 16-QAM | QPSK | 3/4 |
| 164 | 4096-QAM | 64-QAM | 16-QAM | QPSK | 3/4 |
| 165 | 256-QAM | 256-QAM | 16-QAM | QPSK | 3/4 |
| 166 | 1024-QAM | 256-QAM | 16-QAM | QPSK | 3/4 |
| 167 | 4096-QAM | 256-QAM | 16-QAM | QPSK | 3/4 |
| 168 | 1024-QAM | 1024-QAM | 16-QAM | QPSK | 3/4 |
| 169 | 4096-QAM | 1024-QAM | 16-QAM | QPSK | 3/4 |
| 170 | 4096-QAM | 4096-QAM | 16-QAM | QPSK | 3/4 |
| 171 | 64-QAM | 64-QAM | 64-QAM | QPSK | 3/4 |
| 172 | 256-QAM | 64-QAM | 64-QAM | QPSK | 3/4 |
| 173 | 1024-QAM | 64-QAM | 64-QAM | QPSK | 3/4 |
| 174 | 4096-QAM | 64-QAM | 64-QAM | QPSK | 3/4 |
| 175 | 256-QAM | 256-QAM | 64-QAM | QPSK | 3/4 |
| 176 | 1024-QAM | 256-QAM | 64-QAM | QPSK | 3/4 |
| 177 | 4096-QAM | 256-QAM | 64-QAM | QPSK | 3/4 |
| 178 | 1024-QAM | 1024-QAM | 64-QAM | QPSK | 3/4 |
| 179 | 4096-QAM | 1024-QAM | 64-QAM | QPSK | 3/4 |
| 180 | 4096-QAM | 4096-QAM | 64-QAM | QPSK | 3/4 |
| 181 | 256-QAM | 256-QAM | 256-QAM | QPSK | 3/4 |
| 182 | 1024-QAM | 256-QAM | 256-QAM | QPSK | 3/4 |
| 183 | 4096-QAM | 256-QAM | 256-QAM | QPSK | 3/4 |
| 184 | 1024-QAM | 1024-QAM | 256-QAM | QPSK | 3/4 |
| 185 | 4096-QAM | 1024-QAM | 256-QAM | QPSK | 3/4 |
| 186 | 4096-QAM | 4096-QAM | 256-QAM | QPSK | 3/4 |
| 187 | 1024-QAM | 1024-QAM | 1024-QAM | QPSK | 3/4 |
| 188 | 4096-QAM | 1024-QAM | 1024-QAM | QPSK | 3/4 |
| 189 | 4096-QAM | 4096-QAM | 1024-QAM | QPSK | 3/4 |
| 190 | 4096-QAM | 4096-QAM | 4096-QAM | QPSK | 3/4 |
| 191 | 64-QAM | 16-QAM | 16-QAM | 16-QAM | 3/4 |
| 192 | 256-QAM | 16-QAM | 16-QAM | 16-QAM | 3/4 |
| 193 | 1024-QAM | 16-QAM | 16-QAM | 16-QAM | 3/4 |
| 194 | 4096-QAM | 16-QAM | 16-QAM | 16-QAM | 3/4 |
| 195 | 64-QAM | 64-QAM | 16-QAM | 16-QAM | 3/4 |
| 196 | 256-QAM | 64-QAM | 16-QAM | 16-QAM | 3/4 |
| 197 | 1024-QAM | 64-QAM | 16-QAM | 16-QAM | 3/4 |
| 198 | 4096-QAM | 64-QAM | 16-QAM | 16-QAM | 3/4 |
| 199 | 256-QAM | 256-QAM | 16-QAM | 16-QAM | 3/4 |
| 200 | 1024-QAM | 256-QAM | 16-QAM | 16-QAM | 3/4 |
| 201 | 4096-QAM | 256-QAM | 16-QAM | 16-QAM | 3/4 |
| 202 | 1024-QAM | 1024-QAM | 16-QAM | 16-QAM | 3/4 |
| 203 | 4096-QAM | 1024-QAM | 16-QAM | 16-QAM | 3/4 |
| 204 | 4096-QAM | 4096-QAM | 16-QAM | 16-QAM | 3/4 |
| 205 | 64-QAM | 64-QAM | 64-QAM | 16-QAM | 3/4 |
| 206 | 256-QAM | 64-QAM | 64-QAM | 16-QAM | 3/4 |
| 207 | 1024-QAM | 64-QAM | 64-QAM | 16-QAM | 3/4 |
| 208 | 4096-QAM | 64-QAM | 64-QAM | 16-QAM | 3/4 |
| 209 | 256-QAM | 256-QAM | 64-QAM | 16-QAM | 3/4 |
| 210 | 1024-QAM | 256-QAM | 64-QAM | 16-QAM | 3/4 |
| 211 | 4096-QAM | 256-QAM | 64-QAM | 16-QAM | 3/4 |
| 212 | 1024-QAM | 1024-QAM | 64-QAM | 16-QAM | 3/4 |
| 213 | 4096-QAM | 1024-QAM | 64-QAM | 16-QAM | 3/4 |
| 214 | 4096-QAM | 4096-QAM | 64-QAM | 16-QAM | 3/4 |
| 215 | 256-QAM | 256-QAM | 256-QAM | 16-QAM | 3/4 |
| 216 | 1024-QAM | 256-QAM | 256-QAM | 16-QAM | 3/4 |
| 217 | 4096-QAM | 256-QAM | 256-QAM | 16-QAM | 3/4 |
| 218 | 1024-QAM | 1024-QAM | 256-QAM | 16-QAM | 3/4 |
| 219 | 4096-QAM | 1024-QAM | 256-QAM | 16-QAM | 3/4 |
| 220 | 4096-QAM | 4096-QAM | 256-QAM | 16-QAM | 3/4 |
| 221 | 1024-QAM | 1024-QAM | 1024-QAM | 16-QAM | 3/4 |
| 222 | 4096-QAM | 1024-QAM | 1024-QAM | 16-QAM | 3/4 |
| 223 | 4096-QAM | 4096-QAM | 1024-QAM | 16-QAM | 3/4 |
| 224 | 4096-QAM | 4096-QAM | 4096-QAM | 16-QAM | 3/4 |
| 225 | 256-QAM | 64-QAM | 64-QAM | 64-QAM | 3/4 |
| 226 | 1024-QAM | 64-QAM | 64-QAM | 64-QAM | 3/4 |
| 227 | 4096-QAM | 64-QAM | 64-QAM | 64-QAM | 3/4 |
| 228 | 256-QAM | 256-QAM | 64-QAM | 64-QAM | 3/4 |
| 229 | 1024-QAM | 256-QAM | 64-QAM | 64-QAM | 3/4 |
| 230 | 4096-QAM | 256-QAM | 64-QAM | 64-QAM | 3/4 |
| 231 | 1024-QAM | 1024-QAM | 64-QAM | 64-QAM | 3/4 |
| 232 | 4096-QAM | 1024-QAM | 64-QAM | 64-QAM | 3/4 |
| 233 | 4096-QAM | 4096-QAM | 64-QAM | 64-QAM | 3/4 |
| 234 | 256-QAM | 256-QAM | 256-QAM | 64-QAM | 3/4 |
| 235 | 1024-QAM | 256-QAM | 256-QAM | 64-QAM | 3/4 |
| 236 | 4096-QAM | 256-QAM | 256-QAM | 64-QAM | 3/4 |
| 237 | 1024-QAM | 1024-QAM | 256-QAM | 64-QAM | 3/4 |
| 238 | 4096-QAM | 1024-QAM | 256-QAM | 64-QAM | 3/4 |
| 239 | 4096-QAM | 4096-QAM | 256-QAM | 64-QAM | 3/4 |
| 240 | 1024-QAM | 1024-QAM | 1024-QAM | 64-QAM | 3/4 |
| 241 | 4096-QAM | 1024-QAM | 1024-QAM | 64-QAM | 3/4 |
| 242 | 4096-QAM | 4096-QAM | 1024-QAM | 64-QAM | 3/4 |
| 243 | 4096-QAM | 4096-QAM | 4096-QAM | 64-QAM | 3/4 |
| 244 | 1024-QAM | 256-QAM | 256-QAM | 256-QAM | 3/4 |
| 245 | 4096-QAM | 256-QAM | 256-QAM | 256-QAM | 3/4 |
| 246 | 1024-QAM | 1024-QAM | 256-QAM | 256-QAM | 3/4 |
| 247 | 4096-QAM | 1024-QAM | 256-QAM | 256-QAM | 3/4 |
| 248 | 4096-QAM | 4096-QAM | 256-QAM | 256-QAM | 3/4 |
| 249 | 1024-QAM | 1024-QAM | 1024-QAM | 256-QAM | 3/4 |
| 250 | 4096-QAM | 1024-QAM | 1024-QAM | 256-QAM | 3/4 |
| 251 | 4096-QAM | 4096-QAM | 1024-QAM | 256-QAM | 3/4 |
| 252 | 4096-QAM | 4096-QAM | 4096-QAM | 256-QAM | 3/4 |
| 253 | 4096-QAM | 1024-QAM | 1024-QAM | 1024-QAM | 3/4 |
| 254 | 4096-QAM | 4096-QAM | 1024-QAM | 1024-QAM | 3/4 |
| 255 | 4096-QAM | 4096-QAM | 4096-QAM | 1024-QAM | 3/4 |
| 256 | **16-QAM** | **QPSK** | **QPSK** | **QPSK** | 5/6 |
| 257 | 64-QAM | **QPSK** | **QPSK** | **QPSK** | 5/6 |
| 258 | 256-QAM | **QPSK** | **QPSK** | **QPSK** | 5/6 |
| 259 | 1024-QAM | **QPSK** | **QPSK** | **QPSK** | 5/6 |
| 260 | 4096-QAM | **QPSK** | **QPSK** | **QPSK** | 5/6 |
| 261 | **16-QAM** | **16-QAM** | **QPSK** | **QPSK** | 5/6 |
| 262 | 64-QAM | **16-QAM** | **QPSK** | **QPSK** | 5/6 |
| 263 | 256-QAM | **16-QAM** | **QPSK** | **QPSK** | 5/6 |
| 264 | 1024-QAM | **16-QAM** | **QPSK** | **QPSK** | 5/6 |
| 265 | 4096-QAM | **16-QAM** | **QPSK** | **QPSK** | 5/6 |
| 266 | 64-QAM | 64-QAM | **QPSK** | **QPSK** | 5/6 |
| 267 | 256-QAM | 64-QAM | **QPSK** | **QPSK** | 5/6 |
| 268 | 1024-QAM | 64-QAM | **QPSK** | **QPSK** | 5/6 |
| 269 | 4096-QAM | 64-QAM | **QPSK** | **QPSK** | 5/6 |
| 270 | 256-QAM | 256-QAM | **QPSK** | **QPSK** | 5/6 |
| 271 | 1024-QAM | 256-QAM | **QPSK** | **QPSK** | 5/6 |
| 272 | 4096-QAM | 256-QAM | **QPSK** | **QPSK** | 5/6 |
| 273 | 1024-QAM | 1024-QAM | **QPSK** | **QPSK** | 5/6 |
| 274 | 4096-QAM | 1024-QAM | **QPSK** | **QPSK** | 5/6 |
| 275 | 4096-QAM | 4096-QAM | **QPSK** | **QPSK** | 5/6 |
| 276 | **16-QAM** | **16-QAM** | **16-QAM** | **QPSK** | 5/6 |
| 277 | 64-QAM | **16-QAM** | **16-QAM** | **QPSK** | 5/6 |
| 278 | 256-QAM | **16-QAM** | **16-QAM** | **QPSK** | 5/6 |
| 279 | 1024-QAM | **16-QAM** | **16-QAM** | **QPSK** | 5/6 |
| 280 | 4096-QAM | **16-QAM** | **16-QAM** | **QPSK** | 5/6 |
| 281 | 64-QAM | 64-QAM | **16-QAM** | **QPSK** | 5/6 |
| 282 | 256-QAM | 64-QAM | **16-QAM** | **QPSK** | 5/6 |
| 283 | 1024-QAM | 64-QAM | **16-QAM** | **QPSK** | 5/6 |
| 284 | 4096-QAM | 64-QAM | **16-QAM** | **QPSK** | 5/6 |
| 285 | 256-QAM | 256-QAM | **16-QAM** | **QPSK** | 5/6 |
| 286 | 1024-QAM | 256-QAM | **16-QAM** | **QPSK** | 5/6 |
| 287 | 4096-QAM | 256-QAM | **16-QAM** | **QPSK** | 5/6 |
| 288 | 1024-QAM | 1024-QAM | **16-QAM** | **QPSK** | 5/6 |
| 289 | 4096-QAM | 1024-QAM | **16-QAM** | **QPSK** | 5/6 |
| 290 | 4096-QAM | 4096-QAM | **16-QAM** | **QPSK** | 5/6 |
| 291 | 64-QAM | 64-QAM | 64-QAM | **QPSK** | 5/6 |
| 292 | 256-QAM | 64-QAM | 64-QAM | **QPSK** | 5/6 |
| 293 | 1024-QAM | 64-QAM | 64-QAM | **QPSK** | 5/6 |
| 294 | 4096-QAM | 64-QAM | 64-QAM | **QPSK** | 5/6 |
| 295 | 256-QAM | 256-QAM | 64-QAM | **QPSK** | 5/6 |
| 296 | 1024-QAM | 256-QAM | 64-QAM | **QPSK** | 5/6 |
| 297 | 4096-QAM | 256-QAM | 64-QAM | **QPSK** | 5/6 |
| 298 | 1024-QAM | 1024-QAM | 64-QAM | **QPSK** | 5/6 |
| 299 | 4096-QAM | 1024-QAM | 64-QAM | **QPSK** | 5/6 |
| 300 | 4096-QAM | 4096-QAM | 64-QAM | **QPSK** | 5/6 |
| 301 | 256-QAM | 256-QAM | 256-QAM | **QPSK** | 5/6 |
| 302 | 1024-QAM | 256-QAM | 256-QAM | **QPSK** | 5/6 |
| 303 | 4096-QAM | 256-QAM | 256-QAM | **QPSK** | 5/6 |
| 304 | 1024-QAM | 1024-QAM | 256-QAM | **QPSK** | 5/6 |
| 305 | 4096-QAM | 1024-QAM | 256-QAM | **QPSK** | 5/6 |
| 306 | 4096-QAM | 4096-QAM | 256-QAM | **QPSK** | 5/6 |
| 307 | 1024-QAM | 1024-QAM | 1024-QAM | **QPSK** | 5/6 |
| 308 | 4096-QAM | 1024-QAM | 1024-QAM | **QPSK** | 5/6 |
| 309 | 4096-QAM | 4096-QAM | 1024-QAM | **QPSK** | 5/6 |
| 310 | 4096-QAM | 4096-QAM | 4096-QAM | **QPSK** | 5/6 |
| 311 | 64-QAM | **16-QAM** | **16-QAM** | **16-QAM** | 5/6 |
| 312 | 256-QAM | **16-QAM** | **16-QAM** | **16-QAM** | 5/6 |
| 313 | 1024-QAM | **16-QAM** | **16-QAM** | **16-QAM** | 5/6 |
| 314 | 4096-QAM | **16-QAM** | **16-QAM** | **16-QAM** | 5/6 |
| 315 | 64-QAM | 64-QAM | **16-QAM** | **16-QAM** | 5/6 |
| 316 | 256-QAM | 64-QAM | **16-QAM** | **16-QAM** | 5/6 |
| 317 | 1024-QAM | 64-QAM | **16-QAM** | **16-QAM** | 5/6 |
| 318 | 4096-QAM | 64-QAM | **16-QAM** | **16-QAM** | 5/6 |
| 319 | 256-QAM | 256-QAM | **16-QAM** | **16-QAM** | 5/6 |
| 320 | 1024-QAM | 256-QAM | **16-QAM** | **16-QAM** | 5/6 |
| 321 | 4096-QAM | 256-QAM | **16-QAM** | **16-QAM** | 5/6 |
| 322 | 1024-QAM | 1024-QAM | **16-QAM** | **16-QAM** | 5/6 |
| 323 | 4096-QAM | 1024-QAM | **16-QAM** | **16-QAM** | 5/6 |
| 324 | 4096-QAM | 4096-QAM | **16-QAM** | **16-QAM** | 5/6 |
| 325 | 64-QAM | 64-QAM | 64-QAM | **16-QAM** | 5/6 |
| 326 | 256-QAM | 64-QAM | 64-QAM | **16-QAM** | 5/6 |
| 327 | 1024-QAM | 64-QAM | 64-QAM | **16-QAM** | 5/6 |
| 328 | 4096-QAM | 64-QAM | 64-QAM | **16-QAM** | 5/6 |
| 329 | 256-QAM | 256-QAM | 64-QAM | **16-QAM** | 5/6 |
| 330 | 1024-QAM | 256-QAM | 64-QAM | **16-QAM** | 5/6 |
| 331 | 4096-QAM | 256-QAM | 64-QAM | **16-QAM** | 5/6 |
| 332 | 1024-QAM | 1024-QAM | 64-QAM | **16-QAM** | 5/6 |
| 333 | 4096-QAM | 1024-QAM | 64-QAM | **16-QAM** | 5/6 |
| 334 | 4096-QAM | 4096-QAM | 64-QAM | **16-QAM** | 5/6 |
| 335 | 256-QAM | 256-QAM | 256-QAM | **16-QAM** | 5/6 |
| 336 | 1024-QAM | 256-QAM | 256-QAM | **16-QAM** | 5/6 |
| 337 | 4096-QAM | 256-QAM | 256-QAM | **16-QAM** | 5/6 |
| 338 | 1024-QAM | 1024-QAM | 256-QAM | **16-QAM** | 5/6 |
| 339 | 4096-QAM | 1024-QAM | 256-QAM | **16-QAM** | 5/6 |
| 340 | 4096-QAM | 4096-QAM | 256-QAM | **16-QAM** | 5/6 |
| 341 | 1024-QAM | 1024-QAM | 1024-QAM | **16-QAM** | 5/6 |
| 342 | 4096-QAM | 1024-QAM | 1024-QAM | **16-QAM** | 5/6 |
| 343 | 4096-QAM | 4096-QAM | 1024-QAM | **16-QAM** | 5/6 |
| 344 | 4096-QAM | 4096-QAM | 4096-QAM | **16-QAM** | 5/6 |
| 345 | 256-QAM | 64-QAM | 64-QAM | 64-QAM | 5/6 |
| 346 | 1024-QAM | 64-QAM | 64-QAM | 64-QAM | 5/6 |
| 347 | 4096-QAM | 64-QAM | 64-QAM | 64-QAM | 5/6 |
| 348 | 256-QAM | 256-QAM | 64-QAM | 64-QAM | 5/6 |
| 349 | 1024-QAM | 256-QAM | 64-QAM | 64-QAM | 5/6 |
| 350 | 4096-QAM | 256-QAM | 64-QAM | 64-QAM | 5/6 |
| 351 | 1024-QAM | 1024-QAM | 64-QAM | 64-QAM | 5/6 |
| 352 | 4096-QAM | 1024-QAM | 64-QAM | 64-QAM | 5/6 |
| 353 | 4096-QAM | 4096-QAM | 64-QAM | 64-QAM | 5/6 |
| 354 | 256-QAM | 256-QAM | 256-QAM | 64-QAM | 5/6 |
| 355 | 1024-QAM | 256-QAM | 256-QAM | 64-QAM | 5/6 |
| 356 | 4096-QAM | 256-QAM | 256-QAM | 64-QAM | 5/6 |
| 357 | 1024-QAM | 1024-QAM | 256-QAM | 64-QAM | 5/6 |
| 358 | 4096-QAM | 1024-QAM | 256-QAM | 64-QAM | 5/6 |
| 359 | 4096-QAM | 4096-QAM | 256-QAM | 64-QAM | 5/6 |
| 360 | 1024-QAM | 1024-QAM | 1024-QAM | 64-QAM | 5/6 |
| 361 | 4096-QAM | 1024-QAM | 1024-QAM | 64-QAM | 5/6 |
| 362 | 4096-QAM | 4096-QAM | 1024-QAM | 64-QAM | 5/6 |
| 363 | 4096-QAM | 4096-QAM | 4096-QAM | 64-QAM | 5/6 |
| 364 | 1024-QAM | 256-QAM | 256-QAM | 256-QAM | 5/6 |
| 365 | 4096-QAM | 256-QAM | 256-QAM | 256-QAM | 5/6 |
| 366 | 1024-QAM | 1024-QAM | 256-QAM | 256-QAM | 5/6 |
| 367 | 4096-QAM | 1024-QAM | 256-QAM | 256-QAM | 5/6 |
| 368 | 4096-QAM | 4096-QAM | 256-QAM | 256-QAM | 5/6 |
| 369 | 1024-QAM | 1024-QAM | 1024-QAM | 256-QAM | 5/6 |
| 370 | 4096-QAM | 1024-QAM | 1024-QAM | 256-QAM | 5/6 |
| 371 | 4096-QAM | 4096-QAM | 1024-QAM | 256-QAM | 5/6 |
| 372 | 4096-QAM | 4096-QAM | 4096-QAM | 256-QAM | 5/6 |
| 373 | 4096-QAM | 1024-QAM | 1024-QAM | 1024-QAM | 5/6 |
| 374 | 4096-QAM | 4096-QAM | 1024-QAM | 1024-QAM | 5/6 |
| 375 | 4096-QAM | 4096-QAM | 4096-QAM | 1024-QAM | 5/6 |
| 376 to END (for example, End=511) | 4096-QAM | 4096-QAM | 4096-QAM | 1024-QAM | 5/6 |

Table 14 is an example of a UEQM index table with NSS=4.

In the UEQM index table shown above, the second spatial stream, the third spatial stream, and the fourth spatial stream may alternatively be indicated by using a difference between the first spatial stream and the second spatial stream, a difference between the first spatial stream and the third spatial stream, and a difference between the first spatial stream and the fourth spatial stream, as shown in Table 15. In Table 15, various QAMs corresponding to the second spatial stream, the third spatial stream, and the fourth spatial stream are replaced with difference indexes. For example, if the first spatial stream is QPSK, a difference 0 indicates 16-QAM, a difference 1 indicates 64-QAM, and a difference 2 indicates 256-QAM.

**Table 15**

| QAM difference index | Modulation scheme of a first spatial stream | | | | | |
|---|---|---|---|---|---|---|
| | QPSK | 16-QAM | 64-QAM | 256-QAM | 1024-QAM | 4096-QAM |
| 0 | QPSK | 16-QAM | 64-QAM | 256-QAM | 1024-QAM | 4096-QAM |
| 1 | 16-QAM | 64-QAM | 256-QAM | 1024-QAM | 4096-QAM | Reserved |
| 2 | 64-QAM | 256-QAM | 1024-QAM | 4096-QAM | Reserved | Reserved |
| 3 | 256-QAM | 1024-QAM | 4096-QAM | Reserved | Reserved | Reserved |
| 4 | 1024-QAM | 4096-QAM | Reserved | Reserved | Reserved | Reserved |
| 5 | 4096-QAM | Reserved | Reserved | Reserved | Reserved | Reserved |
| 6-END | Reserved | | | | | |

It can be seen from the foregoing UEQM index table that, as the NSS increases, a number of entries in the UEQM index table increases significantly. In other words, when NSSs are different, numbers of indexes included in different UEQM index tables are different. For example, when NSS=2, a number of bits required by the UEQM MCS field is 6. Refer to Table 12. For example, when NSS=3, a number of bits required by the UEQM MCS field is 8. Refer to Table 13. For example, when NSS=4, a number of bits required by the UEQM MCS field is 9. Refer to Table 14. When values of the NSS field in the user field are different, minimum numbers of bits required by the UEQM MCS field are different. If a length of the UEQM MCS field is defined based on the minimum number of bits required by the UEQM MCS field, lengths of user fields under different numbers of spatial streams are different.

The following describes two possible manners used to make the user fields under different numbers of spatial streams have an equal length.

In a possible implementation, a length of a corresponding UEQM MCS field is defined based on a number of bits required by a number of indexes under a maximum number of streams. For example, END in Table 12, Table 13, and Table 14 is defined as 511, the length of the UEQM MCS field is 9 bits, and there are different numbers of reserved entries in Table 12, Table 13, and Table 14. In another possible implementation, lengths of the UEQM MCS field are different under different numbers of spatial streams, and the user fields under different spatial streams are aligned by using an additional reserved bit. For example, under different numbers of spatial streams, the length of the UEQM MCS field and the length of the reserved field are shown as follows:
when NSS=2, the length of the UEQM MCS field is 6 bits, and the length of the reserved field is (X+3) bits;
when NSS=3, the length of the UEQM MCS field is 8 bits, and the length of the reserved field is (X+1) bits; and
when NSS=4, the length of the UEQM MCS field is 9 bits, and the length of the reserved field is X bits, where X is greater than or equal to 0.

Considering that a number of antennas of a terminal device (or a station) is usually less than or equal to 4, it may be considered that the UEQM MCS field supports a maximum of 4 SSs (in other words, NSS=4). Nevertheless, the UEQM MCS field still requires 9 bits, and an additional 5 bits need to be provided compared with the 4 bits of the MCS field. If it is expected to ensure that the user fields in two different formats (refer to FIG. 16 or FIG. 17) have the equal length and simplify demodulation and parsing of the receiver, in a case of the EQM modulation, a plurality of reserved bits need to be introduced, resulting in an increase in overheads. Therefore, how to reduce the overheads needs to be considered, in other words, a number of entries indicated by the UEQM MCS field needs to be reduced.

A first manner of reducing the overheads is to limit a difference between highest modulation order and lowest modulation order of a spatial stream used by a same user from differing significantly. For example, a difference between a highest MCS index and a lowest MCS index that are used by the spatial stream and that are indicated by the seventh field is less than or equal to a second threshold, and the second threshold is a positive integer less than 10. For example, the difference between the highest modulation order and the lowest modulation order that are used by the spatial stream and that are indicated by the seventh field is less than or equal to 6. For example, when lowest modulation used by a spatial stream of a user is QPSK (an order is 2), highest modulation used by the spatial stream of the user is 256-QAM (an order is 8); when lowest modulation used by a spatial stream of a user is 16-QAM (an order is 4), highest modulation used by the spatial stream of the user is 1024-QAM (an order is 10); or when lowest modulation used by a spatial stream of a user is 64-QAM (an order is 6), highest modulation used by the spatial stream of the user is 4096-QAM (an order is 12). An order of BPSK is 1. If modulation scheme orders used by a spatial stream of a user differ greatly, a throughput gain brought by low modulation is not obvious. To balance an increase in complexity caused by the number of entries (that is, a number of indexes) indicated by the UEQM MCS field and excessive implementation modes of the receiver, because a number of entries of the 4 SSs is the largest, the 4 SSs may be simplified, or all NSSs may be simplified, to simplify implementation of the receiver. For example, to reduce the number of entries indicated by the UEQM MCS field, Table 14 is optimized in an optimization manner 4, to be specific, one or more indexes in Table 14 are removed (deleted). A difference between a highest MCS index and a lowest MCS index that are used by a spatial stream and that are indicated by the one or more indexes is greater than the second threshold. Table 16 may be obtained by optimizing Table 14 in the optimization manner 4. A difference between a highest MCS index and a lowest MCS index that are used by a spatial stream and that are indicated by each index in Table 16 is less than or equal to 6, in other words, the second threshold is 6.

**Table 16**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | 64-QAM | QPSK | QPSK | QPSK | 1/2 |
| 18 | 256-QAM | QPSK | QPSK | QPSK | 1/2 |
| 19 | 16-QAM | 16-QAM | QPSK | QPSK | 1/2 |
| 20 | 64-QAM | 16-QAM | QPSK | QPSK | 1/2 |
| 21 | 256-QAM | 16-QAM | QPSK | QPSK | 1/2 |
| 22 | 64-QAM | 64-QAM | QPSK | QPSK | 1/2 |
| 23 | 256-QAM | 64-QAM | QPSK | QPSK | 1/2 |
| 24 | 256-QAM | 256-QAM | QPSK | QPSK | 1/2 |
| 25 | 16-QAM | 16-QAM | 16-QAM | QPSK | 1/2 |
| 26 | 64-QAM | 16-QAM | 16-QAM | QPSK | 1/2 |
| 27 | 256-QAM | 16-QAM | 16-QAM | QPSK | 1/2 |
| 28 | 64-QAM | 64-QAM | 16-QAM | QPSK | 1/2 |
| 29 | 256-QAM | 64-QAM | 16-QAM | QPSK | 1/2 |
| 30 | 256-QAM | 256-QAM | 16-QAM | QPSK | 1/2 |
| 31 | 64-QAM | 64-QAM | 64-QAM | QPSK | 1/2 |
| 32 | 256-QAM | 64-QAM | 64-QAM | QPSK | 1/2 |
| 33 | 256-QAM | 256-QAM | 64-QAM | QPSK | 1/2 |
| 34 | 256-QAM | 256-QAM | 256-QAM | QPSK | 1/2 |
| 35 | 64-QAM | 16-QAM | 16-QAM | 16-QAM | 1/2 |
| 36 | 256-QAM | 16-QAM | 16-QAM | 16-QAM | 1/2 |
| 37 | 1024-QAM | 16-QAM | 16-QAM | 16-QAM | 1/2 |
| 38 | 64-QAM | 64-QAM | 16-QAM | 16-QAM | 1/2 |
| 39 | 256-QAM | 64-QAM | 16-QAM | 16-QAM | 1/2 |
| 40 | 1024-QAM | 64-QAM | 16-QAM | 16-QAM | 1/2 |
| 41 | 256-QAM | 256-QAM | 16-QAM | 16-QAM | 1/2 |
| 42 | 1024-QAM | 256-QAM | 16-QAM | 16-QAM | 1/2 |
| 43 | 1024-QAM | 1024-QAM | 16-QAM | 16-QAM | 1/2 |
| 44 | 64-QAM | 64-QAM | 64-QAM | 16-QAM | 1/2 |
| 45 | 256-QAM | 64-QAM | 64-QAM | 16-QAM | 1/2 |
| 46 | 1024-QAM | 64-QAM | 64-QAM | 16-QAM | 1/2 |
| 47 | 256-QAM | 256-QAM | 64-QAM | 16-QAM | 1/2 |
| 48 | 1024-QAM | 256-QAM | 64-QAM | 16-QAM | 1/2 |
| 49 | 1024-QAM | 1024-QAM | 64-QAM | 16-QAM | 1/2 |
| 50 | 256-QAM | 256-QAM | 256-QAM | 16-QAM | 1/2 |
| 51 | 1024-QAM | 256-QAM | 256-QAM | 16-QAM | 1/2 |
| 52 | 1024-QAM | 1024-QAM | 256-QAM | 16-QAM | 1/2 |
| 53 | 1024-QAM | 1024-QAM | 1024-QAM | 16-QAM | 1/2 |
| 54 | 256-QAM | 64-QAM | 64-QAM | 64-QAM | 1/2 |
| 55 | 1024-QAM | 64-QAM | 64-QAM | 64-QAM | 1/2 |
| 56 | 4096-QAM | 64-QAM | 64-QAM | 64-QAM | 1/2 |
| 57 | 256-QAM | 256-QAM | 64-QAM | 64-QAM | 1/2 |
| 58 | 1024-QAM | 256-QAM | 64-QAM | 64-QAM | 1/2 |
| 59 | 4096-QAM | 256-QAM | 64-QAM | 64-QAM | 1/2 |
| 60 | 1024-QAM | 1024-QAM | 64-QAM | 64-QAM | 1/2 |
| 61 | 4096-QAM | 1024-QAM | 64-QAM | 64-QAM | 1/2 |
| 62 | 4096-QAM | 4096-QAM | 64-QAM | 64-QAM | 1/2 |
| 63 | 256-QAM | 256-QAM | 256-QAM | 64-QAM | 1/2 |
| 64 | 1024-QAM | 256-QAM | 256-QAM | 64-QAM | 1/2 |
| 65 | 4096-QAM | 256-QAM | 256-QAM | 64-QAM | 1/2 |
| 66 | 1024-QAM | 1024-QAM | 256-QAM | 64-QAM | 1/2 |
| 67 | 4096-QAM | 1024-QAM | 256-QAM | 64-QAM | 1/2 |
| 68 | 4096-QAM | 4096-QAM | 256-QAM | 64-QAM | 1/2 |
| 69 | 1024-QAM | 1024-QAM | 1024-QAM | 64-QAM | 1/2 |
| 70 | 4096-QAM | 1024-QAM | 1024-QAM | 64-QAM | 1/2 |
| 71 | 4096-QAM | 4096-QAM | 1024-QAM | 64-QAM | 1/2 |
| 72 | 4096-QAM | 4096-QAM | 4096-QAM | 64-QAM | 1/2 |
| 73 | 1024-QAM | 256-QAM | 256-QAM | 256-QAM | 1/2 |
| 74 | 4096-QAM | 256-QAM | 256-QAM | 256-QAM | 1/2 |
| 75 | 1024-QAM | 1024-QAM | 256-QAM | 256-QAM | 1/2 |
| 76 | 4096-QAM | 1024-QAM | 256-QAM | 256-QAM | 1/2 |
| 77 | 4096-QAM | 4096-QAM | 256-QAM | 256-QAM | 1/2 |
| 78 | 1024-QAM | 1024-QAM | 1024-QAM | 256-QAM | 1/2 |
| 79 | 4096-QAM | 1024-QAM | 1024-QAM | 256-QAM | 1/2 |
| 80 | 4096-QAM | 4096-QAM | 1024-QAM | 256-QAM | 1/2 |
| 81 | 4096-QAM | 4096-QAM | 4096-QAM | 256-QAM | 1/2 |
| 82 | 4096-QAM | 1024-QAM | 1024-QAM | 1024-QAM | 1/2 |
| 83 | 4096-QAM | 4096-QAM | 1024-QAM | 1024-QAM | 1/2 |
| 84 | 4096-QAM | 4096-QAM | 4096-QAM | 1024-QAM | 1/2 |
| 85 | 16-QAM | QPSK | QPSK | QPSK | 3/4 |
| 86 | 64-QAM | QPSK | QPSK | QPSK | 3/4 |
| 87 | 256-QAM | QPSK | QPSK | QPSK | 3/4 |
| 88 | 16-QAM | 16-QAM | QPSK | QPSK | 3/4 |
| 89 | 64-QAM | 16-QAM | QPSK | QPSK | 3/4 |
| 90 | 256-QAM | 16-QAM | QPSK | QPSK | 3/4 |
| 91 | 64-QAM | 64-QAM | QPSK | QPSK | 3/4 |
| 92 | 256-QAM | 64-QAM | QPSK | QPSK | 3/4 |
| 93 | 256-QAM | 256-QAM | QPSK | QPSK | 3/4 |
| 94 | 16-QAM | 16-QAM | 16-QAM | QPSK | 3/4 |
| 95 | 64-QAM | 16-QAM | 16-QAM | QPSK | 3/4 |
| 96 | 256-QAM | 16-QAM | 16-QAM | QPSK | 3/4 |
| 97 | 64-QAM | 64-QAM | 16-QAM | QPSK | 3/4 |
| 98 | 256-QAM | 64-QAM | 16-QAM | QPSK | 3/4 |
| 99 | 256-QAM | 256-QAM | 16-QAM | QPSK | 3/4 |
| 100 | 64-QAM | 64-QAM | 64-QAM | QPSK | 3/4 |
| 101 | 256-QAM | 64-QAM | 64-QAM | QPSK | 3/4 |
| 102 | 256-QAM | 256-QAM | 64-QAM | QPSK | 3/4 |
| 103 | 256-QAM | 256-QAM | 256-QAM | QPSK | 3/4 |
| 104 | 64-QAM | 16-QAM | 16-QAM | 16-QAM | 3/4 |
| 105 | 256-QAM | 16-QAM | 16-QAM | 16-QAM | 3/4 |
| 106 | 1024-QAM | 16-QAM | 16-QAM | 16-QAM | 3/4 |
| 107 | 64-QAM | 64-QAM | 16-QAM | 16-QAM | 3/4 |
| 108 | 256-QAM | 64-QAM | 16-QAM | 16-QAM | 3/4 |
| 109 | 1024-QAM | 64-QAM | 16-QAM | 16-QAM | 3/4 |
| 110 | 256-QAM | 256-QAM | 16-QAM | 16-QAM | 3/4 |
| 111 | 1024-QAM | 256-QAM | 16-QAM | 16-QAM | 3/4 |
| 112 | 1024-QAM | 1024-QAM | 16-QAM | 16-QAM | 3/4 |
| 113 | 64-QAM | 64-QAM | 64-QAM | 16-QAM | 3/4 |
| 114 | 256-QAM | 64-QAM | 64-QAM | 16-QAM | 3/4 |
| 115 | 1024-QAM | 64-QAM | 64-QAM | 16-QAM | 3/4 |
| 116 | 256-QAM | 256-QAM | 64-QAM | 16-QAM | 3/4 |
| 117 | 1024-QAM | 256-QAM | 64-QAM | 16-QAM | 3/4 |
| 118 | 1024-QAM | 1024-QAM | 64-QAM | 16-QAM | 3/4 |
| 119 | 256-QAM | 256-QAM | 256-QAM | 16-QAM | 3/4 |
| 120 | 1024-QAM | 256-QAM | 256-QAM | 16-QAM | 3/4 |
| 121 | 1024-QAM | 1024-QAM | 256-QAM | 16-QAM | 3/4 |
| 122 | 1024-QAM | 1024-QAM | 1024-QAM | 16-QAM | 3/4 |
| 123 | 256-QAM | 64-QAM | 64-QAM | 64-QAM | 3/4 |
| 124 | 1024-QAM | 64-QAM | 64-QAM | 64-QAM | 3/4 |
| 125 | 4096-QAM | 64-QAM | 64-QAM | 64-QAM | 3/4 |
| 126 | 256-QAM | 256-QAM | 64-QAM | 64-QAM | 3/4 |
| 127 | 1024-QAM | 256-QAM | 64-QAM | 64-QAM | 3/4 |
| 128 | 4096-QAM | 256-QAM | 64-QAM | 64-QAM | 3/4 |
| 129 | 1024-QAM | 1024-QAM | 64-QAM | 64-QAM | 3/4 |
| 130 | 4096-QAM | 1024-QAM | 64-QAM | 64-QAM | 3/4 |
| 131 | 4096-QAM | 4096-QAM | 64-QAM | 64-QAM | 3/4 |
| 132 | 256-QAM | 256-QAM | 256-QAM | 64-QAM | 3/4 |
| 133 | 1024-QAM | 256-QAM | 256-QAM | 64-QAM | 3/4 |
| 134 | 4096-QAM | 256-QAM | 256-QAM | 64-QAM | 3/4 |
| 135 | 1024-QAM | 1024-QAM | 256-QAM | 64-QAM | 3/4 |
| 136 | 4096-QAM | 1024-QAM | 256-QAM | 64-QAM | 3/4 |
| 137 | 4096-QAM | 4096-QAM | 256-QAM | 64-QAM | 3/4 |
| 138 | 1024-QAM | 1024-QAM | 1024-QAM | 64-QAM | 3/4 |
| 139 | 4096-QAM | 1024-QAM | 1024-QAM | 64-QAM | 3/4 |
| 140 | 4096-QAM | 4096-QAM | 1024-QAM | 64-QAM | 3/4 |
| 141 | 4096-QAM | 4096-QAM | 4096-QAM | 64-QAM | 3/4 |
| 142 | 1024-QAM | 256-QAM | 256-QAM | 256-QAM | 3/4 |
| 143 | 4096-QAM | 256-QAM | 256-QAM | 256-QAM | 3/4 |
| 144 | 1024-QAM | 1024-QAM | 256-QAM | 256-QAM | 3/4 |
| 145 | 4096-QAM | 1024-QAM | 256-QAM | 256-QAM | 3/4 |
| 146 | 4096-QAM | 4096-QAM | 256-QAM | 256-QAM | 3/4 |
| 147 | 1024-QAM | 1024-QAM | 1024-QAM | 256-QAM | 3/4 |
| 148 | 4096-QAM | 1024-QAM | 1024-QAM | 256-QAM | 3/4 |
| 149 | 4096-QAM | 4096-QAM | 1024-QAM | 256-QAM | 3/4 |
| 150 | 4096-QAM | 4096-QAM | 4096-QAM | 256-QAM | 3/4 |
| 151 | 4096-QAM | 1024-QAM | 1024-QAM | 1024-QAM | 3/4 |
| 152 | 4096-QAM | 4096-QAM | 1024-QAM | 1024-QAM | 3/4 |
| 153 | 4096-QAM | 4096-QAM | 4096-QAM | 1024-QAM | 3/4 |
| 154 | 16-QAM | QPSK | QPSK | QPSK | 5/6 |
| 155 | 64-QAM | QPSK | QPSK | QPSK | 5/6 |
| 156 | 256-QAM | QPSK | QPSK | QPSK | 5/6 |
| 157 | 16-QAM | 16-QAM | QPSK | QPSK | 5/6 |
| 158 | 64-QAM | 16-QAM | QPSK | QPSK | 5/6 |
| 159 | 256-QAM | 16-QAM | QPSK | QPSK | 5/6 |
| 160 | 64-QAM | 64-QAM | QPSK | QPSK | 5/6 |
| 161 | 256-QAM | 64-QAM | QPSK | QPSK | 5/6 |
| 162 | 256-QAM | 256-QAM | QPSK | QPSK | 5/6 |
| 163 | 16-QAM | 16-QAM | 16-QAM | QPSK | 5/6 |
| 164 | 64-QAM | 16-QAM | 16-QAM | QPSK | 5/6 |
| 165 | 256-QAM | 16-QAM | 16-QAM | QPSK | 5/6 |
| 166 | 64-QAM | 64-QAM | 16-QAM | QPSK | 5/6 |
| 167 | 256-QAM | 64-QAM | 16-QAM | QPSK | 5/6 |
| 168 | 256-QAM | 256-QAM | 16-QAM | QPSK | 5/6 |
| 169 | 64-QAM | 64-QAM | 64-QAM | QPSK | 5/6 |
| 170 | 256-QAM | 64-QAM | 64-QAM | QPSK | 5/6 |
| 171 | 256-QAM | 256-QAM | 64-QAM | QPSK | 5/6 |
| 172 | 256-QAM | 256-QAM | 256-QAM | QPSK | 5/6 |
| 173 | 64-QAM | 16-QAM | 16-QAM | 16-QAM | 5/6 |
| 174 | 256-QAM | 16-QAM | 16-QAM | 16-QAM | 5/6 |
| 175 | 1024-QAM | 16-QAM | 16-QAM | 16-QAM | 5/6 |
| 176 | 64-QAM | 64-QAM | 16-QAM | 16-QAM | 5/6 |
| 177 | 256-QAM | 64-QAM | 16-QAM | 16-QAM | 5/6 |
| 178 | 1024-QAM | 64-QAM | 16-QAM | 16-QAM | 5/6 |
| 179 | 256-QAM | 256-QAM | 16-QAM | 16-QAM | 5/6 |
| 180 | 1024-QAM | 256-QAM | 16-QAM | 16-QAM | 5/6 |
| 181 | 1024-QAM | 1024-QAM | 16-QAM | 16-QAM | 5/6 |
| 182 | 64-QAM | 64-QAM | 64-QAM | 16-QAM | 5/6 |
| 183 | 256-QAM | 64-QAM | 64-QAM | 16-QAM | 5/6 |
| 184 | 1024-QAM | 64-QAM | 64-QAM | 16-QAM | 5/6 |
| 185 | 256-QAM | 256-QAM | 64-QAM | 16-QAM | 5/6 |
| 186 | 1024-QAM | 256-QAM | 64-QAM | 16-QAM | 5/6 |
| 187 | 1024-QAM | 1024-QAM | 64-QAM | 16-QAM | 5/6 |
| 188 | 256-QAM | 256-QAM | 256-QAM | 16-QAM | 5/6 |
| 189 | 1024-QAM | 256-QAM | 256-QAM | 16-QAM | 5/6 |
| 190 | 1024-QAM | 1024-QAM | 256-QAM | 16-QAM | 5/6 |
| 191 | 1024-QAM | 1024-QAM | 1024-QAM | 16-QAM | 5/6 |
| 192 | 256-QAM | 64-QAM | 64-QAM | 64-QAM | 5/6 |
| 193 | 1024-QAM | 64-QAM | 64-QAM | 64-QAM | 5/6 |
| 194 | 4096-QAM | 64-QAM | 64-QAM | 64-QAM | 5/6 |
| 195 | 256-QAM | 256-QAM | 64-QAM | 64-QAM | 5/6 |
| 196 | 1024-QAM | 256-QAM | 64-QAM | 64-QAM | 5/6 |
| 197 | 4096-QAM | 256-QAM | 64-QAM | 64-QAM | 5/6 |
| 198 | 1024-QAM | 1024-QAM | 64-QAM | 64-QAM | 5/6 |
| 199 | 4096-QAM | 1024-QAM | 64-QAM | 64-QAM | 5/6 |
| 200 | 4096-QAM | 4096-QAM | 64-QAM | 64-QAM | 5/6 |
| 201 | 256-QAM | 256-QAM | 256-QAM | 64-QAM | 5/6 |
| 202 | 1024-QAM | 256-QAM | 256-QAM | 64-QAM | 5/6 |
| 203 | 4096-QAM | 256-QAM | 256-QAM | 64-QAM | 5/6 |
| 204 | 1024-QAM | 1024-QAM | 256-QAM | 64-QAM | 5/6 |
| 205 | 4096-QAM | 1024-QAM | 256-QAM | 64-QAM | 5/6 |
| 206 | 4096-QAM | 4096-QAM | 256-QAM | 64-QAM | 5/6 |
| 207 | 1024-QAM | 1024-QAM | 1024-QAM | 64-QAM | 5/6 |
| 208 | 4096-QAM | 1024-QAM | 1024-QAM | 64-QAM | 5/6 |
| 209 | 4096-QAM | 4096-QAM | 1024-QAM | 64-QAM | 5/6 |
| 210 | 4096-QAM | 4096-QAM | 4096-QAM | 64-QAM | 5/6 |
| 211 | 1024-QAM | 256-QAM | 256-QAM | 256-QAM | 5/6 |
| 212 | 4096-QAM | 256-QAM | 256-QAM | 256-QAM | 5/6 |
| 213 | 1024-QAM | 1024-QAM | 256-QAM | 256-QAM | 5/6 |
| 214 | 4096-QAM | 1024-QAM | 256-QAM | 256-QAM | 5/6 |
| 215 | 4096-QAM | 4096-QAM | 256-QAM | 256-QAM | 5/6 |
| 216 | 1024-QAM | 1024-QAM | 1024-QAM | 256-QAM | 5/6 |
| 217 | 4096-QAM | 1024-QAM | 1024-QAM | 256-QAM | 5/6 |
| 218 | 4096-QAM | 4096-QAM | 1024-QAM | 256-QAM | 5/6 |
| 219 | 4096-QAM | 4096-QAM | 4096-QAM | 256-QAM | 5/6 |
| 220 | 4096-QAM | 1024-QAM | 1024-QAM | 1024-QAM | 5/6 |
| 221 | 4096-QAM | 4096-QAM | 1024-QAM | 1024-QAM | 5/6 |
| 222 | 4096-QAM | 4096-QAM | 4096-QAM | 1024-QAM | 5/6 |
| 223 to END (for example, End=255) | 4096-QAM | 4096-QAM | 4096-QAM | 1024-QAM | 5/6 |

It can be learned by comparing Table 14 with Table 16 that, after Table 14 is optimized in the optimization manner 4, 376-223=153 entries in Table 14 are reduced, and 1-bit overheads are saved for the UEQM MCS field, in other words, 1-bit overheads are saved for each user.

The following describes a manner of optimizing the UEQM index table in an optimization manner 5. For the EQM, different QAMs support different coding rates. As shown in Table 11, QPSK and 16-QAM do not support the coding rate of 5/6, and 64-QAM and QAM with a higher order do not support the coding rate of 1/2. In the optimization manner 5, a modulation+coding rate combination that is not supported under the EQM may be deleted, that is, the bold entries in Table 12 to Table 14. In this way, complexity of the transmitter and the receiver can be reduced. For example, the MCS that is used by the spatial stream and that is indicated by the seventh field is a supported MCS under the EQM. Table 17 is an example of a UEQM index table for which both the optimization manner 4 and the optimization manner 5 are used. MCSs used by spatial streams indicated by indexes in Table 17 all belong to supported MCSs under the EQM.

**Table 17**

| Index | Modulation (Modulation) | | | | Coding rate (Rate) |
|---|---|---|---|---|---|
| | Modulation scheme of a first spatial stream | Modulation scheme of a second spatial stream | Modulation scheme of a third spatial stream | Modulation scheme of a fourth spatial stream | |
| 0 to 15 | Same as Table 11 | | | | |
| 16 | 16-QAM | QPSK | QPSK | QPSK | 1/2 |
| 17 | 16-QAM | 16-QAM | QPSK | QPSK | 1/2 |
| 18 | 16-QAM | 16-QAM | 16-QAM | QPSK | 1/2 |
| 19 | 16-QAM | QPSK | QPSK | QPSK | 3/4 |
| 20 | 64-QAM | QPSK | QPSK | QPSK | 3/4 |
| 21 | 256-QAM | QPSK | QPSK | QPSK | 3/4 |
| 22 | 16-QAM | 16-QAM | QPSK | QPSK | 3/4 |
| 23 | 64-QAM | 16-QAM | QPSK | QPSK | 3/4 |
| 24 | 256-QAM | 16-QAM | QPSK | QPSK | 3/4 |
| 25 | 64-QAM | 64-QAM | QPSK | QPSK | 3/4 |
| 26 | 256-QAM | 64-QAM | QPSK | QPSK | 3/4 |
| 27 | 256-QAM | 256-QAM | QPSK | QPSK | 3/4 |
| 28 | 16-QAM | 16-QAM | 16-QAM | QPSK | 3/4 |
| 29 | 64-QAM | 16-QAM | 16-QAM | QPSK | 3/4 |
| 30 | 256-QAM | 16-QAM | 16-QAM | QPSK | 3/4 |
| 31 | 64-QAM | 64-QAM | 16-QAM | QPSK | 3/4 |
| 32 | 256-QAM | 64-QAM | 16-QAM | QPSK | 3/4 |
| 33 | 256-QAM | 256-QAM | 16-QAM | QPSK | 3/4 |
| 34 | 64-QAM | 64-QAM | 64-QAM | QPSK | 3/4 |
| 35 | 256-QAM | 64-QAM | 64-QAM | QPSK | 3/4 |
| 36 | 256-QAM | 256-QAM | 64-QAM | QPSK | 3/4 |
| 37 | 256-QAM | 256-QAM | 256-QAM | QPSK | 3/4 |
| 38 | 64-QAM | 16-QAM | 16-QAM | 16-QAM | 3/4 |
| 39 | 256-QAM | 16-QAM | 16-QAM | 16-QAM | 3/4 |
| 40 | 1024-QAM | 16-QAM | 16-QAM | 16-QAM | 3/4 |
| 41 | 64-QAM | 64-QAM | 16-QAM | 16-QAM | 3/4 |
| 42 | 256-QAM | 64-QAM | 16-QAM | 16-QAM | 3/4 |
| 43 | 1024-QAM | 64-QAM | 16-QAM | 16-QAM | 3/4 |
| 44 | 256-QAM | 256-QAM | 16-QAM | 16-QAM | 3/4 |
| 45 | 1024-QAM | 256-QAM | 16-QAM | 16-QAM | 3/4 |
| 46 | 1024-QAM | 1024-QAM | 16-QAM | 16-QAM | 3/4 |
| 47 | 64-QAM | 64-QAM | 64-QAM | 16-QAM | 3/4 |
| 48 | 256-QAM | 64-QAM | 64-QAM | 16-QAM | 3/4 |
| 49 | 1024-QAM | 64-QAM | 64-QAM | 16-QAM | 3/4 |
| 50 | 256-QAM | 256-QAM | 64-QAM | 16-QAM | 3/4 |
| 51 | 1024-QAM | 256-QAM | 64-QAM | 16-QAM | 3/4 |
| 52 | 1024-QAM | 1024-QAM | 64-QAM | 16-QAM | 3/4 |
| 53 | 256-QAM | 256-QAM | 256-QAM | 16-QAM | 3/4 |
| 54 | 1024-QAM | 256-QAM | 256-QAM | 16-QAM | 3/4 |
| 55 | 1024-QAM | 1024-QAM | 256-QAM | 16-QAM | 3/4 |
| 56 | 1024-QAM | 1024-QAM | 1024-QAM | 16-QAM | 3/4 |
| 57 | 256-QAM | 64-QAM | 64-QAM | 64-QAM | 3/4 |
| 58 | 1024-QAM | 64-QAM | 64-QAM | 64-QAM | 3/4 |
| 59 | 4096-QAM | 64-QAM | 64-QAM | 64-QAM | 3/4 |
| 60 | 256-QAM | 256-QAM | 64-QAM | 64-QAM | 3/4 |
| 61 | 1024-QAM | 256-QAM | 64-QAM | 64-QAM | 3/4 |
| 62 | 4096-QAM | 256-QAM | 64-QAM | 64-QAM | 3/4 |
| 63 | 1024-QAM | 1024-QAM | 64-QAM | 64-QAM | 3/4 |
| 64 | 4096-QAM | 1024-QAM | 64-QAM | 64-QAM | 3/4 |
| 65 | 4096-QAM | 4096-QAM | 64-QAM | 64-QAM | 3/4 |
| 66 | 256-QAM | 256-QAM | 256-QAM | 64-QAM | 3/4 |
| 67 | 1024-QAM | 256-QAM | 256-QAM | 64-QAM | 3/4 |
| 68 | 4096-QAM | 256-QAM | 256-QAM | 64-QAM | 3/4 |
| 69 | 1024-QAM | 1024-QAM | 256-QAM | 64-QAM | 3/4 |
| 70 | 4096-QAM | 1024-QAM | 256-QAM | 64-QAM | 3/4 |
| 71 | 4096-QAM | 4096-QAM | 256-QAM | 64-QAM | 3/4 |
| 72 | 1024-QAM | 1024-QAM | 1024-QAM | 64-QAM | 3/4 |
| 73 | 4096-QAM | 1024-QAM | 1024-QAM | 64-QAM | 3/4 |
| 74 | 4096-QAM | 4096-QAM | 1024-QAM | 64-QAM | 3/4 |
| 75 | 4096-QAM | 4096-QAM | 4096-QAM | 64-QAM | 3/4 |
| 76 | 1024-QAM | 256-QAM | 256-QAM | 256-QAM | 3/4 |
| 77 | 4096-QAM | 256-QAM | 256-QAM | 256-QAM | 3/4 |
| 78 | 1024-QAM | 1024-QAM | 256-QAM | 256-QAM | 3/4 |
| 79 | 4096-QAM | 1024-QAM | 256-QAM | 256-QAM | 3/4 |
| 80 | 4096-QAM | 4096-QAM | 256-QAM | 256-QAM | 3/4 |
| 81 | 1024-QAM | 1024-QAM | 1024-QAM | 256-QAM | 3/4 |
| 82 | 4096-QAM | 1024-QAM | 1024-QAM | 256-QAM | 3/4 |
| 83 | 4096-QAM | 4096-QAM | 1024-QAM | 256-QAM | 3/4 |
| 84 | 4096-QAM | 4096-QAM | 4096-QAM | 256-QAM | 3/4 |
| 85 | 4096-QAM | 1024-QAM | 1024-QAM | 1024-QAM | 3/4 |
| 86 | 4096-QAM | 4096-QAM | 1024-QAM | 1024-QAM | 3/4 |
| 87 | 4096-QAM | 4096-QAM | 4096-QAM | 1024-QAM | 3/4 |
| 88 | 256-QAM | 64-QAM | 64-QAM | 64-QAM | 5/6 |
| 89 | 1024-QAM | 64-QAM | 64-QAM | 64-QAM | 5/6 |
| 90 | 4096-QAM | 64-QAM | 64-QAM | 64-QAM | 5/6 |
| 91 | 256-QAM | 256-QAM | 64-QAM | 64-QAM | 5/6 |
| 92 | 1024-QAM | 256-QAM | 64-QAM | 64-QAM | 5/6 |
| 93 | 4096-QAM | 256-QAM | 64-QAM | 64-QAM | 5/6 |
| 94 | 1024-QAM | 1024-QAM | 64-QAM | 64-QAM | 5/6 |
| 95 | 4096-QAM | 1024-QAM | 64-QAM | 64-QAM | 5/6 |
| 96 | 4096-QAM | 4096-QAM | 64-QAM | 64-QAM | 5/6 |
| 97 | 256-QAM | 256-QAM | 256-QAM | 64-QAM | 5/6 |
| 98 | 1024-QAM | 256-QAM | 256-QAM | 64-QAM | 5/6 |
| 99 | 4096-QAM | 256-QAM | 256-QAM | 64-QAM | 5/6 |
| 100 | 1024-QAM | 1024-QAM | 256-QAM | 64-QAM | 5/6 |
| 101 | 4096-QAM | 1024-QAM | 256-QAM | 64-QAM | 5/6 |
| 102 | 4096-QAM | 4096-QAM | 256-QAM | 64-QAM | 5/6 |
| 103 | 1024-QAM | 1024-QAM | 1024-QAM | 64-QAM | 5/6 |
| 104 | 4096-QAM | 1024-QAM | 1024-QAM | 64-QAM | 5/6 |
| 105 | 4096-QAM | 4096-QAM | 1024-QAM | 64-QAM | 5/6 |
| 106 | 4096-QAM | 4096-QAM | 4096-QAM | 64-QAM | 5/6 |
| 107 | 1024-QAM | 256-QAM | 256-QAM | 256-QAM | 5/6 |
| 108 | 4096-QAM | 256-QAM | 256-QAM | 256-QAM | 5/6 |
| 109 | 1024-QAM | 1024-QAM | 256-QAM | 256-QAM | 5/6 |
| 110 | 4096-QAM | 1024-QAM | 256-QAM | 256-QAM | 5/6 |
| 111 | 4096-QAM | 4096-QAM | 256-QAM | 256-QAM | 5/6 |
| 112 | 1024-QAM | 1024-QAM | 1024-QAM | 256-QAM | 5/6 |
| 113 | 4096-QAM | 1024-QAM | 1024-QAM | 256-QAM | 5/6 |
| 114 | 4096-QAM | 4096-QAM | 1024-QAM | 256-QAM | 5/6 |
| 115 | 4096-QAM | 4096-QAM | 4096-QAM | 256-QAM | 5/6 |
| 116 | 4096-QAM | 1024-QAM | 1024-QAM | 1024-QAM | 5/6 |
| 117 | 4096-QAM | 4096-QAM | 1024-QAM | 1024-QAM | 5/6 |
| 118 | 4096-QAM | 4096-QAM | 4096-QAM | 1024-QAM | 5/6 |
| 119 to END (for example, END=127) | 4096-QAM | 4096-QAM | 4096-QAM | 1024-QAM | 5/6 |

It can be learned by comparing Table 17 with Table 16 that, after Table 16 is optimized in the optimization manner 5, 223-118=105 entries in Table 16 are reduced, and 1-bit overheads are saved for the UEQM MCS field, in other words, 1-bit overheads are saved for each user.

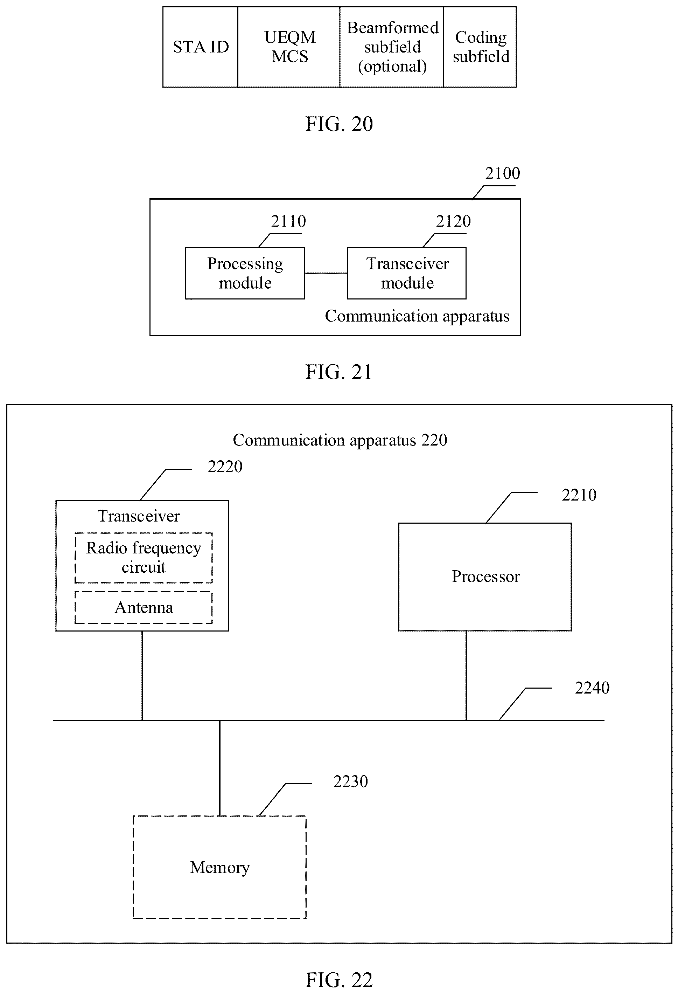

The foregoing provides descriptions that UEQM index tables are respectively designed for different numbers of spatial streams. The following describes all cases in which a same UEQM index table indicates 2 SSs to 4 SSs, including the EQM modulation scheme and the UEQM modulation scheme. Table 18 is another example of the UEQM index table. Table 18 may indicate both the NSS and a modulation scheme of each spatial stream, including the EQM and the UEQM. For example, the length of the UEQM MCS field is 10 bits, and an index represented by the value of the UEQM MCS field is any index in Table 18. For example, the user field includes a STA ID subfield, a UEQM MCS field, a beamformed subfield (optional), and a coding subfield. Refer to FIG. 20. FIG. 20 is an example of a format of a user field in the PPDU according to an embodiment of this application. For example, a first SIG field in the PPDU includes a plurality of user fields, and formats of the user fields are the same. For example, the format of the user field is shown in FIG. 20. In addition, Table 18 may be further simplified in the optimization manner 4 and/or the optimization manner 5, to reduce a mode that needs to be supported by the device and overheads of a signal field. A bold entry in Table 18 is a modulation scheme+coding rate combination that is not supported under the EQM.

**Table 18**

| Index | NSS | Modulation | | | | Coding rate |
|---|---|---|---|---|---|---|
| | | Modulation scheme of a first spatial stream | Modulation scheme of a second spatial stream | Modulation scheme of a third spatial stream | Modulation scheme of a fourth spatial stream | |
| 0 | 1 | BPSK | | | | 1/2 |
| 1 | 1 | QPSK | | | | 1/2 |
| 2 | 1 | | | | | 3/4 |
| 3 | 1 | 16-QAM | | | | 1/2 |
| 4 | 1 | | | | | 3/4 |
| 5 | 1 | 64-QAM | | | | 2/3 |
| 6 | 1 | | | | | 3/4 |
| 7 | 1 | | | | | 5/6 |
| 8 | 1 | 256-QAM | | | | 3/4 |
| 9 | 1 | | | | | 5/6 |
| 10 | 1 | 1024-QAM | | | | 3/4 |
| 11 | 1 | | | | | 5/6 |
| 12 | 1 | 4096-QAM | | | | 3/4 |
| 13 | 1 | | | | | 5/6 |
| 14 | 1 | EHT DUP | | | | 1/2 |
| 15 | 1 | BPSK-DCM | | | | 1/2 |
| 16 | 2 | BPSK | | | | 1/2 |
| 17 | 2 | QPSK | | | | 1/2 |
| 18 | 2 | | | | | 3/4 |
| 19 | 2 | 16-QAM | | | | 1/2 |
| 20 | 2 | | | | | 3/4 |
| 21 | 2 | 64-QAM | | | | 2/3 |
| 22 | 2 | | | | | 3/4 |
| 23 | 2 | | | | | 5/6 |
| 24 | 2 | 256-QAM | | | | 3/4 |
| 25 | 2 | | | | | 5/6 |
| 26 | 2 | 1024-QAM | | | | 3/4 |
| 27 | 2 | | | | | 5/6 |
| 28 | 2 | 4096-QAM | | | | 3/4 |
| 29 | 2 | | | | | 5/6 |
| 30 | 2 | EHT DUP | | | | 1/2 |
| 31 | 2 | BPSK-DCM | | | | 1/2 |
| 32 | 3 | BPSK | | | | 1/2 |
| 33 | 3 | QPSK | | | | 1/2 |
| 34 | 3 | | | | | 3/4 |
| 35 | 3 | 16-QAM | | | | 1/2 |
| 36 | 3 | | | | | 3/4 |
| 37 | 3 | 64-QAM | | | | 2/3 |
| 38 | 3 | | | | | 3/4 |
| 39 | 3 | | | | | 5/6 |
| 40 | 3 | 256-QAM | | | | 3/4 |
| 41 | 3 | | | | | 5/6 |
| 42 | 3 | 1024-QAM | | | | 3/4 |
| 43 | 3 | | | | | 5/6 |
| 44 | 3 | 4096-QAM | | | | 3/4 |
| 45 | 3 | | | | | 5/6 |
| 46 | 3 | EHT DUP | | | | 1/2 |
| 47 | 3 | BPSK-DCM | | | | 1/2 |
| 48 | 4 | BPSK | | | | 1/2 |
| 49 | 4 | QPSK | | | | 1/2 |
| 50 | 4 | | | | | 3/4 |
| 51 | 4 | 16-QAM | | | | 1/2 |
| 52 | 4 | | | | | 3/4 |
| 53 | 4 | 64-QAM | | | | 2/3 |
| 54 | 4 | | | | | 3/4 |
| 55 | 4 | | | | | 5/6 |
| 56 | 4 | 256-QAM | | | | 3/4 |
| 57 | 4 | | | | | 5/6 |
| 58 | 4 | 1024-QAM | | | | 3/4 |
| 59 | 4 | | | | | 5/6 |
| 60 | 4 | 4096-QAM | | | | 3/4 |
| 61 | 4 | | | | | 5/6 |
| 62 | 4 | EHT DUP | | | | 1/2 |
| 63 | 4 | BPSK-DCM | | | | 1/2 |
| 64 | 5 | BPSK | | | | 1/2 |
| 65 | 5 | QPSK | | | | 1/2 |
| 66 | 5 | | | | | 3/4 |
| 67 | 5 | 16-QAM | | | | 1/2 |
| 68 | 5 | | | | | 3/4 |
| 69 | 5 | 64-QAM | | | | 2/3 |
| 70 | 5 | | | | | 3/4 |
| 71 | 5 | | | | | 5/6 |
| 72 | 5 | 256-QAM | | | | 3/4 |
| 73 | 5 | | | | | 5/6 |
| 74 | 5 | 1024-QAM | | | | 3/4 |
| 75 | 5 | | | | | 5/6 |
| 76 | 5 | 4096-QAM | | | | 3/4 |
| 77 | 5 | | | | | 5/6 |
| 78 | 5 | EHT DUP | | | | 1/2 |
| 79 | 5 | BPSK-DCM | | | | 1/2 |
| 80 | 6 | BPSK | | | | 1/2 |
| 81 | 6 | QPSK | | | | 1/2 |
| 82 | 6 | | | | | 3/4 |
| 83 | 6 | 16-QAM | | | | 1/2 |
| 84 | 6 | | | | | 3/4 |
| 85 | 6 | 64-QAM | | | | 2/3 |
| 86 | 6 | | | | | 3/4 |
| 87 | 6 | | | | | 5/6 |
| 88 | 6 | 256-QAM | | | | 3/4 |
| 89 | 6 | | | | | 5/6 |
| 90 | 6 | 1024-QAM | | | | 3/4 |
| 91 | 6 | | | | | 5/6 |
| 92 | 6 | 4096-QAM | | | | 3/4 |
| 93 | 6 | | | | | 5/6 |
| 94 | 6 | EHT DUP | | | | 1/2 |
| 95 | 6 | BPSK-DCM | | | | 1/2 |
| 96 | 7 | BPSK | | | | 1/2 |
| 97 | 7 | QPSK | | | | 1/2 |
| 98 | 7 | | | | | 3/4 |
| 99 | 7 | 16-QAM | | | | 1/2 |
| 100 | 7 | | | | | 3/4 |
| 101 | 7 | 64-QAM | | | | 2/3 |
| 102 | 7 | | | | | 3/4 |
| 103 | 7 | | | | | 5/6 |
| 104 | 7 | 256-QAM | | | | 3/4 |
| 105 | 7 | | | | | 5/6 |
| 106 | 7 | 1024-QAM | | | | 3/4 |
| 107 | 7 | | | | | 5/6 |
| 108 | 7 | 4096-QAM | | | | 3/4 |
| 109 | 7 | | | | | 5/6 |
| 110 | 7 | EHT DUP | | | | 1/2 |
| 111 | 7 | BPSK-DCM | | | | 1/2 |
| 112 | 8 | BPSK | | | | 1/2 |
| 113 | 8 | QPSK | | | | 1/2 |
| 114 | 8 | | | | | 3/4 |
| 115 | 8 | 16-QAM | | | | 1/2 |
| 116 | 8 | | | | | 3/4 |
| 117 | 8 | 64-QAM | | | | 2/3 |
| 118 | 8 | | | | | 3/4 |
| 119 | 8 | | | | | 5/6 |
| 120 | 8 | 256-QAM | | | | 3/4 |
| 121 | 8 | | | | | 5/6 |
| 122 | 8 | 1024-QAM | | | | 3/4 |
| 123 | 8 | | | | | 5/6 |
| 124 | 8 | 4096-QAM | | | | 3/4 |
| 125 | 8 | | | | | 5/6 |
| 126 | 8 | EHT DUP | | | | 1/2 |
| 127 | 8 | BPSK-DCM | | | | 1/2 |
| 128 | 2 | 16-QAM | QPSK | | | 1/2 |
| 129 | 2 | **64-QAM** | QPSK | | | 1/2 |
| 130 | 2 | **256-QAM** | QPSK | | | 1/2 |
| 131 | 2 | **1024-QAM** | QPSK | | | 1/2 |
| 132 | 2 | **4096-QAM** | QPSK | | | 1/2 |
| 133 | 2 | **64-QAM** | 16-QAM | | | 1/2 |
| 134 | 2 | **256-QAM** | 16-QAM | | | 1/2 |
| 135 | 2 | **1024-QAM** | 16-QAM | | | 1/2 |
| 136 | 2 | **4096-QAM** | 16-QAM | | | 1/2 |
| 137 | 2 | **256-QAM** | **64-QAM** | | | 1/2 |
| 138 | 2 | **1024-QAM** | **64-QAM** | | | 1/2 |
| 139 | 2 | **4096-QAM** | **64-QAM** | | | 1/2 |
| 140 | 2 | **1024-QAM** | **256-QAM** | | | 1/2 |
| 141 | 2 | **4096-QAM** | **256-QAM** | | | 1/2 |
| 142 | 2 | **4096-QAM** | **1024-QAM** | | | 1/2 |
| 143 | 2 | 16-QAM | QPSK | | | 3/4 |
| 144 | 2 | 64-QAM | QPSK | | | 3/4 |
| 145 | 2 | 256-QAM | QPSK | | | 3/4 |
| 146 | 2 | 1024-QAM | QPSK | | | 3/4 |
| 147 | 2 | 4096-QAM | QPSK | | | 3/4 |
| 148 | 2 | 64-QAM | 16-QAM | | | 3/4 |
| 149 | 2 | 256-QAM | 16-QAM | | | 3/4 |
| 150 | 2 | 1024-QAM | 16-QAM | | | 3/4 |
| 151 | 2 | 4096-QAM | 16-QAM | | | 3/4 |
| 152 | 2 | 256-QAM | 64-QAM | | | 3/4 |
| 153 | 2 | 1024-QAM | 64-QAM | | | 3/4 |
| 154 | 2 | 4096-QAM | 64-QAM | | | 3/4 |
| 155 | 2 | 1024-QAM | 256-QAM | | | 3/4 |
| 156 | 2 | 4096-QAM | 256-QAM | | | 3/4 |
| 157 | 2 | 4096-QAM | 1024-QAM | | | 3/4 |
| 158 | 2 | **16-QAM** | **QPSK** | | | 5/6 |
| 159 | 2 | 64-QAM | **QPSK** | | | 5/6 |
| 160 | 2 | 256-QAM | **QPSK** | | | 5/6 |
| 161 | 2 | 1024-QAM | **QPSK** | | | 5/6 |
| 162 | 2 | 4096-QAM | **QPSK** | | | 5/6 |
| 163 | 2 | 64-QAM | **16-QAM** | | | 5/6 |
| 164 | 2 | 256-QAM | **16-QAM** | | | 5/6 |
| 165 | 2 | 1024-QAM | **16-QAM** | | | 5/6 |
| 166 | 2 | 4096-QAM | **16-QAM** | | | 5/6 |
| 167 | 2 | 256-QAM | 64-QAM | | | 5/6 |
| 168 | 2 | 1024-QAM | 64-QAM | | | 5/6 |
| 169 | 2 | 4096-QAM | 64-QAM | | | 5/6 |
| 170 | 2 | 1024-QAM | 256-QAM | | | 5/6 |
| 171 | 2 | 4096-QAM | 256-QAM | | | 5/6 |
| 172 | 2 | 4096-QAM | 1024-QAM | | | 5/6 |
| 173 | 3 | 16-QAM | QPSK | QPSK | | 1/2 |
| 174 | 3 | **64-QAM** | QPSK | QPSK | | 1/2 |
| 175 | 3 | **256-QAM** | QPSK | QPSK | | 1/2 |
| 176 | 3 | **1024-QAM** | QPSK | QPSK | | 1/2 |
| 177 | 3 | **4096-QAM** | QPSK | QPSK | | 1/2 |
| 178 | 3 | 16-QAM | 16-QAM | QPSK | | 1/2 |
| 179 | 3 | **64-QAM** | 16-QAM | QPSK | | 1/2 |
| 180 | 3 | **256-QAM** | 16-QAM | QPSK | | 1/2 |
| 181 | 3 | **1024-QAM** | 16-QAM | QPSK | | 1/2 |
| 182 | 3 | **4096-QAM** | 16-QAM | QPSK | | 1/2 |
| 183 | 3 | **64-QAM** | **64-QAM** | QPSK | | 1/2 |
| 184 | 3 | **256-QAM** | **64-QAM** | QPSK | | 1/2 |
| 185 | 3 | **1024-QAM** | **64-QAM** | QPSK | | 1/2 |
| 186 | 3 | **4096-QAM** | **64-QAM** | QPSK | | 1/2 |
| 187 | 3 | **256-QAM** | **256-QAM** | QPSK | | 1/2 |
| 188 | 3 | **1024-QAM** | **256-QAM** | QPSK | | 1/2 |
| 189 | 3 | **4096-QAM** | **256-QAM** | QPSK | | 1/2 |
| 190 | 3 | **1024-QAM** | **1024-QAM** | QPSK | | 1/2 |
| 191 | 3 | **4096-QAM** | **1024-QAM** | QPSK | | 1/2 |
| 192 | 3 | **4096-QAM** | **4096-QAM** | QPSK | | 1/2 |
| 193 | 3 | **64-QAM** | 16-QAM | 16-QAM | | 1/2 |
| 194 | 3 | **256-QAM** | 16-QAM | 16-QAM | | 1/2 |
| 195 | 3 | **1024-QAM** | 16-QAM | 16-QAM | | 1/2 |
| 196 | 3 | **4096-QAM** | 16-QAM | 16-QAM | | 1/2 |
| 197 | 3 | **64-QAM** | **64-QAM** | 16-QAM | | 1/2 |
| 198 | 3 | **256-QAM** | **64-QAM** | 16-QAM | | 1/2 |
| 199 | 3 | **1024-QAM** | **64-QAM** | 16-QAM | | 1/2 |
| 200 | 3 | **4096-QAM** | **64-QAM** | 16-QAM | | 1/2 |
| 201 | 3 | **256-QAM** | **256-QAM** | 16-QAM | | 1/2 |
| 202 | 3 | **1024-QAM** | **256-QAM** | 16-QAM | | 1/2 |
| 203 | 3 | **4096-QAM** | **256-QAM** | 16-QAM | | 1/2 |
| 204 | 3 | **1024-QAM** | **1024-QAM** | 16-QAM | | 1/2 |
| 205 | 3 | **4096-QAM** | **1024-QAM** | 16-QAM | | 1/2 |
| 206 | 3 | **4096-QAM** | **4096-QAM** | 16-QAM | | 1/2 |
| 207 | 3 | **256-QAM** | **64-QAM** | **64-QAM** | | 1/2 |
| 208 | 3 | **1024-QAM** | **64-QAM** | **64-QAM** | | 1/2 |
| 209 | 3 | **4096-QAM** | **64-QAM** | **64-QAM** | | 1/2 |
| 210 | 3 | **256-QAM** | **256-QAM** | **64-QAM** | | 1/2 |
| 211 | 3 | **1024-QAM** | **256-QAM** | **64-QAM** | | 1/2 |
| 212 | 3 | **4096-QAM** | **256-QAM** | **64-QAM** | | 1/2 |
| 213 | 3 | **1024-QAM** | **1024-QAM** | **64-QAM** | | 1/2 |
| 214 | 3 | **4096-QAM** | **1024-QAM** | **64-QAM** | | 1/2 |
| 215 | 3 | **4096-QAM** | **4096-QAM** | **64-QAM** | | 1/2 |
| 216 | 3 | **1024-QAM** | **256-QAM** | **256-QAM** | | 1/2 |
| 217 | 3 | **4096-QAM** | **256-QAM** | **256-QAM** | | 1/2 |
| 218 | 3 | **1024-QAM** | **1024-QAM** | **256-QAM** | | 1/2 |
| 219 | 3 | **4096-QAM** | **1024-QAM** | **256-QAM** | | 1/2 |
| 220 | 3 | **4096-QAM** | **4096-QAM** | **256-QAM** | | 1/2 |
| 221 | 3 | **4096-QAM** | **1024-QAM** | **1024-QAM** | | 1/2 |
| 222 | 3 | **4096-QAM** | **4096-QAM** | **1024-QAM** | | 1/2 |
| 223 | 3 | 16-QAM | QPSK | QPSK | | 3/4 |
| 224 | 3 | 64-QAM | QPSK | QPSK | | 3/4 |
| 225 | 3 | 256-QAM | QPSK | QPSK | | 3/4 |
| 226 | 3 | 1024-QAM | QPSK | QPSK | | 3/4 |
| 227 | 3 | 4096-QAM | QPSK | QPSK | | 3/4 |
| 228 | 3 | 16-QAM | 16-QAM | QPSK | | 3/4 |
| 229 | 3 | 64-QAM | 16-QAM | QPSK | | 3/4 |
| 230 | 3 | 256-QAM | 16-QAM | QPSK | | 3/4 |
| 231 | 3 | 1024-QAM | 16-QAM | QPSK | | 3/4 |
| 232 | 3 | 4096-QAM | 16-QAM | QPSK | | 3/4 |
| 233 | 3 | 64-QAM | 64-QAM | QPSK | | 3/4 |
| 234 | 3 | 256-QAM | 64-QAM | QPSK | | 3/4 |
| 235 | 3 | 1024-QAM | 64-QAM | QPSK | | 3/4 |
| 236 | 3 | 4096-QAM | 64-QAM | QPSK | | 3/4 |
| 237 | 3 | 256-QAM | 256-QAM | QPSK | | 3/4 |
| 238 | 3 | 1024-QAM | 256-QAM | QPSK | | 3/4 |
| 239 | 3 | 4096-QAM | 256-QAM | QPSK | | 3/4 |
| 240 | 3 | 1024-QAM | 1024-QAM | QPSK | | 3/4 |
| 241 | 3 | 4096-QAM | 1024-QAM | QPSK | | 3/4 |
| 242 | 3 | 4096-QAM | 4096-QAM | QPSK | | 3/4 |
| 243 | 3 | 64-QAM | 16-QAM | 16-QAM | | 3/4 |
| 244 | 3 | 256-QAM | 16-QAM | 16-QAM | | 3/4 |
| 245 | 3 | 1024-QAM | 16-QAM | 16-QAM | | 3/4 |
| 246 | 3 | 4096-QAM | 16-QAM | 16-QAM | | 3/4 |
| 247 | 3 | 64-QAM | 64-QAM | 16-QAM | | 3/4 |
| 248 | 3 | 256-QAM | 64-QAM | 16-QAM | | 3/4 |
| 249 | 3 | 1024-QAM | 64-QAM | 16-QAM | | 3/4 |
| 250 | 3 | 4096-QAM | 64-QAM | 16-QAM | | 3/4 |
| 251 | 3 | 256-QAM | 256-QAM | 16-QAM | | 3/4 |
| 252 | 3 | 1024-QAM | 256-QAM | 16-QAM | | 3/4 |
| 253 | 3 | 4096-QAM | 256-QAM | 16-QAM | | 3/4 |
| 254 | 3 | 1024-QAM | 1024-QAM | 16-QAM | | 3/4 |
| 255 | 3 | 4096-QAM | 1024-QAM | 16-QAM | | 3/4 |
| 256 | 3 | 4096-QAM | 4096-QAM | 16-QAM | | 3/4 |
| 257 | 3 | 256-QAM | 64-QAM | 64-QAM | | 3/4 |
| 258 | 3 | 1024-QAM | 64-QAM | 64-QAM | | 3/4 |
| 259 | 3 | 4096-QAM | 64-QAM | 64-QAM | | 3/4 |
| 260 | 3 | 256-QAM | 256-QAM | 64-QAM | | 3/4 |
| 261 | 3 | 1024-QAM | 256-QAM | 64-QAM | | 3/4 |
| 262 | 3 | 4096-QAM | 256-QAM | 64-QAM | | 3/4 |
| 263 | 3 | 1024-QAM | 1024-QAM | 64-QAM | | 3/4 |
| 264 | 3 | 4096-QAM | 1024-QAM | 64-QAM | | 3/4 |
| 265 | 3 | 4096-QAM | 4096-QAM | 64-QAM | | 3/4 |
| 266 | 3 | 1024-QAM | 256-QAM | 256-QAM | | 3/4 |
| 267 | 3 | 4096-QAM | 256-QAM | 256-QAM | | 3/4 |
| 268 | 3 | 1024-QAM | 1024-QAM | 256-QAM | | 3/4 |
| 269 | 3 | 4096-QAM | 1024-QAM | 256-QAM | | 3/4 |
| 270 | 3 | 4096-QAM | 4096-QAM | 256-QAM | | 3/4 |
| 271 | 3 | 4096-QAM | 1024-QAM | 1024-QAM | | 3/4 |
| 272 | 3 | 4096-QAM | 4096-QAM | 1024-QAM | | 3/4 |
| 273 | 3 | **16-QAM** | **QPSK** | **QPSK** | | 5/6 |
| 274 | 3 | 64-QAM | **QPSK** | **QPSK** | | 5/6 |
| 275 | 3 | 256-QAM | **QPSK** | **QPSK** | | 5/6 |
| 276 | 3 | 1024-QAM | **QPSK** | **QPSK** | | 5/6 |
| 277 | 3 | 4096-QAM | **QPSK** | **QPSK** | | 5/6 |
| 278 | 3 | **16-QAM** | **16-QAM** | **QPSK** | | 5/6 |
| 279 | 3 | 64-QAM | **16-QAM** | **QPSK** | | 5/6 |
| 280 | 3 | 256-QAM | **16-QAM** | **QPSK** | | 5/6 |
| 281 | 3 | 1024-QAM | **16-QAM** | **QPSK** | | 5/6 |
| 282 | 3 | 4096-QAM | **16-QAM** | **QPSK** | | 5/6 |
| 283 | 3 | 64-QAM | 64-QAM | **QPSK** | | 5/6 |
| 284 | 3 | 256-QAM | 64-QAM | **QPSK** | | 5/6 |
| 285 | 3 | 1024-QAM | 64-QAM | **QPSK** | | 5/6 |
| 286 | 3 | 4096-QAM | 64-QAM | **QPSK** | | 5/6 |
| 287 | 3 | 256-QAM | 256-QAM | **QPSK** | | 5/6 |
| 288 | 3 | 1024-QAM | 256-QAM | **QPSK** | | 5/6 |
| 289 | 3 | 4096-QAM | 256-QAM | **QPSK** | | 5/6 |
| 290 | 3 | 1024-QAM | 1024-QAM | **QPSK** | | 5/6 |
| 291 | 3 | 4096-QAM | 1024-QAM | **QPSK** | | 5/6 |
| 292 | 3 | 4096-QAM | 4096-QAM | **QPSK** | | 5/6 |
| 293 | 3 | 64-QAM | **16-QAM** | **16-QAM** | | 5/6 |
| 294 | 3 | 256-QAM | **16-QAM** | **16-QAM** | | 5/6 |
| 295 | 3 | 1024-QAM | **16-QAM** | **16-QAM** | | 5/6 |
| 296 | 3 | 4096-QAM | **16-QAM** | **16-QAM** | | 5/6 |
| 297 | 3 | 64-QAM | 64-QAM | **16-QAM** | | 5/6 |
| 298 | 3 | 256-QAM | 64-QAM | **16-QAM** | | 5/6 |
| 299 | 3 | 1024-QAM | 64-QAM | **16-QAM** | | 5/6 |
| 300 | 3 | 4096-QAM | 64-QAM | **16-QAM** | | 5/6 |
| 301 | 3 | 256-QAM | 256-QAM | **16-QAM** | | 5/6 |
| 302 | 3 | 1024-QAM | 256-QAM | **16-QAM** | | 5/6 |
| 303 | 3 | 4096-QAM | 256-QAM | **16-QAM** | | 5/6 |
| 304 | 3 | 1024-QAM | 1024-QAM | **16-QAM** | | 5/6 |
| 305 | 3 | 4096-QAM | 1024-QAM | **16-QAM** | | 5/6 |
| 306 | 3 | 4096-QAM | 4096-QAM | **16-QAM** | | 5/6 |
| 307 | 3 | 256-QAM | 64-QAM | 64-QAM | | 5/6 |
| 308 | 3 | 1024-QAM | 64-QAM | 64-QAM | | 5/6 |
| 309 | 3 | 4096-QAM | 64-QAM | 64-QAM | | 5/6 |
| 310 | 3 | 256-QAM | 256-QAM | 64-QAM | | 5/6 |
| 311 | 3 | 1024-QAM | 256-QAM | 64-QAM | | 5/6 |
| 312 | 3 | 4096-QAM | 256-QAM | 64-QAM | | 5/6 |
| 313 | 3 | 1024-QAM | 1024-QAM | 64-QAM | | 5/6 |
| 314 | 3 | 4096-QAM | 1024-QAM | 64-QAM | | 5/6 |
| 315 | 3 | 4096-QAM | 4096-QAM | 64-QAM | | 5/6 |
| 316 | 3 | 1024-QAM | 256-QAM | 256-QAM | | 5/6 |
| 317 | 3 | 4096-QAM | 256-QAM | 256-QAM | | 5/6 |
| 318 | 3 | 1024-QAM | 1024-QAM | 256-QAM | | 5/6 |
| 319 | 3 | 4096-QAM | 1024-QAM | 256-QAM | | 5/6 |
| 320 | 3 | 4096-QAM | 4096-QAM | 256-QAM | | 5/6 |
| 321 | 3 | 4096-QAM | 1024-QAM | 1024-QAM | | 5/6 |
| 322 | 3 | 4096-QAM | 4096-QAM | 1024-QAM | | 5/6 |
| 323 | 4 | 16-QAM | QPSK | QPSK | QPSK | 1/2 |
| 324 | 4 | **64-QAM** | QPSK | QPSK | QPSK | 1/2 |
| 325 | 4 | **256-QAM** | QPSK | QPSK | QPSK | 1/2 |
| 326 | 4 | **1024-QAM** | QPSK | QPSK | QPSK | 1/2 |
| 327 | 4 | **4096-QAM** | QPSK | QPSK | QPSK | 1/2 |
| 328 | 4 | 16-QAM | 16-QAM | QPSK | QPSK | 1/2 |
| 329 | 4 | **64-QAM** | 16-QAM | QPSK | QPSK | 1/2 |
| 330 | 4 | **256-QAM** | 16-QAM | QPSK | QPSK | 1/2 |
| 331 | 4 | **1024-QAM** | 16-QAM | QPSK | QPSK | 1/2 |
| 332 | 4 | **4096-QAM** | 16-QAM | QPSK | QPSK | 1/2 |
| 333 | 4 | **64-QAM** | **64-QAM** | QPSK | QPSK | 1/2 |
| 334 | 4 | **256-QAM** | **64-QAM** | QPSK | QPSK | 1/2 |
| 335 | 4 | **1024-QAM** | **64-QAM** | QPSK | QPSK | 1/2 |
| 336 | 4 | **4096-QAM** | **64-QAM** | QPSK | QPSK | 1/2 |
| 337 | 4 | **256-QAM** | **256-QAM** | QPSK | QPSK | 1/2 |
| 338 | 4 | **1024-QAM** | **256-QAM** | QPSK | QPSK | 1/2 |
| 339 | 4 | **4096-QAM** | **256-QAM** | QPSK | QPSK | 1/2 |
| 340 | 4 | **1024-QAM** | **1024-QAM** | QPSK | QPSK | 1/2 |
| 341 | 4 | **4096-QAM** | **1024-QAM** | QPSK | QPSK | 1/2 |
| 342 | 4 | **4096-QAM** | **4096-QAM** | QPSK | QPSK | 1/2 |
| 343 | 4 | 16-QAM | 16-QAM | 16-QAM | QPSK | 1/2 |
| 344 | 4 | 64-QAM | 16-QAM | 16-QAM | QPSK | 1/2 |
| 345 | 4 | **256-QAM** | 16-QAM | 16-QAM | QPSK | 1/2 |
| 346 | 4 | **1024-QAM** | 16-QAM | 16-QAM | QPSK | 1/2 |
| 347 | 4 | **4096-QAM** | 16-QAM | 16-QAM | QPSK | 1/2 |
| 348 | 4 | **64-QAM** | **64-QAM** | 16-QAM | QPSK | 1/2 |
| 349 | 4 | **256-QAM** | **64-QAM** | 16-QAM | QPSK | 1/2 |
| 350 | 4 | **1024-QAM** | **64-QAM** | 16-QAM | QPSK | 1/2 |
| 351 | 4 | **4096-QAM** | **64-QAM** | 16-QAM | QPSK | 1/2 |
| 352 | 4 | **256-QAM** | **256-QAM** | 16-QAM | QPSK | 1/2 |
| 353 | 4 | **1024-QAM** | **256-QAM** | 16-QAM | QPSK | 1/2 |
| 354 | 4 | **4096-QAM** | **256-QAM** | 16-QAM | QPSK | 1/2 |
| 355 | 4 | **1024-QAM** | **1024-QAM** | 16-QAM | QPSK | 1/2 |
| 356 | 4 | **4096-QAM** | **1024-QAM** | 16-QAM | QPSK | 1/2 |
| 357 | 4 | **4096-QAM** | **4096-QAM** | 16-QAM | QPSK | 1/2 |
| 358 | 4 | **64-QAM** | **64-QAM** | **64-QAM** | QPSK | 1/2 |
| 359 | 4 | **256-QAM** | **64-QAM** | **64-QAM** | QPSK | 1/2 |
| 360 | 4 | **1024-QAM** | **64-QAM** | **64-QAM** | QPSK | 1/2 |
| 361 | 4 | **4096-QAM** | **64-QAM** | **64-QAM** | QPSK | 1/2 |
| 362 | 4 | **256-QAM** | **256-QAM** | **64-QAM** | QPSK | 1/2 |
| 363 | 4 | **1024-QAM** | **256-QAM** | **64-QAM** | QPSK | 1/2 |
| 364 | 4 | **4096-QAM** | **256-QAM** | **64-QAM** | QPSK | 1/2 |
| 365 | 4 | **1024-QAM** | **1024-QAM** | **64-QAM** | QPSK | 1/2 |
| 366 | 4 | **4096-QAM** | **1024-QAM** | **64-QAM** | QPSK | 1/2 |
| 367 | 4 | **4096-QAM** | **4096-QAM** | **64-QAM** | QPSK | 1/2 |
| 368 | 4 | **256-QAM** | **256-QAM** | **256-QAM** | QPSK | 1/2 |
| 369 | 4 | **1024-QAM** | **256-QAM** | **256-QAM** | QPSK | 1/2 |
| 370 | 4 | **4096-QAM** | **256-QAM** | **256-QAM** | QPSK | 1/2 |
| 371 | 4 | **1024-QAM** | **1024-QAM** | **256-QAM** | QPSK | 1/2 |
| 372 | 4 | **4096-QAM** | **1024-QAM** | **256-QAM** | QPSK | 1/2 |
| 373 | 4 | **4096-QAM** | **4096-QAM** | **256-QAM** | QPSK | 1/2 |
| 374 | 4 | **1024-QAM** | **1024-QAM** | **1024-QAM** | QPSK | 1/2 |
| 375 | 4 | **4096-QAM** | **1024-QAM** | **1024-QAM** | QPSK | 1/2 |
| 376 | 4 | **4096-QAM** | **4096-QAM** | **1024-QAM** | QPSK | 1/2 |
| 377 | 4 | **4096-QAM** | **4096-QAM** | **4096-QAM** | QPSK | 1/2 |
| 378 | 4 | **64-QAM** | 16-QAM | 16-QAM | 16-QAM | 1/2 |
| 379 | 4 | **256-QAM** | 16-QAM | 16-QAM | 16-QAM | 1/2 |
| 380 | 4 | **1024-QAM** | 16-QAM | 16-QAM | 16-QAM | 1/2 |
| 381 | 4 | **4096-QAM** | 16-QAM | 16-QAM | 16-QAM | 1/2 |
| 382 | 4 | **64-QAM** | **64-QAM** | 16-QAM | 16-QAM | 1/2 |
| 383 | 4 | **256-QAM** | **64-QAM** | 16-QAM | 16-QAM | 1/2 |
| 384 | 4 | **1024-QAM** | **64-QAM** | 16-QAM | 16-QAM | 1/2 |
| 385 | 4 | **4096-QAM** | **64-QAM** | 16-QAM | 16-QAM | 1/2 |
| 386 | 4 | **256-QAM** | **256-QAM** | 16-QAM | 16-QAM | 1/2 |
| 387 | 4 | **1024-QAM** | **256-QAM** | 16-QAM | 16-QAM | 1/2 |
| 388 | 4 | **4096-QAM** | **256-QAM** | 16-QAM | 16-QAM | 1/2 |
| 389 | 4 | **1024-QAM** | **1024-QAM** | 16-QAM | 16-QAM | 1/2 |
| 390 | 4 | **4096-QAM** | **1024-QAM** | 16-QAM | 16-QAM | 1/2 |
| 391 | 4 | **4096-QAM** | **4096-QAM** | 16-QAM | 16-QAM | 1/2 |
| 392 | 4 | **64-QAM** | **64-QAM** | **64-QAM** | 16-QAM | 1/2 |
| 393 | 4 | **256-QAM** | **64-QAM** | **64-QAM** | 16-QAM | 1/2 |
| 394 | 4 | **1024-QAM** | **64-QAM** | **64-QAM** | 16-QAM | 1/2 |
| 395 | 4 | **4096-QAM** | **64-QAM** | **64-QAM** | 16-QAM | 1/2 |
| 396 | 4 | **256-QAM** | **256-QAM** | **64-QAM** | 16-QAM | 1/2 |
| 397 | 4 | **1024-QAM** | **256-QAM** | **64-QAM** | 16-QAM | 1/2 |
| 398 | 4 | **4096-QAM** | **256-QAM** | **64-QAM** | 16-QAM | 1/2 |
| 399 | 4 | **1024-QAM** | **1024-QAM** | **64-QAM** | 16-QAM | 1/2 |
| 400 | 4 | **4096-QAM** | **1024-QAM** | **64-QAM** | 16-QAM | 1/2 |
| 401 | 4 | **4096-QAM** | **4096-QAM** | **64-QAM** | 16-QAM | 1/2 |
| 402 | 4 | **256-QAM** | **256-QAM** | **256-QAM** | 16-QAM | 1/2 |
| 403 | 4 | **1024-QAM** | **256-QAM** | **256-QAM** | 16-QAM | 1/2 |
| 404 | 4 | **4096-QAM** | **256-QAM** | **256-QAM** | 16-QAM | 1/2 |
| 405 | 4 | **1024-QAM** | **1024-QAM** | **256-QAM** | 16-QAM | 1/2 |
| 406 | 4 | **4096-QAM** | **1024-QAM** | **256-QAM** | 16-QAM | 1/2 |
| 407 | 4 | **4096-QAM** | **4096-QAM** | **256-QAM** | 16-QAM | 1/2 |
| 408 | 4 | **1024-QAM** | **1024-QAM** | **1024-QAM** | 16-QAM | 1/2 |
| 409 | 4 | **4096-QAM** | **1024-QAM** | **1024-QAM** | 16-QAM | 1/2 |
| 410 | 4 | **4096-QAM** | **4096-QAM** | **1024-QAM** | 16-QAM | 1/2 |
| 411 | 4 | **4096-QAM** | **4096-QAM** | **4096-QAM** | 16-QAM | 1/2 |
| 412 | 4 | **256-QAM** | **64-QAM** | **64-QAM** | **64-QAM** | 1/2 |
| 413 | 4 | **1024-QAM** | **64-QAM** | **64-QAM** | **64-QAM** | 1/2 |
| 414 | 4 | **4096-QAM** | **64-QAM** | **64-QAM** | **64-QAM** | 1/2 |
| 415 | 4 | **256-QAM** | **256-QAM** | **64-QAM** | **64-QAM** | 1/2 |
| 416 | 4 | **1024-QAM** | **256-QAM** | **64-QAM** | **64-QAM** | 1/2 |
| 417 | 4 | **4096-QAM** | **256-QAM** | **64-QAM** | **64-QAM** | 1/2 |
| 418 | 4 | **1024-QAM** | **1024-QAM** | **64-QAM** | **64-QAM** | 1/2 |
| 419 | 4 | **4096-QAM** | **1024-QAM** | **64-QAM** | **64-QAM** | 1/2 |
| 420 | 4 | **4096-QAM** | **4096-QAM** | **64-QAM** | **64-QAM** | 1/2 |
| 421 | 4 | **256-QAM** | **256-QAM** | **256-QAM** | **64-QAM** | 1/2 |
| 422 | 4 | **1024-QAM** | **256-QAM** | **256-QAM** | **64-QAM** | 1/2 |
| 423 | 4 | **4096-QAM** | **256-QAM** | **256-QAM** | **64-QAM** | 1/2 |
| 424 | 4 | **1024-QAM** | **1024-QAM** | **256-QAM** | **64-QAM** | 1/2 |
| 425 | 4 | **4096-QAM** | **1024-QAM** | **256-QAM** | **64-QAM** | 1/2 |
| 426 | 4 | **4096-QAM** | **4096-QAM** | **256-QAM** | **64-QAM** | 1/2 |
| 427 | 4 | **1024-QAM** | **1024-QAM** | **1024-QAM** | **64-QAM** | 1/2 |
| 428 | 4 | **4096-QAM** | **1024-QAM** | **1024-QAM** | **64-QAM** | 1/2 |
| 429 | 4 | **4096-QAM** | **4096-QAM** | **1024-QAM** | **64-QAM** | 1/2 |
| 430 | 4 | **4096-QAM** | **4096-QAM** | **4096-QAM** | **64-QAM** | 1/2 |
| 431 | 4 | **1024-QAM** | **256-QAM** | **256-QAM** | **256-QAM** | 1/2 |
| 432 | 4 | **4096-QAM** | **256-QAM** | **256-QAM** | **256-QAM** | 1/2 |
| 433 | 4 | **1024-QAM** | **1024-QAM** | **256-QAM** | **256-QAM** | 1/2 |
| 434 | 4 | **4096-QAM** | **1024-QAM** | **256-QAM** | **256-QAM** | 1/2 |
| 435 | 4 | **4096-QAM** | **4096-QAM** | **256-QAM** | **256-QAM** | 1/2 |
| 436 | 4 | **1024-QAM** | **1024-QAM** | **1024-QAM** | **256-QAM** | 1/2 |
| 437 | 4 | **4096-QAM** | **1024-QAM** | **1024-QAM** | **256-QAM** | 1/2 |
| 438 | 4 | **4096-QAM** | **4096-QAM** | **1024-QAM** | **256-QAM** | 1/2 |
| 439 | 4 | **4096-QAM** | **4096-QAM** | **4096-QAM** | **256-QAM** | 1/2 |
| 440 | 4 | **4096-QAM** | **1024-QAM** | **1024-QAM** | **1024-QAM** | 1/2 |
| 441 | 4 | **4096-QAM** | **4096-QAM** | **1024-QAM** | **1024-QAM** | 1/2 |
| 442 | 4 | **4096-QAM** | **4096-QAM** | **4096-QAM** | **1024-QAM** | 1/2 |
| 443 | 4 | 16-QAM | QPSK | QPSK | QPSK | 3/4 |
| 444 | 4 | 64-QAM | QPSK | QPSK | QPSK | 3/4 |
| 445 | 4 | 256-QAM | QPSK | QPSK | QPSK | 3/4 |
| 446 | 4 | 1024-QAM | QPSK | QPSK | QPSK | 3/4 |
| 447 | 4 | 4096-QAM | QPSK | QPSK | QPSK | 3/4 |
| 448 | 4 | 16-QAM | 16-QAM | QPSK | QPSK | 3/4 |
| 449 | 4 | 64-QAM | 16-QAM | QPSK | QPSK | 3/4 |
| 450 | 4 | 256-QAM | 16-QAM | QPSK | QPSK | 3/4 |
| 451 | 4 | 1024-QAM | 16-QAM | QPSK | QPSK | 3/4 |
| 452 | 4 | 4096-QAM | 16-QAM | QPSK | QPSK | 3/4 |
| 453 | 4 | 64-QAM | 64-QAM | QPSK | QPSK | 3/4 |
| 454 | 4 | 256-QAM | 64-QAM | QPSK | QPSK | 3/4 |
| 455 | 4 | 1024-QAM | 64-QAM | QPSK | QPSK | 3/4 |
| 456 | 4 | 4096-QAM | 64-QAM | QPSK | QPSK | 3/4 |
| 457 | 4 | 256-QAM | 256-QAM | QPSK | QPSK | 3/4 |
| 458 | 4 | 1024-QAM | 256-QAM | QPSK | QPSK | 3/4 |
| 459 | 4 | 4096-QAM | 256-QAM | QPSK | QPSK | 3/4 |
| 460 | 4 | 1024-QAM | 1024-QAM | QPSK | QPSK | 3/4 |
| 461 | 4 | 4096-QAM | 1024-QAM | QPSK | QPSK | 3/4 |
| 462 | 4 | 4096-QAM | 4096-QAM | QPSK | QPSK | 3/4 |
| 463 | 4 | 16-QAM | 16-QAM | 16-QAM | QPSK | 3/4 |
| 464 | 4 | 64-QAM | 16-QAM | 16-QAM | QPSK | 3/4 |
| 465 | 4 | 256-QAM | 16-QAM | 16-QAM | QPSK | 3/4 |
| 466 | 4 | 1024-QAM | 16-QAM | 16-QAM | QPSK | 3/4 |
| 467 | 4 | 4096-QAM | 16-QAM | 16-QAM | QPSK | 3/4 |
| 468 | 4 | 64-QAM | 64-QAM | 16-QAM | QPSK | 3/4 |
| 469 | 4 | 256-QAM | 64-QAM | 16-QAM | QPSK | 3/4 |
| 470 | 4 | 1024-QAM | 64-QAM | 16-QAM | QPSK | 3/4 |
| 471 | 4 | 4096-QAM | 64-QAM | 16-QAM | QPSK | 3/4 |
| 472 | 4 | 256-QAM | 256-QAM | 16-QAM | QPSK | 3/4 |
| 473 | 4 | 1024-QAM | 256-QAM | 16-QAM | QPSK | 3/4 |
| 474 | 4 | 4096-QAM | 256-QAM | 16-QAM | QPSK | 3/4 |
| 475 | 4 | 1024-QAM | 1024-QAM | 16-QAM | QPSK | 3/4 |
| 476 | 4 | 4096-QAM | 1024-QAM | 16-QAM | QPSK | 3/4 |
| 477 | 4 | 4096-QAM | 4096-QAM | 16-QAM | QPSK | 3/4 |
| 478 | 4 | 64-QAM | 64-QAM | 64-QAM | QPSK | 3/4 |
| 479 | 4 | 256-QAM | 64-QAM | 64-QAM | QPSK | 3/4 |
| 480 | 4 | 1024-QAM | 64-QAM | 64-QAM | QPSK | 3/4 |
| 481 | 4 | 4096-QAM | 64-QAM | 64-QAM | QPSK | 3/4 |
| 482 | 4 | 256-QAM | 256-QAM | 64-QAM | QPSK | 3/4 |
| 483 | 4 | 1024-QAM | 256-QAM | 64-QAM | QPSK | 3/4 |
| 484 | 4 | 4096-QAM | 256-QAM | 64-QAM | QPSK | 3/4 |
| 485 | 4 | 1024-QAM | 1024-QAM | 64-QAM | QPSK | 3/4 |
| 486 | 4 | 4096-QAM | 1024-QAM | 64-QAM | QPSK | 3/4 |
| 487 | 4 | 4096-QAM | 4096-QAM | 64-QAM | QPSK | 3/4 |
| 488 | 4 | 256-QAM | 256-QAM | 256-QAM | QPSK | 3/4 |
| 489 | 4 | 1024-QAM | 256-QAM | 256-QAM | QPSK | 3/4 |
| 490 | 4 | 4096-QAM | 256-QAM | 256-QAM | QPSK | 3/4 |
| 491 | 4 | 1024-QAM | 1024-QAM | 256-QAM | QPSK | 3/4 |
| 492 | 4 | 4096-QAM | 1024-QAM | 256-QAM | QPSK | 3/4 |
| 493 | 4 | 4096-QAM | 4096-QAM | 256-QAM | QPSK | 3/4 |
| 494 | 4 | 1024-QAM | 1024-QAM | 1024-QAM | QPSK | 3/4 |
| 495 | 4 | 4096-QAM | 1024-QAM | 1024-QAM | QPSK | 3/4 |
| 496 | 4 | 4096-QAM | 4096-QAM | 1024-QAM | QPSK | 3/4 |
| 497 | 4 | 4096-QAM | 4096-QAM | 4096-QAM | QPSK | 3/4 |
| 498 | 4 | 64-QAM | 16-QAM | 16-QAM | 16-QAM | 3/4 |
| 499 | 4 | 256-QAM | 16-QAM | 16-QAM | 16-QAM | 3/4 |
| 500 | 4 | 1024-QAM | 16-QAM | 16-QAM | 16-QAM | 3/4 |
| 501 | 4 | 4096-QAM | 16-QAM | 16-QAM | 16-QAM | 3/4 |
| 502 | 4 | 64-QAM | 64-QAM | 16-QAM | 16-QAM | 3/4 |
| 503 | 4 | 256-QAM | 64-QAM | 16-QAM | 16-QAM | 3/4 |
| 504 | 4 | 1024-QAM | 64-QAM | 16-QAM | 16-QAM | 3/4 |
| 505 | 4 | 4096-QAM | 64-QAM | 16-QAM | 16-QAM | 3/4 |
| 506 | 4 | 256-QAM | 256-QAM | 16-QAM | 16-QAM | 3/4 |
| 507 | 4 | 1024-QAM | 256-QAM | 16-QAM | 16-QAM | 3/4 |
| 508 | 4 | 4096-QAM | 256-QAM | 16-QAM | 16-QAM | 3/4 |
| 509 | 4 | 1024-QAM | 1024-QAM | 16-QAM | 16-QAM | 3/4 |
| 510 | 4 | 4096-QAM | 1024-QAM | 16-QAM | 16-QAM | 3/4 |
| 511 | 4 | 4096-QAM | 4096-QAM | 16-QAM | 16-QAM | 3/4 |
| 512 | 4 | 64-QAM | 64-QAM | 64-QAM | 16-QAM | 3/4 |
| 513 | 4 | 256-QAM | 64-QAM | 64-QAM | 16-QAM | 3/4 |
| 514 | 4 | 1024-QAM | 64-QAM | 64-QAM | 16-QAM | 3/4 |
| 515 | 4 | 4096-QAM | 64-QAM | 64-QAM | 16-QAM | 3/4 |
| 516 | 4 | 256-QAM | 256-QAM | 64-QAM | 16-QAM | 3/4 |
| 517 | 4 | 1024-QAM | 256-QAM | 64-QAM | 16-QAM | 3/4 |
| 518 | 4 | 4096-QAM | 256-QAM | 64-QAM | 16-QAM | 3/4 |
| 519 | 4 | 1024-QAM | 1024-QAM | 64-QAM | 16-QAM | 3/4 |
| 520 | 4 | 4096-QAM | 1024-QAM | 64-QAM | 16-QAM | 3/4 |
| 521 | 4 | 4096-QAM | 4096-QAM | 64-QAM | 16-QAM | 3/4 |
| 522 | 4 | 256-QAM | 256-QAM | 256-QAM | 16-QAM | 3/4 |
| 523 | 4 | 1024-QAM | 256-QAM | 256-QAM | 16-QAM | 3/4 |
| 524 | 4 | 4096-QAM | 256-QAM | 256-QAM | 16-QAM | 3/4 |
| 525 | 4 | 1024-QAM | 1024-QAM | 256-QAM | 16-QAM | 3/4 |
| 526 | 4 | 4096-QAM | 1024-QAM | 256-QAM | 16-QAM | 3/4 |
| 527 | 4 | 4096-QAM | 4096-QAM | 256-QAM | 16-QAM | 3/4 |
| 528 | 4 | 1024-QAM | 1024-QAM | 1024-QAM | 16-QAM | 3/4 |
| 529 | 4 | 4096-QAM | 1024-QAM | 1024-QAM | 16-QAM | 3/4 |
| 530 | 4 | 4096-QAM | 4096-QAM | 1024-QAM | 16-QAM | 3/4 |
| 531 | 4 | 4096-QAM | 4096-QAM | 4096-QAM | 16-QAM | 3/4 |
| 532 | 4 | 256-QAM | 64-QAM | 64-QAM | 64-QAM | 3/4 |
| 533 | 4 | 1024-QAM | 64-QAM | 64-QAM | 64-QAM | 3/4 |
| 534 | 4 | 4096-QAM | 64-QAM | 64-QAM | 64-QAM | 3/4 |
| 535 | 4 | 256-QAM | 256-QAM | 64-QAM | 64-QAM | 3/4 |
| 536 | 4 | 1024-QAM | 256-QAM | 64-QAM | 64-QAM | 3/4 |
| 537 | 4 | 4096-QAM | 256-QAM | 64-QAM | 64-QAM | 3/4 |
| 538 | 4 | 1024-QAM | 1024-QAM | 64-QAM | 64-QAM | 3/4 |
| 539 | 4 | 4096-QAM | 1024-QAM | 64-QAM | 64-QAM | 3/4 |
| 540 | 4 | 4096-QAM | 4096-QAM | 64-QAM | 64-QAM | 3/4 |
| 541 | 4 | 256-QAM | 256-QAM | 256-QAM | 64-QAM | 3/4 |
| 542 | 4 | 1024-QAM | 256-QAM | 256-QAM | 64-QAM | 3/4 |
| 543 | 4 | 4096-QAM | 256-QAM | 256-QAM | 64-QAM | 3/4 |
| 544 | 4 | 1024-QAM | 1024-QAM | 256-QAM | 64-QAM | 3/4 |
| 545 | 4 | 4096-QAM | 1024-QAM | 256-QAM | 64-QAM | 3/4 |
| 546 | 4 | 4096-QAM | 4096-QAM | 256-QAM | 64-QAM | 3/4 |
| 547 | 4 | 1024-QAM | 1024-QAM | 1024-QAM | 64-QAM | 3/4 |
| 548 | 4 | 4096-QAM | 1024-QAM | 1024-QAM | 64-QAM | 3/4 |
| 549 | 4 | 4096-QAM | 4096-QAM | 1024-QAM | 64-QAM | 3/4 |
| 550 | 4 | 4096-QAM | 4096-QAM | 4096-QAM | 64-QAM | 3/4 |
| 551 | 4 | 1024-QAM | 256-QAM | 256-QAM | 256-QAM | 3/4 |
| 552 | 4 | 4096-QAM | 256-QAM | 256-QAM | 256-QAM | 3/4 |
| 553 | 4 | 1024-QAM | 1024-QAM | 256-QAM | 256-QAM | 3/4 |
| 554 | 4 | 4096-QAM | 1024-QAM | 256-QAM | 256-QAM | 3/4 |
| 555 | 4 | 4096-QAM | 4096-QAM | 256-QAM | 256-QAM | 3/4 |
| 556 | 4 | 1024-QAM | 1024-QAM | 1024-QAM | 256-QAM | 3/4 |
| 557 | 4 | 4096-QAM | 1024-QAM | 1024-QAM | 256-QAM | 3/4 |
| 558 | 4 | 4096-QAM | 4096-QAM | 1024-QAM | 256-QAM | 3/4 |
| 559 | 4 | 4096-QAM | 4096-QAM | 4096-QAM | 256-QAM | 3/4 |
| 560 | 4 | 4096-QAM | 1024-QAM | 1024-QAM | 1024-QAM | 3/4 |
| 561 | 4 | 4096-QAM | 4096-QAM | 1024-QAM | 1024-QAM | 3/4 |
| 562 | 4 | 4096-QAM | 4096-QAM | 4096-QAM | 1024-QAM | 3/4 |
| 563 | 4 | **16-QAM** | **QPSK** | **QPSK** | **QPSK** | 5/6 |
| 564 | 4 | 64-QAM | **QPSK** | **QPSK** | **QPSK** | 5/6 |
| 565 | 4 | 256-QAM | **QPSK** | **QPSK** | **QPSK** | 5/6 |
| 566 | 4 | 1024-QAM | **QPSK** | **QPSK** | **QPSK** | 5/6 |
| 567 | 4 | 4096-QAM | **QPSK** | **QPSK** | **QPSK** | 5/6 |
| 568 | 4 | **16-QAM** | **16-QAM** | **QPSK** | **QPSK** | 5/6 |
| 569 | 4 | 64-QAM | **16-QAM** | **QPSK** | **QPSK** | 5/6 |
| 570 | 4 | 256-QAM | **16-QAM** | **QPSK** | **QPSK** | 5/6 |
| 571 | 4 | 1024-QAM | **16-QAM** | **QPSK** | **QPSK** | 5/6 |
| 572 | 4 | 4096-QAM | **16-QAM** | **QPSK** | **QPSK** | 5/6 |
| 573 | 4 | 64-QAM | 64-QAM | **QPSK** | **QPSK** | 5/6 |
| 574 | 4 | 256-QAM | 64-QAM | **QPSK** | **QPSK** | 5/6 |
| 575 | 4 | 1024-QAM | 64-QAM | **QPSK** | **QPSK** | 5/6 |
| 576 | 4 | 4096-QAM | 64-QAM | **QPSK** | **QPSK** | 5/6 |
| 577 | 4 | 256-QAM | 256-QAM | **QPSK** | **QPSK** | 5/6 |
| 578 | 4 | 1024-QAM | 256-QAM | **QPSK** | **QPSK** | 5/6 |
| 579 | 4 | 4096-QAM | 256-QAM | **QPSK** | **QPSK** | 5/6 |
| 580 | 4 | 1024-QAM | 1024-QAM | **QPSK** | **QPSK** | 5/6 |
| 581 | 4 | 4096-QAM | 1024-QAM | **QPSK** | **QPSK** | 5/6 |
| 582 | 4 | 4096-QAM | 4096-QAM | **QPSK** | **QPSK** | 5/6 |
| 583 | 4 | **16-QAM** | **16-QAM** | **16-QAM** | **QPSK** | 5/6 |
| 584 | 4 | 64-QAM | **16-QAM** | **16-QAM** | **QPSK** | 5/6 |
| 585 | 4 | 256-QAM | **16-QAM** | **16-QAM** | **QPSK** | 5/6 |
| 586 | 4 | 1024-QAM | **16-QAM** | **16-QAM** | **QPSK** | 5/6 |
| 587 | 4 | 4096-QAM | **16-QAM** | **16-QAM** | **QPSK** | 5/6 |
| 588 | 4 | 64-QAM | 64-QAM | **16-QAM** | **QPSK** | 5/6 |
| 589 | 4 | 256-QAM | 64-QAM | **16-QAM** | **QPSK** | 5/6 |
| 590 | 4 | 1024-QAM | 64-QAM | **16-QAM** | **QPSK** | 5/6 |
| 591 | 4 | 4096-QAM | 64-QAM | **16-QAM** | **QPSK** | 5/6 |
| 592 | 4 | 256-QAM | 256-QAM | **16-QAM** | **QPSK** | 5/6 |
| 593 | 4 | 1024-QAM | 256-QAM | **16-QAM** | **QPSK** | 5/6 |
| 594 | 4 | 4096-QAM | 256-QAM | **16-QAM** | **QPSK** | 5/6 |
| 595 | 4 | 1024-QAM | 1024-QAM | **16-QAM** | **QPSK** | 5/6 |
| 596 | 4 | 4096-QAM | 1024-QAM | **16-QAM** | **QPSK** | 5/6 |
| 597 | 4 | 4096-QAM | 4096-QAM | **16-QAM** | **QPSK** | 5/6 |
| 598 | 4 | 64-QAM | 64-QAM | 64-QAM | **QPSK** | 5/6 |
| 599 | 4 | 256-QAM | 64-QAM | 64-QAM | **QPSK** | 5/6 |
| 600 | 4 | 1024-QAM | 64-QAM | 64-QAM | **QPSK** | 5/6 |
| 601 | 4 | 4096-QAM | 64-QAM | 64-QAM | **QPSK** | 5/6 |
| 602 | 4 | 256-QAM | 256-QAM | 64-QAM | **QPSK** | 5/6 |
| 603 | 4 | 1024-QAM | 256-QAM | 64-QAM | **QPSK** | 5/6 |
| 604 | 4 | 4096-QAM | 256-QAM | 64-QAM | **QPSK** | 5/6 |
| 605 | 4 | 1024-QAM | 1024-QAM | 64-QAM | **QPSK** | 5/6 |
| 606 | 4 | 4096-QAM | 1024-QAM | 64-QAM | **QPSK** | 5/6 |
| 607 | 4 | 4096-QAM | 4096-QAM | 64-QAM | **QPSK** | 5/6 |
| 608 | 4 | 256-QAM | 256-QAM | 256-QAM | **QPSK** | 5/6 |
| 609 | 4 | 1024-QAM | 256-QAM | 256-QAM | **QPSK** | 5/6 |
| 610 | 4 | 4096-QAM | 256-QAM | 256-QAM | **QPSK** | 5/6 |
| 611 | 4 | 1024-QAM | 1024-QAM | 256-QAM | **QPSK** | 5/6 |
| 612 | 4 | 4096-QAM | 1024-QAM | 256-QAM | **QPSK** | 5/6 |
| 613 | 4 | 4096-QAM | 4096-QAM | 256-QAM | **QPSK** | 5/6 |
| 614 | 4 | 1024-QAM | 1024-QAM | 1024-QAM | **QPSK** | 5/6 |
| 615 | 4 | 4096-QAM | 1024-QAM | 1024-QAM | **QPSK** | 5/6 |
| 616 | 4 | 4096-QAM | 4096-QAM | 1024-QAM | **QPSK** | 5/6 |
| 617 | 4 | 4096-QAM | 4096-QAM | 4096-QAM | **QPSK** | 5/6 |
| 618 | 4 | 64-QAM | **16-QAM** | **16-QAM** | **16-QAM** | 5/6 |
| 619 | 4 | 256-QAM | **16-QAM** | **16-QAM** | **16-QAM** | 5/6 |
| 620 | 4 | 1024-QAM | **16-QAM** | **16-QAM** | **16-QAM** | 5/6 |
| 621 | 4 | 4096-QAM | **16-QAM** | **16-QAM** | **16-QAM** | 5/6 |
| 622 | 4 | 64-QAM | 64-QAM | **16-QAM** | **16-QAM** | 5/6 |
| 623 | 4 | 256-QAM | 64-QAM | **16-QAM** | **16-QAM** | 5/6 |
| 624 | 4 | 1024-QAM | 64-QAM | **16-QAM** | **16-QAM** | 5/6 |
| 625 | 4 | 4096-QAM | 64-QAM | **16-QAM** | **16-QAM** | 5/6 |
| 626 | 4 | 256-QAM | 256-QAM | **16-QAM** | **16-QAM** | 5/6 |
| 627 | 4 | 1024-QAM | 256-QAM | **16-QAM** | **16-QAM** | 5/6 |
| 628 | 4 | 4096-QAM | 256-QAM | **16-QAM** | **16-QAM** | 5/6 |
| 629 | 4 | 1024-QAM | 1024-QAM | **16-QAM** | **16-QAM** | 5/6 |
| 630 | 4 | 4096-QAM | 1024-QAM | **16-QAM** | **16-QAM** | 5/6 |
| 631 | 4 | 4096-QAM | 4096-QAM | **16-QAM** | **16-QAM** | 5/6 |
| 632 | 4 | 64-QAM | 64-QAM | 64-QAM | **16-QAM** | 5/6 |
| 633 | 4 | 256-QAM | 64-QAM | 64-QAM | **16-QAM** | 5/6 |
| 634 | 4 | 1024-QAM | 64-QAM | 64-QAM | **16-QAM** | 5/6 |
| 635 | 4 | 4096-QAM | 64-QAM | 64-QAM | **16-QAM** | 5/6 |
| 636 | 4 | 256-QAM | 256-QAM | 64-QAM | **16-QAM** | 5/6 |
| 637 | 4 | 1024-QAM | 256-QAM | 64-QAM | **16-QAM** | 5/6 |
| 638 | 4 | 4096-QAM | 256-QAM | 64-QAM | **16-QAM** | 5/6 |
| 639 | 4 | 1024-QAM | 1024-QAM | 64-QAM | **16-QAM** | 5/6 |
| 640 | 4 | 4096-QAM | 1024-QAM | 64-QAM | **16-QAM** | 5/6 |
| 641 | 4 | 4096-QAM | 4096-QAM | 64-QAM | **16-QAM** | 5/6 |
| 642 | 4 | 256-QAM | 256-QAM | 256-QAM | **16-QAM** | 5/6 |
| 643 | 4 | 1024-QAM | 256-QAM | 256-QAM | **16-QAM** | 5/6 |
| 644 | 4 | 4096-QAM | 256-QAM | 256-QAM | **16-QAM** | 5/6 |
| 645 | 4 | 1024-QAM | 1024-QAM | 256-QAM | **16-QAM** | 5/6 |
| 646 | 4 | 4096-QAM | 1024-QAM | 256-QAM | **16-QAM** | 5/6 |
| 647 | 4 | 4096-QAM | 4096-QAM | 256-QAM | **16-QAM** | 5/6 |
| 648 | 4 | 1024-QAM | 1024-QAM | 1024-QAM | **16-QAM** | 5/6 |
| 649 | 4 | 4096-QAM | 1024-QAM | 1024-QAM | **16-QAM** | 5/6 |
| 650 | 4 | 4096-QAM | 4096-QAM | 1024-QAM | **16-QAM** | 5/6 |
| 651 | 4 | 4096-QAM | 4096-QAM | 4096-QAM | **16-QAM** | 5/6 |
| 652 | 4 | 256-QAM | 64-QAM | 64-QAM | 64-QAM | 5/6 |
| 653 | 4 | 1024-QAM | 64-QAM | 64-QAM | 64-QAM | 5/6 |
| 654 | 4 | 4096-QAM | 64-QAM | 64-QAM | 64-QAM | 5/6 |
| 655 | 4 | 256-QAM | 256-QAM | 64-QAM | 64-QAM | 5/6 |
| 656 | 4 | 1024-QAM | 256-QAM | 64-QAM | 64-QAM | 5/6 |
| 657 | 4 | 4096-QAM | 256-QAM | 64-QAM | 64-QAM | 5/6 |
| 658 | 4 | 1024-QAM | 1024-QAM | 64-QAM | 64-QAM | 5/6 |
| 659 | 4 | 4096-QAM | 1024-QAM | 64-QAM | 64-QAM | 5/6 |
| 660 | 4 | 4096-QAM | 4096-QAM | 64-QAM | 64-QAM | 5/6 |
| 661 | 4 | 256-QAM | 256-QAM | 256-QAM | 64-QAM | 5/6 |
| 662 | 4 | 1024-QAM | 256-QAM | 256-QAM | 64-QAM | 5/6 |
| 663 | 4 | 4096-QAM | 256-QAM | 256-QAM | 64-QAM | 5/6 |
| 664 | 4 | 1024-QAM | 1024-QAM | 256-QAM | 64-QAM | 5/6 |
| 665 | 4 | 4096-QAM | 1024-QAM | 256-QAM | 64-QAM | 5/6 |
| 666 | 4 | 4096-QAM | 4096-QAM | 256-QAM | 64-QAM | 5/6 |
| 667 | 4 | 1024-QAM | 1024-QAM | 1024-QAM | 64-QAM | 5/6 |
| 668 | 4 | 4096-QAM | 1024-QAM | 1024-QAM | 64-QAM | 5/6 |
| 669 | 4 | 4096-QAM | 4096-QAM | 1024-QAM | 64-QAM | 5/6 |
| 670 | 4 | 4096-QAM | 4096-QAM | 4096-QAM | 64-QAM | 5/6 |
| 671 | 4 | 1024-QAM | 256-QAM | 256-QAM | 256-QAM | 5/6 |
| 672 | 4 | 4096-QAM | 256-QAM | 256-QAM | 256-QAM | 5/6 |
| 673 | 4 | 1024-QAM | 1024-QAM | 256-QAM | 256-QAM | 5/6 |
| 674 | 4 | 4096-QAM | 1024-QAM | 256-QAM | 256-QAM | 5/6 |
| 675 | 4 | 4096-QAM | 4096-QAM | 256-QAM | 256-QAM | 5/6 |
| 676 | 4 | 1024-QAM | 1024-QAM | 1024-QAM | 256-QAM | 5/6 |
| 677 | 4 | 4096-QAM | 1024-QAM | 1024-QAM | 256-QAM | 5/6 |
| 678 | 4 | 4096-QAM | 4096-QAM | 1024-QAM | 256-QAM | 5/6 |
| 679 | 4 | 4096-QAM | 4096-QAM | 4096-QAM | 256-QAM | 5/6 |
| 680 | 4 | 4096-QAM | 1024-QAM | 1024-QAM | 1024-QAM | 5/6 |
| 681 | 4 | 4096-QAM | 4096-QAM | 1024-QAM | 1024-QAM | 5/6 |
| 682 | 4 | 4096-QAM | 4096-QAM | 4096-QAM | 1024-QAM | 5/6 |
| 683 to END (for example, END= 102 7) | Reserved | | | | | |

It is uniformly noted herein that tables obtained by adding, deleting, transforming, or modifying the UMCS index tables (for example, Table 12 to Table 18) shown in this specification belong to UMCS index tables protected in this application.

In addition, there are the following methods for distinguishing whether a user field corresponds to the EQM or the UEQM. One is to perform mode indication by using 1 bit or more than 1 bit. For example, the 1 bit (for example, an EQM/UEQM field) indicates whether the user field corresponds to the EQM or the UEQM. The indication may be located in a common field, or may be located in the user field. Further, different indication methods may be used for the EQM and the UEQM. For example, for the EQM, a method for indicating an MCS used by each spatial stream in an existing standard may be used, to simplify implementation complexity of the device. Under the EQM, a beamforming subfield indicates whether the transmitter performs beamforming. In an implementation, for the UEQM, because beamforming is already used by default, under the UEQM, the user field may use the subfield to carry an additional required UEQM MCS field.

It should be noted that in addition to UEQM for different spatial streams, the foregoing manner may be further used for UEQM modulation of more than one RU or MRU allocated to one user, and each spatial stream may be replaced with a different RU or MRU. Because the RU or the MRU has a predetermined frequency domain order, entries in the table may be separately designed for different QAM orders. For example, entries corresponding to 16-QAM and QPSK indicate frequencies in ascending order, where a first RU uses 16-QAM, and a second RU uses QPSK; or entries corresponding to QPSK and 16-QAM indicate frequencies in ascending order, where a first RU uses QPSK, and a second RU uses 16-QAM.

The following describes, with reference to the accompanying drawings, a structure of a communication apparatus that can implement the modulation and coding scheme indication method provided in embodiments of this application.

FIG. 21 is a diagram of a structure of a communication apparatus 2100 according to an embodiment of this application. The communication apparatus 2100 may correspondingly implement functions or steps implemented by the transmitter in the foregoing method embodiments, or may correspondingly implement functions or steps implemented by the receiver in the foregoing method embodiments. The communication apparatus may include a processing module 2110 and a transceiver module 2120. Optionally, the communication apparatus may further include a storage unit. The storage unit may be configured to store instructions (code or a program) and/or data. The processing module 2110 and the transceiver module 2120 may be coupled to the storage unit. For example, the processing module 2110 may read the instructions (the code or the program) and/or the data in the storage unit, to implement a corresponding method. The foregoing modules may be disposed independently, or may be partially or completely integrated. For example, the transceiver module 2120 may include a sending module and a receiving module. The sending module may be a transmitter, and the receiving module may be a receiver. An entity corresponding to the transceiver module 2120 may be a transceiver, or may be a communication interface.

In some possible implementations, the communication apparatus 2100 can correspondingly implement behavior and the functions of the transmitter in the foregoing method embodiments. For example, the communication apparatus 2100 may be the transmitter, or may be a component (for example, a chip or a circuit) used in the transmitter. For example, the transceiver module 2120 may be configured to perform all receiving or sending operations performed by the transmitter in the embodiments in FIG. 2 and FIG. 14, for example, step 202 in the embodiment shown in FIG. 2, step 1402 in the embodiment shown in FIG. 14, and/or another process used to support the technology described in this specification. The processing module 2110 is configured to perform all operations performed by the transmitter other than the receiving and sending operations in the embodiments shown in FIG. 2 and FIG. 14, for example, step 201 in the embodiment shown in FIG. 2 and step 1401 in the embodiment shown in FIG. 14.

In some possible implementations, the communication apparatus 2100 can correspondingly implement behavior and the functions of the receiver in the foregoing method embodiments. For example, the communication apparatus 2100 may be the receiver, or may be a component (for example, a chip or a circuit) used in the receiver. For example, the transceiver module 2120 may be configured to perform all receiving or sending operations performed by the receiver in the embodiments in FIG. 2 and FIG. 14, for example, step 202 in the embodiment shown in FIG. 2, step 1402 in the embodiment shown in FIG. 14, and/or another process used to support the technology described in this specification. The processing module 2110 is configured to perform all operations performed by the receiver other than the receiving and sending operations, for example, step 203 in the embodiment shown in FIG. 2 and step 1403 in the embodiment shown in FIG. 14.

FIG. 22 is a diagram of a structure of another communication apparatus 220 according to an embodiment of this application. The communication apparatus in FIG. 22 may be the transmitter, or may be the receiver.

As shown in FIG. 22, the communication apparatus 220 includes at least one processor 2210 and a transceiver 2220.

In some embodiments of this application, the processor 2210 and the transceiver 2220 may be configured to perform functions, operations, or the like performed by the transmitter. For example, the transceiver 2220 performs all receiving or sending operations performed by the transmitter in the embodiments in FIG. 2 and FIG. 14. For example, the processor 2210 is configured to perform all operations performed by the transmitter other than the receiving and sending operations in the embodiments in FIG. 2 and FIG. 14.

In some embodiments of this application, the processor 2210 and the transceiver 2220 may be configured to perform functions, operations, or the like performed by the receiver. For example, the transceiver 2220 performs all receiving or sending operations performed by the receiver in the embodiments in FIG. 2 and FIG. 14. The processor 2210 is configured to perform all operations performed by the receiver other than the receiving and sending operations, for example, step 203 in the embodiment shown in FIG. 2 and step 1403 in the embodiment shown in FIG. 14.

The transceiver 2220 is configured to communicate with another device/apparatus through a transmission medium. The processor 2210 receives/sends data and/or signaling by using the transceiver 2220, and is configured to implement the methods in the foregoing method embodiments. The processor 2210 may implement functions of the processing module 2110, and the transceiver 2220 may implement functions of the transceiver module 2120.

Optionally, the transceiver 2220 may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. An input/output apparatus, for example, a touchscreen, a display, or a keyboard, is mainly configured to: receive data input by a user and output data to the user.

Optionally, the communication apparatus 220 may further include at least one memory 2230, configured to store program instructions and/or data. The memory 2230 is coupled to the processor 2210. The coupling in embodiments of this application may be an indirect coupling or a communication connection between apparatuses, units, or modules in an electrical form, a mechanical form, or another form, and is used for information exchange between the apparatuses, the units, or the modules. The processor 2210 may operate with the memory 2230 collaboratively. The processor 2210 may execute the program instructions stored in the memory 2230. The memory may be included in the processor.

After the communication apparatus 220 is powered on, the processor 2210 may read a software program in the memory 2230, interpret and execute instructions of the software program, and process data of the software program. When data needs to be sent wirelessly, the processor 2210 performs baseband processing on the to-be-sent data, and then outputs a baseband signal to the radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 2210. The processor 2210 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 2220, the processor 2210, and the memory 2230 is not limited in embodiment of this application. In embodiments of this application, the memory 2230, the processor 2210, and the transceiver 2220 are connected through a bus 2240 in FIG. 22. The bus is represented by a bold line in FIG. 22, and a connection manner between other components is merely described as an example, and is not limited thereto. The bus may be classified into an address bus, a data bus, a control bus, and the like. For ease of representation, only one bold line is used for representation in FIG. 22, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

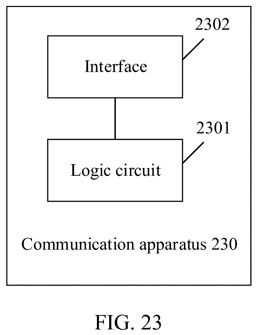

FIG. 23 is a diagram of a structure of another communication apparatus 230 according to an embodiment of this application. As shown in FIG. 23, the communication apparatus shown in FIG. 23 includes a logic circuit 2301 and an interface 2302. The processing module 2110 in FIG. 21 may be implemented by using the logic circuit 2301, and the transceiver module 2120 in FIG. 21 may be implemented by using the interface 2302. The logic circuit 2301 may be a chip, a processing circuit, an integrated circuit, a system on chip (system on chip, SoC), or the like. The interface 2302 may be a communication interface, an input/output interface, or the like. In this embodiment of this application, the logic circuit and the interface may alternatively be coupled to each other. A specific manner of connection between the logical circuit and the interface is not limited in embodiments of this application.

In some embodiments of this application, the logic circuit and the interface may be configured to perform functions, operations, or the like performed by the transmitter.

In some embodiments of this application, the logic circuit and the interface may be configured to perform functions, operations, or the like performed by the receiver.

This application further provides a computer-readable storage medium. The computer-readable storage medium stores a computer program or instructions. When the computer program or instructions are run on a computer, the computer is enabled to perform the methods in the foregoing embodiments.

This application further provides a computer program product. The computer program product includes instructions or a computer program. When the instructions or the computer program is run on a computer, the methods in the foregoing embodiments are performed.

This application further provides a communication system, including the transmitter and the receiver.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A modulation and coding scheme indication method, comprising:
generating a physical layer protocol data unit PPDU, wherein the PPDU comprises a first field and a second field, the first field indicates a first modulation and coding scheme MCS group, and the second field indicates a number of spatial streams corresponding to one or more MCSs in the first MCS group; and
sending the PPDU.

2. A modulation and coding scheme indication method, comprising:
receiving a physical layer protocol data unit PPDU, wherein the PPDU comprises a first field and a second field, the first field indicates a first modulation and coding scheme MCS group, and the second field indicates a number of spatial streams corresponding to one or more MCSs in the first MCS group; and
obtaining, based on the PPDU, an MCS corresponding to each spatial stream.

3. The method according to claim 1 or 2, wherein the second field indicates a spatial stream boundary corresponding to any MCS in the first MCS group.

4. The method according to claim 3, wherein the second field further indicates a total number of spatial streams corresponding to the first MCS group.

5. The method according to any one of claims 1 to 4, wherein a number of spatial streams that correspond to a same MCS and that are indicated by the second field is less than or equal to a first threshold, and the first threshold is a positive integer less than 8.

6. The method according to any one of claims 1 to 5, wherein when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

7. The method according to any one of claims 1 to 6, wherein the PPDU further comprises a third field, and the third field indicates that a modulation pattern of the PPDU is unequal modulation or equal modulation.

8. The method according to any one of claims 1 to 7, wherein the PPDU comprises a first user field and a second user field, the first user field is associated with a first user, the second user field is associated with a second user, the first user field comprises the first field and the second field, the second user field comprises a fourth field and a fifth field, the fourth field indicates a number of spatial streams of the second user, the fifth field indicates a same MCS used by all spatial streams of the second user, and a length of the first user field is equal to a length of the second user field.

9. A communication apparatus, comprising:
a processing module, configured to generate a physical layer protocol data unit PPDU, wherein the PPDU comprises a first field and a second field, the first field indicates a first modulation and coding scheme MCS group, and the second field indicates a number of spatial streams corresponding to one or more MCSs in the first MCS group; and
a transceiver module, configured to send the PPDU.

10. A communication apparatus, comprising:
a transceiver module, configured to receive a physical layer protocol data unit PPDU, wherein the PPDU comprises a first field and a second field, the first field indicates a first modulation and coding scheme MCS group, and the second field indicates a number of spatial streams corresponding to one or more MCSs in the first MCS group; and
a processing module, configured to obtain, based on the PPDU, an MCS corresponding to each spatial stream.

11. The apparatus according to claim 9 or 10, wherein the second field indicates a spatial stream boundary corresponding to any MCS in the first MCS group.

12. The apparatus according to claim 11, wherein the second field further indicates a total number of spatial streams corresponding to the first MCS group.

13. The apparatus according to any one of claims 9 to 12, wherein a number of spatial streams that correspond to a same MCS and that are indicated by the second field is less than or equal to a first threshold, and the first threshold is a positive integer less than 8.

14. The apparatus according to any one of claims 9 to 13, wherein when a value indicated by the second field is a first index, the second field indicates a number of spatial streams corresponding to one MCS in the first MCS group; or when a value indicated by the second field is a second index, the second field indicates a number of spatial streams corresponding to a plurality of MCSs in the first MCS group.

15. The apparatus according to any one of claims 9 to 14, wherein the PPDU further comprises a third field, and the third field indicates that a modulation pattern of the PPDU is unequal modulation or equal modulation.

16. The apparatus according to any one of claims 9 to 15, wherein the PPDU comprises a first user field and a second user field, the first user field is associated with a first user, the second user field is associated with a second user, the first user field comprises the first field and the second field, the second user field comprises a fourth field and a fifth field, the fourth field indicates a number of spatial streams of the second user, the fifth field indicates a same MCS used by all spatial streams of the second user, and a length of the first user field is equal to a length of the second user field.

17. A communication apparatus, comprising a module configured to implement the method according to any one of claims 1 to 8.

18. A communication apparatus, comprising a processor, wherein the processor is coupled to a memory, the memory stores computer program instructions, and the processor is configured to execute the computer program instructions, so that the communication apparatus performs the method according to any one of claims 1 to 8.

19. A chip, comprising a processor and a communication interface, wherein the processor reads, through the communication interface, instructions stored in a memory, so that a communication apparatus comprising the chip performs the method according to any one of claims 1 to 8.

20. A computer-readable storage medium, wherein the computer-readable storage medium stores a computer program, the computer program comprises program instructions, and when the program instructions are executed, a computer is enabled to perform the method according to any one of claims 1 to 8.

21. A computer program product, wherein when the computer program product runs on a computer, the computer is enabled to perform the method according to any one of claims 1 to 8.
